(19) Europäisches Patentamt
European Patent Office
Office européen des brevets

(11) EP 4 393 966 A1

# (12) EUROPEAN PATENT APPLICATION

published in accordance with Art. 153(4) EPC

(43) Date of publication:
**03.07.2024 Bulletin 2024/27**

(21) Application number: **22876585.5**

(22) Date of filing: **30.09.2022**

(51) International Patent Classification (IPC):
***C08F 14/26*** *(2006.01)* ***C08F 2/26*** *(2006.01)*
***C08F 6/00*** *(2006.01)*

(52) Cooperative Patent Classification (CPC):
**C08F 2/26; C08F 6/00; C08F 14/26**

(86) International application number:
**PCT/JP2022/036870**

(87) International publication number:
**WO 2023/054723 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2021 JP 2021161571**
**10.08.2022 JP 2022128027**

(71) Applicant: **DAIKIN INDUSTRIES, LTD.**
**Osaka-shi, Osaka 530-0001 (JP)**

(72) Inventors:
- **KATO, Taketo**
  **Osaka-Shi, Osaka 530-0001 (JP)**
- **YASUDA, Kohei**
  **Osaka-Shi, Osaka 530-0001 (JP)**
- **YAMANAKA, Taku**
  **Osaka-Shi, Osaka 530-0001 (JP)**
- **MIYAMOTO, Masayoshi**
  **Osaka-Shi, Osaka 530-0001 (JP)**
- **MURAYAMA, Kenta**
  **Osaka-Shi, Osaka 530-0001 (JP)**
- **USAMI, Ryota**
  **Osaka-Shi, Osaka 530-0001 (JP)**
- **YOSHIDA, Hirotoshi**
  **Osaka-Shi, Osaka 530-0001 (JP)**
- **SATO, Hiroyuki**
  **Osaka-Shi, Osaka 530-0001 (JP)**
- **YAMAMOTO, Emi**
  **Osaka-Shi, Osaka 530-0001 (JP)**
- **NISHIMURA, Kenta**
  **Osaka-Shi, Osaka 530-0001 (JP)**
- **URAOKA, Nobuki**
  **Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

## (54) POLYTETRAFLUOROETHYLENE FINE POWDER

(57) The disclosure aims to provide a polytetrafluoroethylene fine powder containing less water and less impurities. Provided is a polytetrafluoroethylene fine powder substantially free from water and a fluorine-containing compound having a molecular weight of 1000 or less.

EP 4 393 966 A1

**Description**

TECHNICAL FIELD

The disclosure relates to polytetrafluoroethylene fine powders.

BACKGROUND ART

Polytetrafluoroethylene (PTFE) fine powder is used for insulating tapes, coating materials for coaxial cables and oxygen sensors, or tubing for fuel and drinking water because of its excellent properties including electrical insulation, water resistance, chemical resistance, heat resistance, and cleanliness. These are produced by paste extrusion molding of PTFE fine powder. In recent years, the weight of components in various applications has been reduced, and coating materials, for example, are desired to be thinner.

Tapes produced by paste extrusion of PTFE fine powder can be processed into porous materials by high expansion, which enables production of water-resistant moisture permeable films and filter materials. Such materials have a wide range of applications including clothing, separation membranes, and air filters.

PTFE fine powder is produced by emulsion polymerization of tetrafluoroethylene (TFE).

Patent Literature 1 discloses a method for reducing thermally induced discoloration of a fluoropolymer resin by exposing the fluoropolymer resin to an oxidizing agent, the fluoropolymer resin being obtained by emulsion polymerization in which a hydrocarbon surfactant is used.

CITATION LIST

- Patent Literature

Patent Literature 1: JP 2015-516029 T

SUMMARY OF INVENTION

- Technical Problem

The disclosure aims to provide a PTFE fine powder containing less water and less impurities.

- Solution to Problem

The disclosure relates to a polytetrafluoroethylene fine powder substantially free from water and a fluorine-containing compound having a molecular weight of 1000 or less.

The polytetrafluoroethylene fine powder is preferably substantially free from any of fluorine-containing compounds represented by the following formulas:

$F(CF_2)_7COOM$,
$F(CF_2)_5COOM$,
$H(CF_2)_6COOM$,
$H(CF_2)_7COOM$,
$CF_3O(CF_2)_3OCHFCF_2COOM$,
$C_3F_7OCF(CF_3)CF_2OCF(CF_3)COOM$,
$CF_3CF_2CF_2OCF(CF_3)COOM$,
$CF_3CF_2OCF_2CF_2OCF_2COOM$,
$C_2F_5OCF(CF_3)CF_2OCF (CF_3)COOM$,
$CF_3OCF(CF_3)CF_2OCF(CF_3)COOM$,
$CF_2ClCF_2CF_2OCF(CF_3)CF_2OCF_2COOM$,
$CF_2ClCF_2CF_2OCF_2CF(CF_3)OCF_2COOM$,
$CF_2ClCF(CF_3)OCF(CF_3)CF_2OCF_2COOM$,
$CF_2ClCF(CF_3)OCF_2CF(CF_3)OCF_2COOM$, and

[Chem. 1]

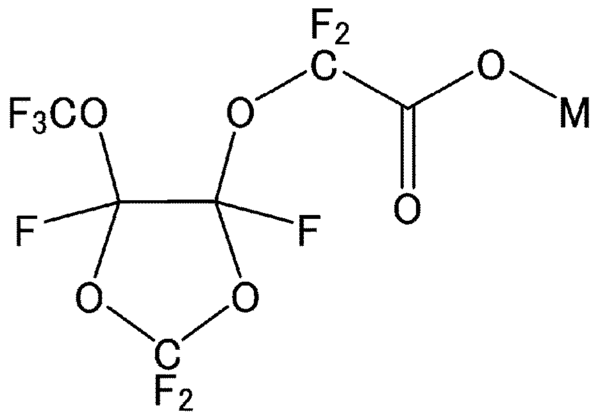

wherein M is H, a metal atom, $NR^1_4$, imidazolium optionally containing a substituent, pyridinium optionally containing a substituent, or phosphonium optionally containing a substituent; and $R^1$ is H or an organic group.

The fluorine-containing compound preferably amounts to less than 25 ppb by mass in the polytetrafluoroethylene fine powder.

The disclosure also relates to a polytetrafluoroethylene fine powder substantially free from water and a fluorine-containing compound having a molecular weight of 1000 or less, the polytetrafluoroethylene fine powder being expandable and having a standard specific gravity of 2.160 or less.

The disclosure also relates to a polytetrafluoroethylene fine powder substantially free from water and any of fluorine-containing compounds represented by the following formulas:

$F(CF_2)_7COOM$,
$F(CF_2)_5COOM$,
$H(CF_2)_6COOM$,
$H(CF_2)_7COOM$,
$CF_3O(CF_2)_3OCHFCF_2COOM$,
$C_3F_7OCF(CF_3)CF_2OCF(CF_3)COOM$,
$CF_3CF_2CF_2OCF(CF_3)COOM$,
$CF_3CF_2OCF_2CF_2OCF_2COOM$,
$C_2F_5OCF(CF_3)CF_2OCF(CF_3)COOM$,
$CF_3OCF(CF_3)CF_2OCF(CF_3)COOM$,
$CF_2ClCF_2CF_2OCF(CF_3)CF_2OCF_2COOM$,
$CF_2ClCF_2CF_2OCF_2CF(CF_3)OCF_2COOM$,
$CF_2ClCF(CF_3)OCF(CF_3)CF_2OCF_2COOM$,
$CF_2ClCF(CF_3)OCF_2CF(CF_3)OCF_2COOM$, and

[Chem. 2]

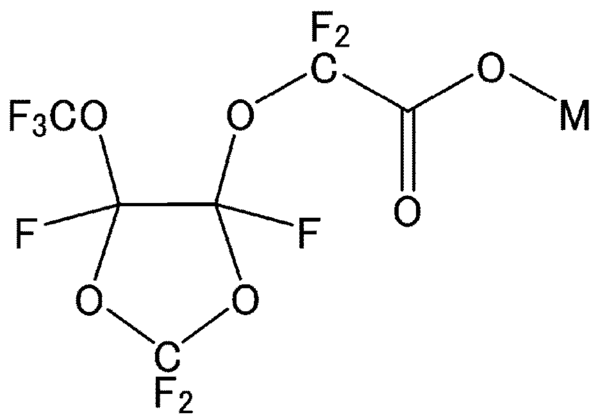

wherein M is H, a metal atom, $NR^1_4$, imidazolium optionally containing a substituent, pyridinium optionally containing

a substituent, or phosphonium optionally containing a substituent; and $R^1$ is H or an organic group,
the polytetrafluoroethylene fine powder being expandable and having a standard specific gravity of 2.160 or less.

The polytetrafluoroethylene fine powder may have a tensile strength at break of 25.0 N or higher and 70.0 N or lower, the tensile strength at break being measured using an expanded beading obtained in an expansion test at a total degree of expansion of 2400%.

The polytetrafluoroethylene fine powder may have a tensile strength at break of 10.0 N or higher and lower than 25.0 N, the tensile strength at break being measured using an expanded beading obtained in an expansion test at a total degree of expansion of 2400%.

The polytetrafluoroethylene fine powder preferably has an extrusion pressure at a reduction ratio of 100 of 18 MPa or lower.

The fluorine-containing compound preferably amounts to less than 25 ppb by mass in the polytetrafluoroethylene fine powder.

The water preferably amounts to 0.010% by mass or less in the polytetrafluoroethylene fine powder.

The polytetrafluoroethylene fine powder is preferably obtainable by polymerization in the presence of a fluorine-containing surfactant.

The polytetrafluoroethylene fine powder is preferably for use as an expansion material.

The disclosure also relates to an expanded article containing the polytetrafluoroethylene fine powder.

The expanded article is preferably a porous film, a biaxially expanded film, or a filter material.

The disclosure also relates to a modified polytetrafluoroethylene fine powder substantially free from water and a fluorine-containing compound having a molecular weight of 1000 or less, the modified polytetrafluoroethylene fine powder being paste extrudable and having a standard specific gravity of 2.135 to 2.200.

The disclosure also relates to a modified polytetrafluoroethylene fine powder substantially free from water and any of fluorine-containing compounds represented by the following formulas:

$F(CF_2)_7COOM$,
$F(CF_2)_5COOM$,
$H(CF_2)_6COOM$,
$H(CF_2)_7COOM$,
$CF_3O(CF_2)_3OCHFCF_2COOM$,
$C_3F_7OCF(CF_3)CF_2OCF(CF_3)COOM$,
$CF_3CF_2CF_2OCF(CF_3)COOM$,
$CF_3CF_2OCF_2CF_2OCF_2COOM$,
$C_2F_5OCF(CF_3)CF_2OCF(CF_3)COOM$,
$CF_3OCF(CF_3)CF_2OCF(CF_3)COOM$,
$CF_2ClCF_2CF_2OCF(CF_3)CF_2OCF_2COOM$,
$CF_2ClCF_2CF_2OCF_2CF(CF_3)OCF_2COOM$,
$CF_2ClCF(CF_3)OCF(CF_3)CF_2OCF_2COOM$,
$CF_2ClCF(CF_3)OCF_2CF(CF_3)OCF_2COOM$, and

[Chem. 3]

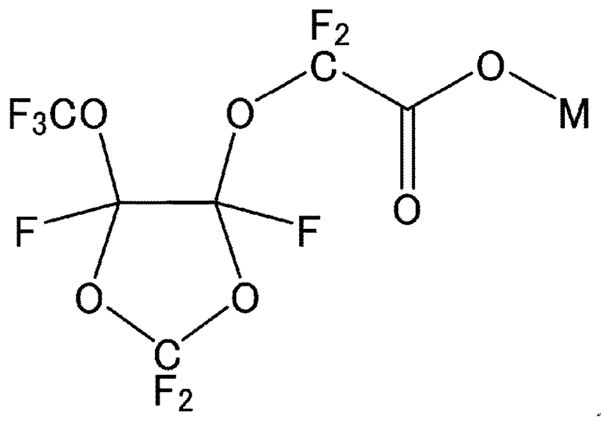

wherein M is H, a metal atom, $NR^1_4$, imidazolium optionally containing a substituent, pyridinium optionally containing a substituent, or phosphonium optionally containing a substituent; and $R^1$ is H or an organic group,

the modified polytetrafluoroethylene fine powder being paste extrudable and having a standard specific gravity of 2.135 to 2.200.

The modified polytetrafluoroethylene fine powder preferably has an extrusion pressure at a reduction ratio of 1500 of 15 to 80 MPa.
The fluorine-containing compound preferably amounts to less than 25 ppb by mass in the modified polytetrafluoroethylene fine powder.
The water preferably amounts to 0.010% by mass or less in the modified polytetrafluoroethylene fine powder.
The modified polytetrafluoroethylene fine powder is preferably obtainable by polymerization in the presence of a fluorine-containing surfactant.
The disclosure also relates to a molded article containing the modified polytetrafluoroethylene fine powder.
The molded article is preferably an electric wire coating material or a tube.
The disclosure also relates to a modified polytetrafluoroethylene fine powder obtainable by modification with a perfluoro vinyl ether, the modified polytetrafluoroethylene fine powder being paste extrudable, having a standard specific gravity of 2.135 to 2.200, and being substantially free from water and any of fluorine-containing compounds represented by the following formula (2) :

Formula (2) : $[C_{n-1}F_{2n-1}COO^{-}]M^{+}$

wherein n is an integer of 9 to 14 and $M^{+}$ is a cation.
In the modified polytetrafluoroethylene fine powder, the modification amount with the perfluoro vinyl ether is preferably 0.02% by mass or more and 0.30% by mass or less.
The modified polytetrafluoroethylene fine powder preferably has an extrusion pressure at a reduction ratio of 1500 of 15 to 80 MPa.
In the modified polytetrafluoroethylene fine powder, the fluorine-containing compounds are preferably contained in a total amount of less than 25 ppb by mass in the modified polytetrafluoroethylene fine powder.

- Advantageous Effects of Invention

The disclosure can provide a PTFE fine powder containing less water and less impurities.

DESCRIPTION OF EMBODIMENTS

Water and impurities in PTFE fine powder causes, for example, cracks and defects, which are disadvantageous in obtaining uniform molded articles. In addition, emission control of PFOA and other low molecular weight fluorine-containing compounds has been demanded in recent years, as part of sustainable chemical management.
Intensive studies resulted in a finding that a PTFE powder with less water or less certain impurities can be obtained by processing under very limited conditions.
The disclosure will be specifically described below.
The disclosure provides a PTFE fine powder substantially free from water and a fluorine-containing compound having a molecular weight of 1000 or less.
The PTFE fine powder of the disclosure is substantially free from water and a fluorine-containing compound having a molecular weight of 1000 or less. The PTFE fine powder is therefore not likely to suffer troubles caused by residual water and fluorine-containing compound.
The PTFE fine powder of the disclosure is substantially free from water. The phrase "substantially free from water" means that the water content of the PTFE fine powder is 0.010% by mass or less.
The water content is preferably 0.005% by mass or less, more preferably 0.002% by mass or less.
The water content is determined by the following method.
The mass of the PTFE fine powder is weighed before and after heating at 150°C for two hours, and the water content is calculated by the following formula. The sample is taken three times, and this calculation is performed for each sample and the values are averaged.

Water content (% by mass) = [ (mass (g) of PTFE fine powder before heating) - (mass (g) of PFTE fine powder after heating) ] / (mass (g) of PFTE fine powder before heating) × 100

The PTFE fine powder of the disclosure is substantially free from a fluorine-containing compound having a molecular weight of 1000 or less. The phrase "substantially free from a fluorine-containing compound having a molecular

weight of 1000 or less" means that the amount of the fluorine-containing compound is 25 ppb by mass or less in the PTFE fine powder.

The amount of the fluorine-containing compound is preferably less than 25 ppb by mass, more preferably 10 ppb by mass or less, still more preferably 5 ppb by mass or less, particularly preferably 3 ppb by mass or less, even more preferably 1 ppb by mass or less. The lower limit is not limited, and may be an amount below the detection limit.

The amount of the fluorine-containing compound having a molecular weight of 1000 or less is measured by the following method.

To a 1-g portion of a sample weighed is added 10 g (12.6 mL) of methanol, followed by ultrasonication for 60 minutes, whereby an extract is obtained. The resulting extract is appropriately concentrated by nitrogen purge, and the fluorine-containing compound in the concentrated extract is subjected to a LC/MS/MS assay. Based on the molecular weight information extracted from the LC/MS spectrum obtained, consistency with the structural formulas of the candidate fluorine-containing compounds is examined. Aqueous solutions having five or more different levels of standard substance concentrations are prepared, and LC/MS analysis is performed on the aqueous solutions containing varied amounts of the standard substance. The relation between the amount and the area relative to the amount is plotted, and a calibration curve is drawn. Based on the resulting calibration curve, the area of the fluorine-containing compound in the extract in the LC/MS chromatogram is converted to the amount of the fluorine-containing compound.

The lower detection limit in this measurement method is 10 ppb by mass.

The amount of the fluorine-containing compound having a molecular weight of 1000 or less can also be measured by the following method.

To a 1-g portion of a sample weighed is added 10 g (12.6 mL) of methanol, followed by ultrasonication at 60°C for two hours, standing at room temperature, and subsequent removal of solids, whereby an extract is obtained. The resulting extract is appropriately concentrated by nitrogen purge, and the fluorine-containing compound in the concentrated extract is subjected to a LC/MS/MS assay. Based on the molecular weight information extracted from the LC/MS spectrum obtained, consistency with the structural formulas of the candidate fluorine-containing compounds is examined. Methanol standard solutions having five different known levels of fluorine-containing compound concentrations were prepared, and analyzed using a liquid chromatograph mass spectrometer. By first order approximation based on the methanol standard solution concentrations and the peak integral values in each concentration range, a calibration curve was created. The amount of the fluorine-containing compound contained in the extract is determined from the calibration curve, and converted to the amount of the fluorine-containing compound contained in the sample.

The lower detection limit in this measurement method is 1 ppb by mass.

Examples of the fluorine-containing compound having a molecular weight of 1000 or less include a fluorine-containing compound containing a hydrophilic group having a molecular weight of 1000 g/mol or less. The molecular weight of the fluorine-containing compound is preferably 800 or less, more preferably 500 or less.

Polymerized particles obtained by polymerization performed in the presence of a fluorine-containing surfactant usually contain the fluorine-containing surfactant in addition to PTFE. The fluorine-containing surfactant herein is used in polymerization.

The fluorine-containing compound having a molecular weight of 1000 or less may be a compound that is not added in polymerization, for example, a compound that is produced as a by-product in polymerization.

When containing an anionic portion and a cationic portion, the fluorine-containing compound having a molecular weight of 1000 or less refers to a fluorine-containing compound in which the anionic portion has a molecular weight of 1000 or less. The fluorine-containing compound having a molecular weight of 1000 or less does not include PTFE.

The hydrophilic group may be, for example, -COOM, - $SO_2M$, or -$SO_3M$, and examples include anionic groups such as -COOM and -$SO_3M$ wherein M is H, a metal atom, $NR^1_4$, imidazolium optionally containing a substituent, pyridinium optionally containing a substituent, or phosphonium optionally containing a substituent; and $R^1$ is H or an organic group.

The fluorine-containing surfactant may also be a fluorine-containing surfactant in which the anionic portion has a molecular weight of 1000 or less (fluorine-containing anionic surfactant). The "anionic portion" means a portion excluding the cation in the fluorine-containing surfactant. For example, in the case of $F(CF_2)_{n1}COOM$, the anionic portion refers to the portion "$F(CF_2)_{n1}COO$".

An example of the fluorine-containing anionic surfactant is a compound represented by the following formula ($N^0$):

$$X^{n0}\text{-}Rf^{n0}\text{-}Y^0 \quad (N^0)$$

wherein $X^{n0}$ is H, Cl, or/and F; $Rf^{n0}$ is a C3-C20 linear, branched, or cyclic alkylene group in which part or all of H atoms are replaced by F atoms, the alkylene group optionally containing one or more ether bonds with one or more H atoms being optionally replaced by Cl; and Y° is an anionic group.

The anionic group for Y° may be -COOM, -$SO_2M$, or - $SO_3M$, and may be -COOM or -$SO_3M$.

M is H, a metal atom, $NR^1_4$, imidazolium optionally containing a substituent, pyridinium optionally containing a substituent, or phosphonium optionally containing a substituent, wherein $R^1$ is H or an organic group.

Examples of the metal atom include an alkali metal (Group 1) and an alkaline earth metal (Group 2), such as Na, K, and Li.

$R^1$ may be H or a $C_{1-10}$ organic group, may be H or a $C_{1-4}$ organic group, and may be H or a $C_{1-4}$ alkyl group.

M may be H, a metal atom, or $NR^1_4$, may be H, an alkali metal (Group 1), an alkaline earth metal (Group 2), or $NR^1_4$, and may be H, Na, K, Li, or $NH_4$.

In $Rf^{n0}$, 50% or more of H atoms may be replaced by fluorine.

The fluorine-containing surfactant may be a single fluorine-containing surfactant or a mixture containing two or more fluorine-containing surfactants.

Examples of the fluorine-containing surfactant include compounds represented by the following formulas. The fluorine-containing surfactant may be a mixture of these compounds:

$F(CF_2)_7COOM$,
$F(CF_2)_5COOM$,
$H(CF_2)_6COOM$,
$H(CF_2)_7COOM$,
$CF_3O(CF_2)_3OCHFCF_2COOM$,
$C_3F_7OCF(CF_3)CF_2OCF(CF_3)COOM$,
$CF_3CF_2CF_2OCF(CF_3)COOM$,
$CF_3CF_2OCF_2CF_2OCF_2COOM$,
$C_2F_5OCF(CF_3)CF_2OCF(CF_3)COOM$,
$CF_3OCF(CF_3)CF_2OCF(CF_3)COOM$,
$CF_2ClCF_2CF_2OCF(CF_3)CF_2OCF_2COOM$,
$CF_2ClCF_2CF_2OCF_2CF(CF_3)OCF_2COOM$,
$CF_2ClCF(CF_3)OCF(CF_3)CF_2OCF_2COOM$,
$CF_2ClCF(CF_3)OCF_2CF(CF_3)OCF_2COOM$, and

[Chem. 4]

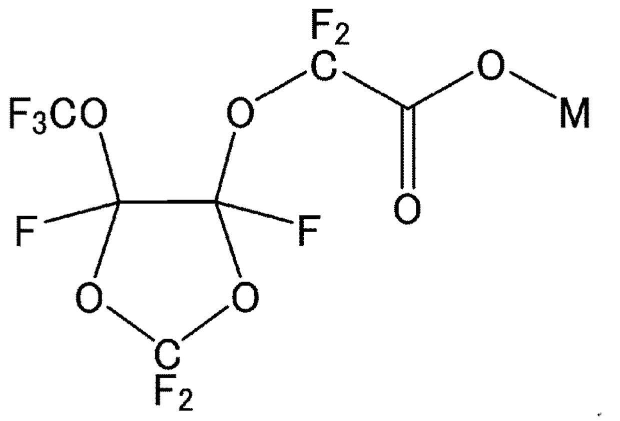

wherein M is H, a metal atom, $NR^1_4$, imidazolium optionally containing a substituent, pyridinium optionally containing a substituent, or phosphonium optionally containing a substituent; and $R^1$ is H or an organic group.

The PTFE fine powder of the disclosure is preferably substantially free from any of the fluorine-containing compounds represented by the above formulas.

In each of the above formulas, M may be H, a metal atom, or $NR^1_4$, may be H, an alkali metal (Group 1), an alkaline earth metal (Group 2), or $NR^1_4$, or may be H, Na, K, Li, or $NH_4$.

$R^1$ may be H or a $C_{1-10}$ organic group, may be H or a $C_{1-4}$ organic group, or may be H or a $C_{1-4}$ alkyl group.

The PTFE fine powder of the disclosure substantially free from any of the fluorine-containing compounds represented by the above formulas can reduce or prevent occurrence of defects caused by residual fluorine-containing compounds.

The phrase "substantially free from any of the fluorine-containing compounds represented by the above formulas" means that the amount of any of the fluorine-containing compounds is 25 ppb by mass or less in the PTFE fine powder.

The amount of any of the fluorine-containing compounds is preferably less than 25 ppb by mass, more preferably 10 ppb by mass or less. The lower limit is not limited, and may be an amount below the detection limit.

Emulsion polymerized particles obtained by polymerization of monomers such as TFE and a modifying monomer possibly contain a fluorine-containing compound produced by the polymerization of monomers in addition to PTFE. The fluorine-containing compound having a molecular weight of 1000 or less (or a fluorine-containing compound containing a hydrophilic group having a molecular weight of 1000 g/mol or less) include such a fluorine-containing compound produced in polymerization of monomers.

In one embodiment, the emulsion polymerized particles contain, as a fluorine-containing compound containing a hydrophilic group, a compound represented by the following formula (1):

Formula (1) : $[X\text{-}Rf^{11}\text{-}A^{-}]_{i}Y^{i+}$

wherein X is H, Cl, Br, F or I; $Rf^{11}$ is a linear or branched partially fluorinated or perfluorinated aliphatic group or a linear or branched partially fluorinated or perfluorinated aliphatic group interrupted by at least one oxygen atom; $A^{-}$ is an acid group; $Y^{i+}$ is a cation with a valence of i; and i is an integer of 1 to 3.

In one embodiment, the emulsion polymerized particles contain, as a fluorine-containing compound containing a hydrophilic group, a compound represented by the following formula (2):

Formula (2): $[C_{n-1}F_{2n-1}COO^{-}]M^{+}$

wherein n is an integer of 9 to 14, preferably an integer of 9 to 12, and $M^{+}$ is a cation.

The compound represented by the formula (2) (perfluoroalkanoic acid) is known to be formed in the polymerization in which the modifying monomer used is, for example, perfluoroalkyl vinyl ether (see WO 2019/161153 A).

In one embodiment, the emulsion polymerized particles contain, as a fluorine-containing compound containing a hydrophilic group, a compound represented by the following formula (3):

Formula (3) : $[R^{31}\text{-O-L-}CO_{2}^{-}]M^{+}$

wherein $Rf^{31}$ is a linear or branched partially fluorinated or perfluorinated aliphatic group or a linear or branched partially fluorinated or perfluorinated aliphatic group interrupted by at least one oxygen atom; L is a linear or branched non-fluorinated, partially fluorinated, or perfluorinated alkylene group; and $M^{+}$ is a cation.

In one embodiment, the emulsion polymerized particles contain, as a fluorine-containing compound containing a hydrophilic group, a compound represented by the formula (4) :

Formula (4) : $[H\text{-}(CF_{2})_{m}CO_{2}^{-}]M^{+}$

wherein m is an integer of 3 to 19 and $M^{+}$ is a cation.

M constituting the cation in the formula may be the same as M mentioned above.

The PTFE fine powder of the disclosure is preferably substantially free from the fluorine-containing compound represented by the above formula (2), more preferably substantially free from any of the fluorine-containing compounds represented by the above formulas (1) to (4). The PTFE fine powder of the disclosure thus can reduce or prevent occurrence of defects caused by residual fluorine-containing compounds.

The phrase "substantially free from the fluorine-containing compound represented by the above formula" means that the amount of the fluorine-containing compound is 25 ppb by mass or less in the PTFE fine powder.

The amount of the fluorine-containing compound is preferably less than 25 ppb by mass, more preferably 10 ppb by mass or less, still more preferably 5 ppb by mass or less, particularly preferably 3 ppb by mass or less, even more preferably 1 ppb by mass or less. The lower limit is not limited, and may be an amount below the detection limit.

The PTFE fine powder of the disclosure is also preferably substantially free from a hydrocarbon surfactant. The PTFE fine powder of the disclosure thus can reduce or prevent occurrence of defects caused by residual hydrocarbon surfactant. The hydrocarbon surfactant is preferably free from a fluorine atom.

The phrase "substantially free from a hydrocarbon surfactant" means that the amount of the hydrocarbon surfactant is 25 ppb by mass or less in the PTFE fine powder.

The amount of the hydrocarbon surfactant is preferably less than 25 ppb by mass, more preferably 10 ppb by mass or less, still more preferably 5 ppb by mass or less, particularly preferably 3 ppb by mass or less, even more preferably 1 ppb by mass or less. The lower limit is not limited, and may be an amount below the detection limit.

The amount of the hydrocarbon surfactant is determined by the following method.

To a 1-g portion of a sample weighed is added 10 g (12.6 mL) of methanol, followed by ultrasonication for 60 minutes, whereby an extract is obtained. The resulting extract is appropriately concentrated by nitrogen purge, and the hydrocarbon surfactant in the concentrated extract is subjected to a LC/MS/MS assay. Based on the molecular weight information extracted from the LC/MS spectrum obtained, consistency with the structural formulas of the candidate hydrocarbon surfactants is examined. Aqueous solutions having five or more different levels of standard substance concentrations are prepared, and LC/MS analysis is performed on the aqueous solutions containing varied amounts of the standard substance. The relation between the amount and the area relative to the amount is plotted, and a calibration curve is drawn. Based on the resulting calibration curve, the area of the hydrocarbon surfactant in the extract in the LC/MS chromatogram is converted to the amount of the hydrocarbon surfactant.

The lower detection limit in this measurement method is 10 ppb by mass.

The amount of the hydrocarbon surfactant can be also determined by the following method.

To a 1-g portion of a sample weighed is added 10 g (12.6 mL) of methanol, followed by ultrasonication at 60°C for two hours, standing at room temperature, and subsequent removal of solids, whereby an extract is obtained. The resulting extract is appropriately concentrated by nitrogen purge, and the hydrocarbon surfactant in the concentrated extract is subjected to a LC/MS/MS assay. Based on the molecular weight information extracted from the LC/MS spectrum obtained, consistency with the structural formulas of the candidate hydrocarbon surfactants is examined. Methanol standard solutions having five different known levels of hydrocarbon surfactant concentrations were prepared, and analyzed using a liquid chromatograph mass spectrometer. By first order approximation based on the methanol standard solution concentrations and the peak integral values in each concentration range, a calibration curve was created. The amount of the hydrocarbon surfactant contained in the extract is determined from the calibration curve, and converted to the amount of the hydrocarbon surfactant contained in the sample.

The lower detection limit in this measurement method is 1 ppb by mass.

The PTFE fine powder of the disclosure is preferably substantially free from a polymer (I) (other than PTFE) containing a polymerized unit (I) based on a monomer (I) represented by the formula (I):

$$CX^1X^3=CX^2R^{11}(-CZ^1Z^2-A^0)_m \qquad (I)$$

wherein $X^1$ and $X^3$ are each independently F, Cl, H, or $CF_3$; $X^2$ is H, F, an alkyl group, or a fluorine-containing alkyl group; A° is an anionic group; $R^{11}$ is a linking group; $Z^1$ and $Z^2$ are each independently H, F, an alkyl group, or a fluorine-containing alkyl group; and m is an integer of 1 or greater.

The polymer (I) contains two or more polymerized units (I).

Examples of the anionic group for A° include anionic groups such as a sulfate group and a carboxylate group as well as functional groups that give anionic groups including an acid group such as -COOH and an acid base such as $-COONH_4$. The anionic group is preferably a sulfate group, a carboxylate group, a phosphate group, a phosphonate group, a sulfonate group, or $-C(CF_3)_2OM$ (wherein M is -H, a metal atom, $-NR^2_4$, imidazolium optionally containing a substituent, pyridinium optionally containing a substituent, or phosphonium optionally containing a substituent; and $R^1$ is H or an organic group), more preferably a sulfate group, a carboxylate group, a phosphate group, a phosphonate group, or a sulfonate group.

The polymer (I) may contain polymerized units (I) based on one monomer represented by the formula (I) or polymerized units (I) based on two or more monomers represented by the formula (I).

$R^{11}$ is a linking group. The linking group is a (m + 1)-valent linking group. When m is 1, the liking group is a divalent linking group. The linking group may be a single bond and preferably contains at least one carbon atom. The number of carbon atoms may be 2 or more, 4 or more, 8 or more, 10 or more, or 20 or more. The upper limit is not limited, and may be, for example, 100 or less, or 50 or less.

The linking group may be linear or branched, cyclic or acyclic, saturated or unsaturated, or substituted or non-substituted. The linking group may contain, if desired, one or more hetero atoms selected from the group consisting of sulfur, oxygen, and nitrogen and may contain, if desired, one or more functional groups selected from the group consisting of ester, amide, sulfonamide, carbonyl, carbonate, urethane, urea, and carbamate groups. The linking group may also be free from carbon atoms and be a catenary heteroatom such as oxygen, sulfur, or nitrogen.

The polymer (I) may have a number average molecular weight of $0.1 \times 10^4$ or more and $75.0 \times 10^4$ or less.

The polymer (I) may have a weight average molecular weight of $0.2 \times 10^4$ or more and $150.0 \times 10^4$ or less.

The phrase "substantially free from a polymer (I)" means that the amount of the polymer (I) is 25 ppb by mass or less in the PTFE fine powder.

The amount of the polymer (I) is preferably less than 25 ppb by mass, more preferably 10 ppb by mass or less, still more preferably 5 ppb by mass or less, particularly preferably 3 ppb by mass or less, even more preferably 1 ppb by mass or less. The lower limit is not limited, and may be an amount below the detection limit.

The amount of the polymer (I) is determined by the following method.

To a 1-g portion of a sample weighed is added 10 g (12.6 mL) of methanol, followed by ultrasonication for 60 minutes, whereby an extract is obtained. The resulting extract is appropriately concentrated by nitrogen purge, and the polymer (I) in the concentrated extract is subjected to a LC/MS/MS assay.

The lower detection limit in this measurement method is 10 ppb by mass.

The amount of the polymer (I) can also be determined by the following method.

To a 1-g portion of a sample weighed is added 10 g (12.6 mL) of methanol, followed by ultrasonication at 60°C for two hours, standing at room temperature, and subsequent removal of solids, whereby an extract is obtained. The resulting extract is appropriately concentrated by nitrogen purge, and the polymer (I) in the concentrated extract is subjected to a LC/MS/MS assay. Based on the molecular weight information extracted from the LC/MS spectrum obtained, consistency with the structural formulas of the candidate polymers (I) is examined. Methanol standard solutions having five different known levels of polymer (I) concentrations were prepared, and analyzed using a liquid chromatograph mass spectrometer. By first order approximation based on the methanol standard solution concentrations and the peak integral values in each concentration range, a calibration curve was created. The amount of the polymer (I) contained in the extract is determined from the calibration curve, and converted to the amount of the polymer (I) contained in the sample.

The lower detection limit in this measurement method is 1 ppb by mass.

In order to achieve improved expandability, the standard specific gravity (SSG) of the PTFE fine powder of the disclosure is preferably 2.200 or less, more preferably 2.180 or less, still more preferably 2.170 or less, further more preferably 2.160 or less, further more preferably 2.150 or less, even more preferably 2.145 or less, particularly preferably 2.140 or less.

The SSG is also preferably 2.130 or more.

The SSG is determined by the water displacement method in conformity with ASTM D792 using a sample molded in conformity with ASTM D4895.

The PTFE fine powder of the disclosure preferably has an average primary particle size of 350 nm or smaller, more preferably 330 nm or smaller, still more preferably 320 nm or smaller, further more preferably 300 nm or smaller, even more preferably 280 nm or smaller, particularly preferably 250 nm or smaller, while preferably 100 nm or greater, more preferably 150 nm or greater, still more preferably 170 nm or greater, particularly preferably 200 nm or greater.

The average primary particle size is measured by the following method.

A PTFE aqueous dispersion is diluted with water to a solid content concentration of 0.15% by mass. The transmittance of 550-nm light relative to the unit length of the resulting diluted latex is measured. The Feret diameters in a transmission electron microscopic image are measured and the number-based length average particle size is determined therefrom. A calibration curve is obtained from these values. Using this calibration curve, the number average particle size is determined from the measured transmittance of 550-nm light incident on each sample, and defined as the average primary particle size.

The PTFE fine powder of the disclosure may have an average secondary particle size of 350 um or greater, preferably 400 um or greater, more preferably 450 um or greater, still more preferably 500 um or greater, further more preferably 550 um or greater, even more preferably 600 um or greater, while preferably 1000 um or smaller, more preferably 900 um or smaller, still more preferably 800 um or smaller, further more preferably 700 um or smaller.

The average secondary particle size is measured in conformity with JIS K 6891.

The PTFE fine powder of the disclosure may have an extrusion pressure at a reduction ratio (RR) of 100 of 5 MPa or higher, preferably 10 MPa or higher, more preferably 12 MPa or higher, still more preferably 15 MPa or higher, further more preferably 17 MPa or higher.

In order to achieve improved processability, the extrusion pressure at a RR of 100 is preferably 50 MPa or lower, more preferably 40 MPa or lower, still more preferably 30 MPa or lower, further more preferably 25 MPa or lower, further more preferably 23 MPa or lower, further more preferably 21 MPa or lower, particularly preferably 20 MPa or lower.

The PTFE fine powder of the disclosure preferably has an extrusion pressure at a RR of 1600 of 20 MPa or higher, more preferably 25 MPa or higher, still more preferably 30 MPa or higher.

In order to improve the processability, the extrusion pressure at a RR of 1600 is preferably 60 MPa or lower, more preferably 50 MPa or lower.

The extrusion pressure at a RR of 100 is measured by the following method.

Fifty grams of PTFE powder and 10.25 g of hydrocarbon oil (trade name: Isopar-E, available from ExxonMobil Chemical) as an extrusion aid are mixed for three minutes in a polyethylene container. A cylinder of an extruder is filled with the resulting mixture at room temperature (25 ± 2°C). A load of 0.47 MPa is applied to a piston inserted into the cylinder and maintained for one minute. Then, the mixture is extruded through an orifice at a ram speed of 18 mm/min. The ratio of the cross-sectional area of the cylinder to the cross-sectional area of the orifice is 100. The value obtained by dividing the load (N) at which the pressure is in equilibrium in the latter half of the extrusion operation by the cylinder cross-sectional area is defined as the extrusion pressure (MPa).

The extrusion pressure at a RR of 1600 is measured by the following method.

Fifty grams of PTFE powder and 10.25 g of hydrocarbon oil (trade name: Isopar-G, available from ExxonMobil Chemical) as an extrusion aid are mixed for three minutes in a polyethylene container. A cylinder of an extruder is filled with the resulting mixture at room temperature (25 ± 2°C). A load of 1.2 MPa is applied to a piston inserted into the cylinder and maintained for one minute. Then, the mixture is extruded through an orifice at a ram speed of 18 mm/min. The ratio of the cross-sectional area of the cylinder to the cross-sectional area of the orifice is 1600. The value obtained by dividing the load (N) at which the pressure is in equilibrium in the latter half of the extrusion operation by the cylinder cross-sectional area is defined as the extrusion pressure (MPa).

The PTFE fine powder of the disclosure is preferably stretchable.

The term "stretchable" means that an stretched article is obtainable in the following stretching test.

The beading obtained by the paste extrusion at a RR of 100 described above is dried at 230°C for 30 minutes to remove the lubricant. The dried beading is cut into appropriate lengths and placed in a furnace heated to 300°C. The cut beadings are expanded in the furnace at a stretching speed of 100%/sec.

In order to achieve excellent expandability, the PTFE fine powder of the disclosure is preferably stretchable to 25 times its size.

Whether or not it is stretchable to 25 times its size can be determined by the following stretching test.

The beading obtained by the paste extrusion at a RR of 100 described above is dried at 230°C for 30 minutes to remove the lubricant. The dried beading is cut into appropriate lengths and placed in a furnace heated to 300°C. The cut beadings are stretched in the furnace at a stretching speed of 100%/sec until the beading length reaches 25 times the length before the stretching test. If no breakage occurs during the stretching, the beading is determined to be stretchable to 25 times its size.

The PTFE fine powder of the disclosure preferably has a tensile strength at break of 20.0 N or higher, more preferably 25.0 N or higher, still more preferably 30.0 N or higher, further more preferably 32.0 N or higher, further more preferably 35.0 N or higher. The higher the tensile strength at break, the better. Still, the tensile strength at break may be 100.0 N or lower, 80.0 N or lower, or 50.0 N or lower.

The tensile strength at break is a value obtained by the following method.

A stretched beading (article produced by stretching a beading) obtained in the stretching test to 25 times its size described above is clamped between movable jaws with a gauge length of 5.0 cm to be fixed, and subjected to a tensile test at 25°C at a rate of 300 mm/min. The strength at break is measured as the tensile strength at break.

In order to further lower the extrusion pressure, further increase the tensile strength at break, and further improve the heat resistance, the PTFE fine powder of the disclosure preferably has a thermal instability index (TII) of lower than 40, more preferably 15 or lower, still more preferably 10 or lower, particularly preferably lower than 5.

The thermal instability index is preferably -10 or higher, more preferably 0 or higher.

The thermal instability index is determined in conformity with ASTM D4895.

In order to achieve excellent handleability, the PTFE fine powder of the disclosure may have an average aspect ratio of 2.0 or lower, preferably 1.8 or lower, more preferably 1.7 or lower, still more preferably 1.6 or lower, further more preferably 1.5 or lower, further more preferably 1.4 or lower, even more preferably 1.3 or lower, particularly preferably 1.2 or lower, most preferably 1.1 or lower. The average aspect ratio may also be 1.0 or higher.

The average aspect ratio is determined as follows. A PTFE powder or a PTFE aqueous dispersion diluted to a solid content concentration of about 1% by mass is observed using a scanning electron microscope (SEM) and 200 or more randomly extracted particles are imaged. The average of the ratios of the major axes to the minor axes of the particles is determined as the average aspect ratio.

In order to achieve excellent handleability, the PTFE fine powder of the disclosure preferably has an apparent density of 0.40 g/mL or higher, more preferably 0.43 g/mL or higher, still more preferably 0.45 g/mL or higher, further more preferably 0.48 g/mL or higher, particularly preferably 0.50 g/mL or higher. The upper limit is not limited, and may be 0.70 g/mL.

The apparent density is determined in conformity with JIS K 6892.

The PTFE fine powder of the disclosure preferably has non-melt secondary processibility. The non-melt secondary processibility refers to a property of a polymer with which the melt flow rate is non-measurable at a temperature higher than the melting point in conformity with ASTM D1238 and D2116, in other words, a property with which the polymer does not easily flow even within a melting point range.

The PTFE may be a homopolymer of tetrafluoroethylene (TFE) or may be a modified PTFE containing a polymerized unit based on TFE (TFE unit) and a polymerized unit based on a modifying monomer (hereinafter, also referred to as a "modifying monomer unit"). The modified PTFE may contain 99.0% by mass or more of the TFE unit and 1.0% by mass or less of the modifying monomer unit. The modified PTFE may consist of the TFE unit and the modifying monomer unit.

The PTFE is preferably the modified PTFE.

In order to achieve improved expandability, the modified PTFE preferably contains the modifying monomer unit in an amount falling within a range of 0.00001 to 1.0% by mass in all polymerized units. The lower limit of the amount

of the modifying monomer unit is more preferably 0.0001% by mass, still more preferably 0.001% by mass, further more preferably 0.005% by mass, even more preferably 0.010% by mass. The upper limit of the amount of the modifying monomer unit is preferably 0.90% by mass, more preferably 0.80% by mass, still more preferably 0.50% by mass, further more preferably 0.40% by mass, further more preferably 0.30% by mass, further more preferably 0.20% by mass, further more preferably 0.15% by mass, further more preferably 0.10% by mass, further more preferably 0.08% by mass, particularly preferably 0.05% by mass, most preferably 0.03% by mass.

The modifying monomer unit herein means a portion constituting the molecular structure of PTFE and derived from a modifying monomer.

The amounts of the above polymerized units can be calculated by any appropriate combination of NMR, FT-IR, elemental analysis, and X-ray fluorescence analysis in accordance with the types of the monomers.

The modifying monomer may be any monomer copolymerizable with TFE. Examples thereof include perfluoroolefins such as hexafluoropropylene (HFP); hydrogen-containing fluoroolefins such as trifluoroethylene and vinylidene fluoride (VDF); perhaloolefins such as chlorotrifluoroethylene; perfluorovinyl ether; perfluoroallyl ether; vinyl heterocyclic compounds such as perfluoro-2,2-dimethyl-1,3-dioxole (PDD); a (perfluoroalkyl)ethylene; and ethylene. One modifying monomer may be used alone or two or more modifying monomers may be used in combination.

The perfluorovinyl ether may be, but is not limited to, an unsaturated perfluoro compound represented by the following formula (A):

$CF_2$=CF-ORf (A)

(wherein Rf is a perfluoro organic group). The term "perfluoro organic group" herein means an organic group in which all hydrogen atoms bonded to any carbon atom are replaced by fluorine atoms. The perfluoro organic group may have ether oxygen.

An example of the perfluorovinyl ether is a perfluoro(alkyl vinyl ether) (PAVE) represented by the formula (A) wherein Rf is a C1-C10 perfluoroalkyl group. The perfluoroalkyl group preferably has a carbon number of 1 to 5.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group.

Examples of the perfluorovinyl ether further include:

those represented by the formula (A) wherein Rf is a C4-C9 perfluoro(alkoxyalkyl) group;
those represented by the formula (A) wherein Rf is a group represented by the following formula:

[Chem. 5]

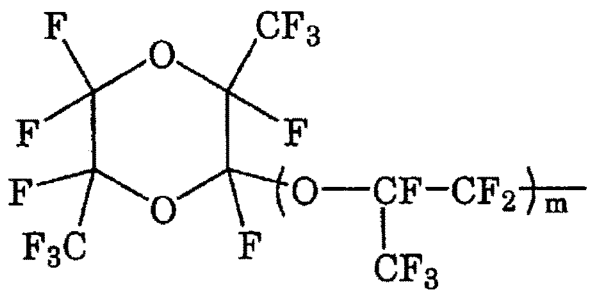

wherein m is 0 or an integer of 1 to 4; and
those represented by the formula (A) wherein Rf is a group represented by the following formula:

[Chem. 6]

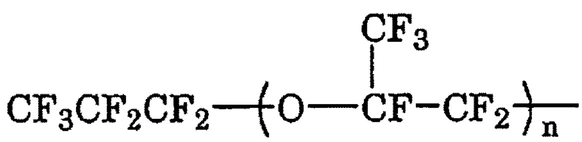

wherein n is an integer of 1 to 4.

Examples of the (perfluoroalkyl)ethylene (PFAE) include, but are not limited to, (perfluorobutyl)ethylene (PFBE)

and (perfluorohexyl)ethylene.

An example of the perfluoroallyl ether is a fluoromonomer represented by the following formula (B):

$$CF_2=CF-CF_2-ORf^1 \qquad (B)$$

wherein $Rf^1$ is a perfluoro organic group.

$Rf^1$ is preferably a C1-C10 perfluoroalkyl group or a C1-C10 perfluoroalkoxyalkyl group. The perfluoroallyl ether preferably includes at least one selected from the group consisting of $CF_2=CF-CF_2-O-CF_3$, $CF_2=CF-CF_2-O-C_2F_5$, $CF_2=CF-CF_2-O-C_3F_7$, and $CF_2=CF-CF_2-O-C_4F_9$, more preferably includes at least one selected from the group consisting of $CF_2=CF-CF_2-O-C_2F_5$, $CF_2=CF-CF_2-O-C_3F_7$, and $CF_2=CF-CF_2-O-C_4F_9$, and is still more preferably $CF_2=CF-CF_2-O-CF_2CF_2CF_3$.

In order to achieve improved expandability, the modifying monomer preferably includes at least one selected from the group consisting of PAVE and HFP, more preferably at least one selected from the group consisting of perfluoro(methyl vinyl ether) (PMVE) and HFP.

In order to further lower the extrusion pressure and further increase the tensile strength at break, the modifying monomer preferably includes at least one selected from the group consisting of VDF, HFP, CTFE, and PAVE, more preferably at least one selected from the group consisting of VDF, HFP, and CTFE.

In order to achieve improved heat resistance, in a preferred embodiment, the PTFE contains a TFE unit, a VDF unit, and a HFP unit, and the total amount of the VDF unit and the HFP unit is 1.0% by mass or less in all the polymerized units.

The PTFE may have a core-shell structure. An example of the PTFE having a core-shell structure is a modified PTFE including a core of high-molecular-weight PTFE and a shell of lower-molecular-weight PTFE or modified PTFE in a particle. An example of such a modified PTFE is a PTFE disclosed in JP 2005-527652 T.

Preferably, the PTFE has at least one endothermic peak in a range of 333°C to 347°C on a heat-of-fusion curve drawn by increasing the temperature at a rate of 10°C/min using a differential scanning calorimeter (DSC), and has an enthalpy of fusion of 62 mJ/mg or higher at 290°C to 350°C calculated from the heat-of-fusion curve.

Preferably, the PTFE fine powder of the disclosure is substantially free from organic solvents. The expression "substantially free from organic solvents" means that the organic solvent content of the PTFE fine powder is 5% by mass or less.

The organic solvent content is preferably 3% by mass or less, more preferably 1% by mass or less, still more preferably 0.1% by mass or less, further more preferably 0.01% by mass or less, particularly preferably 0.001% by mass or less.

The PTFE fine powder of the disclosure can be produced by, for example, a method including: (A) preparing an aqueous dispersion of PTFE; (B) coagulating the aqueous dispersion to obtain a wet powder of PTFE; and (C) placing the wet powder in a container with air permeability on the bottom and/or sides and heating the wet powder at a temperature of 130°C to 300°C for two hours or longer to obtain a PTFE fine powder.

The disclosure also provides the above production method.

The aqueous dispersion in the step (A) can be produced, for example, by emulsion polymerization.

The emulsion polymerization can be performed by a known method. For example, in the presence of a fluorine-containing anionic surfactant and a polymerization initiator, emulsion polymerization of the monomers necessary to constitute the PTFE is performed in an aqueous medium, whereby an aqueous dispersion containing the PTFE particles (primary particles) can be obtained. In the emulsion polymerization, additives such as a chain transfer agent, a buffer, a pH adjuster, a stabilization aid, a dispersion stabilizer, or a radical scavenger may be used as needed.

The aqueous dispersion may contain at least one fluorine-containing compound described above.

The step (A) may be a step of emulsion polymerizing TFE and, if necessary, a modifying monomer.

The emulsion polymerization can be performed, for example, in an aqueous medium in the presence of a fluorine-containing anionic surfactant and a polymerization initiator.

The emulsion polymerization may be performed by, for example, charging a polymerization reactor with an aqueous medium, the fluorine-containing anionic surfactant, a monomer, and optionally other additives, stirring the contents in the reactor, maintaining the reactor at a predetermined polymerization temperature, and then adding a predetermined amount of a polymerization initiator to start the polymerization reaction. After the polymerization reaction starts, the monomer, the polymerization initiator, a chain transfer agent, the surfactant, and the like may be added in accordance with the purposes.

The polymerization initiator may be any initiator capable of generating radicals within the polymerization temperature range, and any known oil-soluble and/or water-soluble polymerization initiator may be used. Further, the initiator may be combined with a reducing agent, for example, into the form of a redox agent to start polymerization. The concentration of the polymerization initiator is appropriately determined in accordance with the type of the monomer, the target molecular weight of the PTFE, and the reaction rate.

The polymerization initiator used may be an oil-soluble radical polymerization initiator or a water-soluble radical polymerization initiator.

The oil-soluble radical polymerization initiator may be a known oil-soluble peroxide. Typical examples thereof include dialkyl peroxycarbonates such as diisopropyl peroxydicarbonate and di-sec-butyl peroxydicarbonate, peroxy esters such as t-butyl peroxyisobutyrate and t-butyl peroxypivalate, dialkyl peroxides such as di-t-butyl peroxide, as well as di(perfluoroacyl) or di(fluorochloroacyl) peroxides such as di(w-hydrododecafluoroheptanoyl)peroxide, di(w-hydrotetradecafluoroheptanoyl)peroxide, di(w-hydrohexadecafluorononanoyl)peroxide, di(perfluorobutyryl)peroxide, di(perfluorovaleryl)peroxide, di(perfluorohexanoyl)peroxide, di (perfluoroheptanoyl)peroxide, di (perfluorooctanoyl)peroxide, di(perfluorononanoyl)peroxide, di(w-chlorohexafluorobutyryl)peroxide, di(w-chlorodecafluorohexanoyl)peroxide, di(w-chlorotetradecafluorooctanoyl)peroxide, ω-hydrododecafluoroheptanoyl-w-hydrohexadecafluorononanoylperoxide, ω-chloro-hexafluorobutyryl-ω-chlorodecafluorohexanoyl-peroxide, ω-hydrododecafluoroheptanoylperfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotriacontafluorodocosanoyl)peroxide.

The water-soluble radical polymerization initiator may be a known water-soluble peroxide. Examples thereof include ammonium salts, potassium salts, and sodium salts of any of persulfuric acid, perboric acid, perchloric acid, perphosphoric acid, and percarbonic acid, t-butyl permaleate, t-butyl hydroperoxide, and disuccinic acid peroxide. Preferred among these are ammonium persulfate and disuccinic acid peroxide. The initiator may also contain a reducing agent such as a sulfite or a sulfurous acid salt. The amount thereof used may be 0.1 to 20 times the peroxide.

The water-soluble radical polymerization initiator may be added in any amount. For example, it may be added in an amount that does not significantly decrease the polymerization rate (e.g., concentration of several parts per million relative to water) or more at one time in an early stage of polymerization or intermittently or continuously. The upper limit thereof falls within a range where the reaction temperature is allowed to increase while the heat is removed owing to the polymerization reaction heat through the device surfaces. The upper limit more preferably falls within a range where the polymerization reaction heat can be removed through the device surfaces.

In order to easily achieve the physical properties described above, the amount of the polymerization initiator added is preferably an amount equivalent to 0.1 ppm or more, more preferably an amount equivalent to 1.0 ppm or more, while it is preferably an amount equivalent to 100 ppm or less, more preferably an amount equivalent to 10 ppm or less in the aqueous medium.

For example, in the case of polymerization at a low temperature of 30°C or lower, a polymerization initiator used is preferably a redox initiator that is a combination of an oxidizing agent and a reducing agent. Examples of the oxidizing agent include a persulfate, an organic peroxide, potassium permanganate, manganese triacetate, ammonium cerium nitrate, and a bromate. Examples of the reducing agent include a sulfite, bisulfite, bromate, diimine, and oxalic acid. Examples of the persulfate include ammonium persulfate and potassium persulfate. Examples of the sulfite include sodium sulfite and ammonium sulfite. In order to increase the decomposition rate of the initiator, the combination of the redox initiator is also preferably combined with a copper salt or an iron salt. An example of copper salts is copper(II) sulfate and an example of iron salts is iron(II) sulfate.

The oxidizing agent of the redox initiator is preferably permanganic acid or its salt, a persulfate, manganese triacetate, a cerium(IV) salt, or bromic acid or its salt. The reducing agent of the redox initiator is preferably a dicarboxylic acid or its salt, or a diimine.

More preferably, the oxidizing agent is permanganic acid or its salt, a persulfate, or bromic acid or its salt, and the reducing agent is a dicarboxylic acid or its salt.

Examples of the redox initiator include combinations of potassium permanganate/oxalic acid, potassium permanganate/ammonium oxalate, manganese triacetate/oxalic acid, manganese triacetate/ammonium oxalate, ammonium cerium nitrate/oxalic acid, and ammonium cerium nitrate/ammonium oxalate.

In the case of using a redox initiator, a polymerization vessel may be charged with an oxidizing agent or a reducing agent in advance, and the other may be continually or intermittently added thereto to start polymerization. For example, in the case of using potassium permanganate/ammonium oxalate, preferably, a polymerization vessel is charged with ammonium oxalate and potassium permanganate is continuously added thereto.

In the redox initiator herein, "potassium permanganate/ammonium oxalate" refers to a combination of potassium permanganate and ammonium oxalate. The same applies to other compounds.

The redox initiator is particularly preferably a combination of an oxidizing agent in the form of a salt and a reducing agent in the form of a salt.

For example, the oxidizing agent in the form of a salt more preferably includes at least one selected from the group consisting of persulfates, permanganates, cerium(IV) salts, and bromates, still more preferably a permanganate, particularly preferably potassium permanganate.

The reducing agent in the form of a salt more preferably includes at least one selected from the group consisting of oxalates, malonates, succinates, glutarates, and bromates, still more preferably an oxalate, particularly preferably

ammonium oxalate.

Specifically, the redox initiator preferably includes at least one selected from the group consisting of potassium permanganate/oxalic acid, potassium permanganate/ammonium oxalate, potassium bromate/ammonium sulfite, manganese triacetate/ammonium oxalate, and ammonium cerium nitrate/ammonium oxalate, more preferably at least one selected from the group consisting of potassium permanganate/oxalic acid, potassium permanganate/ammonium oxalate, potassium bromate/ammonium sulfite, and ammonium cerium nitrate/ammonium oxalate, still more preferably potassium permanganate/oxalic acid.

In use of a redox initiator, the oxidizing agent and the reducing agent may be added at once in an early stage of polymerization, or the reducing agent may be added at once in an early stage of polymerization and the oxidizing agent may be added continuously. Alternatively, the oxidizing agent may be added at once in an early stage of polymerization and the reducing agent may be added continuously, or both the oxidizing agent and the reducing agent may be added continuously.

When one agent of the redox polymerization initiator is added in an early stage of polymerization and the other agent is added continuously, it is preferable to gradually slow down the addition speed in order to obtain PTFE with a low SSG. Moreover, addition is preferably stopped in the middle of polymerization. The addition is preferably stopped before 20% to 40% by mass of the total TFE to be consumed in the polymerization reaction is consumed.

In use of a redox initiator as a polymerization initiator, the amount of the oxidizing agent added is preferably 0.1 ppm or more, more preferably 0.3 ppm or more, still more preferably 0.5 ppm or more, further more preferably 1 ppm or more, particularly preferably 5 ppm or more, even more preferably 10 ppm or more, while preferably 10000 ppm or less, more preferably 1000 ppm or less, still more preferably 100 ppm or less, further more preferably 10 ppm or less in the aqueous medium. The amount of the reducing agent added is preferably 0.1 ppm or more, more preferably 1.0 ppm or more, still more preferably 3 ppm or more, further more preferably 5 ppm or more, particularly preferably 10 ppm or more, while preferably 10000 ppm or less, more preferably 1000 ppm or less, still more preferably 100 ppm or less, further more preferably 10 ppm or less.

In use of a redox initiator in the emulsion polymerization, the polymerization temperature is preferably 100°C or lower, more preferably 95°C or lower, still more preferably 90°C or lower. The polymerization temperature is preferably 10°C or higher, more preferably 20°C or higher, still more preferably 30°C or higher.

In order to easily achieve above-mentioned physical properties, preferred examples of the polymerization initiator include a water-soluble radical polymerization initiator and a redox initiator.

The aqueous medium is a reaction medium in which polymerization is allowed to occur, and means a liquid that contains water. The aqueous medium may be any medium that contains water, and may be one containing water and, for example, a fluorine-free organic solvent such as an alcohol, ether, or ketone and/or a fluorine-containing organic solvent having a boiling point of 40°C or lower.

In the emulsion polymerization, additives such as a nucleating agent, a chain transfer agent, a buffer, a pH adjuster, a stabilizing aid, a dispersion stabilizer, a radical scavenger, a decomposer of a polymerization initiator, or a dicarboxylic acid may be used as needed.

In order to adjust the particle size, a nucleating agent is preferably added in the emulsion polymerization. The nucleating agent is preferably added before starting the polymerization reaction.

The nucleating agent may be a known one. The nucleating agent preferably includes at least one selected from the group consisting of fluoropolyethers, nonionic surfactants, and chain transfer agents, more preferably a nonionic surfactant.

The fluoropolyether may be, for example, perfluoropolyether (PFPE) acid or its salt.

The perfluoropolyether (PFPE) acid or its salt may have any chain structure in which oxygen atoms in the main chain of the molecule are separated by saturated fluorocarbon groups containing 1 to 3 carbon atoms. Also, two or more types of fluorocarbon groups may be present in the molecule. A typical structure has a repeating unit represented by any of the following formulas:

$$(\text{-CFCF}_3\text{-CF}_2\text{-O-})_n,$$

$$(\text{-CF}_2\text{-CF}_2\text{-CF}_2\text{-O-})_n,$$

$$(\text{-CF}_2\text{-CF}_2\text{-O-})_n\text{-}(\text{-CF}_2\text{-O-})_m,$$

and

$$(\text{-CF}_2\text{-CFCF}_3\text{-O-})_n\text{-}(\text{-CF}_2\text{-O-})_m.$$

These structures are disclosed by Kasai in J. Appl. Polymer Sci. 57, 797 (1995). As disclosed in this literature,

the PFPE acid or its salt may have a carboxylic acid group or its salt at one end or each end. The PFPE acid or its salt may also have a sulfonic acid or phosphonic acid group or its salt at one end or each end. Moreover, the PFPE acid or its salt may have a different group at each end. In the case of monofunctional PFPE, the other end of the molecule is usually perfluorinated but may have a hydrogen or chlorine atom. The PFPE acid or its salt contains at least two ether oxygens, preferably at least four ether oxygens, still more preferably at least six ether oxygens. Preferably, at least one of the fluorocarbon groups separating the ether oxygens, more preferably at least two of such fluorocarbon groups contain two or three carbon atoms. Further more preferably, at least 50% of the fluorocarbon groups separating the ether oxygens contain two or three carbon atoms. Preferably, the PFPE acid or its salt contains a total of at least 15 carbon atoms, and, for example, a preferred minimum value of n or n + m in the repeating unit structure is at least 5. Two or more PFPE acids or their salts having an acid group at one end or each end may be used in the production method of the disclosure. The PFPE acid or its salt preferably has a number average molecular weight of less than 6000 g/mol.

In order to further increase the molecular weight of PTFE and improve the expandability, a radical scavenger or a decomposer of a polymerization initiator is preferably added in the emulsion polymerization. The radical scavenger or the decomposer of a polymerization initiator is added after the start of the polymerization reaction, preferably before 10% by mass, preferably 20% by mass of the total TFE to be consumed in the polymerization reaction is polymerized, while preferably before 50% by mass, preferably 40% by mass of the total TFE to be consumed in the polymerization reaction is polymerized. The radical scavenger or the decomposer of a polymerization initiator is preferably added after later-described depressurization and repressurization, if performed.

The radical scavenger used is a compound that has no reinitiation ability after addition or chain transfer to free radicals in the polymerization system. Specifically, used is a compound having a function of readily causing a chain transfer reaction with a primary radical or propagating radical and then generating a stable radical that does not react with a monomer or a compound having a function of readily causing an addition reaction with a primary radical or propagating radical to generate a stable radical.

In general, those called chain transfer agents are characterized by their activity in terms of chain transfer constant and reinitiation efficiency, and among them, those with almost 0% reinitiation efficiency are called radical scavengers.

The radical scavenger can also be described as, for example, a compound whose chain transfer constant to TFE at the polymerization temperature is greater than the polymerization rate constant and whose reinitiation efficiency is substantially 0%. The phrase "reinitiation efficiency is substantially 0%" means that the generated radicals make the radical scavenger a stable radical.

Preferably, the radical scavenger is a compound having a chain transfer constant (Cs) (= chain transfer rate constant (kc)/polymerization rate constant (kp)) to TFE at the polymerization temperature of greater than 0.1. The compound has a chain transfer constant (Cs) of more preferably 0.5 or greater, still more preferably 1.0 or greater, further more preferably 5.0 or greater, particularly preferably 10 or greater.

The radical scavenger preferably includes, for example, at least one selected from the group consisting of aromatic hydroxy compounds, aromatic amines, N,N-diethylhydroxylamine, quinone compounds, terpenes, thiocyanates, and cupric chloride ($CuCl_2$).

Examples of aromatic hydroxy compounds include unsubstituted phenols, polyhydric phenols, salicylic acid, m- or p-salicylic acid, gallic acid, and naphthol.

Examples of unsubstituted phenols include o-, m-, or p-nitrophenol, o-, m-, or p-aminophenol, and p-nitrosophenol. Examples of polyhydric phenols include catechol, resorcinol, hydroquinone, pyrogallol, phloroglucin, and naphtresorcinol.

Examples of aromatic amines include o-, m-, or p-phenylenediamine, and benzidine.

Examples of quinone compounds include o-, m-, or p-benzoquinone, 1,4-naphthoquinone, and alizarin.

Examples of thiocyanates include ammonium thiocyanate ($NH_4SCN$), potassium thiocyanate (KSCN), and sodium thiocyanate (NaSCN).

Among these, the radical scavenger is preferably an aromatic hydroxy compound, more preferably an unsubstituted phenol or a polyhydric phenol, still more preferably hydroquinone.

In order to moderately reduce the standard specific gravity, the amount of the radical scavenger added is preferably an amount equivalent to 3% to 500% (on a molar basis) of the polymerization initiator concentration. The lower limit is more preferably 10% (on a molar basis), still more preferably 15% (on a molar basis). The upper limit is more preferably 400% (on a molar basis), still more preferably 300% (on a molar basis).

The decomposer of a polymerization initiator may be any compound that can decompose the polymerization initiator used, and preferably includes at least one selected from the group consisting of, for example, sulfites, bisulfites, bromates, diimines, diimine salts, oxalic acid, oxalates, copper salts, and iron salts. Examples of the sulfite include sodium sulfite and ammonium sulfite. An example of copper salts is copper(II) sulfate and an example of iron salts is iron(II) sulfate.

In order to moderately reduce the standard specific gravity, the amount of the decomposer added is preferably an amount equivalent to 3% to 500% (on a molar basis) of the initiator concentration. The lower limit is more preferably 10% (on a molar basis), still more preferably 15% (on a molar basis). The upper limit is more preferably 400% (on a molar basis), still more preferably 300% (on a molar basis).

In order to reduce the amount of coagulum produced during polymerization, the emulsion polymerization may be performed in the presence of a dicarboxylic acid in an amount of 5 to 500 ppm, preferably 10 to 200 ppm in the aqueous medium. If the amount of the dicarboxylic acid is too small relative to the aqueous medium, a sufficient effect may not be achieved. Conversely, if the amount is too large, a chain transfer reaction may occur, and the resulting polymer may have a low molecular weight. The amount of the dicarboxylic acid is more preferably 150 ppm or less. The dicarboxylic acid may be added before the start of the polymerization reaction or may be added during the polymerization.

The dicarboxylic acid is preferably one represented by the formula: HOOCRCOOH (wherein R is a C1-C5 alkylene group), more preferably succinic acid, malonic acid, glutaric acid, adipic acid, or pimelic acid, still more preferably succinic acid.

In the emulsion polymerization, the polymerization temperature and the polymerization pressure are appropriately determined in accordance with the type of the monomer used, the target molecular weight of PTFE, and the reaction rate. The polymerization temperature is typically 5°C to 150°C. The polymerization temperature is preferably 10°C or higher, more preferably 30°C or higher, still more preferably 50°C or higher. The polymerization temperature is more preferably 120°C or lower, still more preferably 100°C or lower.

The polymerization pressure is 0.05 to 10 MPaG. The polymerization pressure is more preferably 0.3 MPaG or higher, still more preferably 0.5 MPaG or higher. The polymerization pressure is more preferably 5.0 MPaG or lower, still more preferably 3.0 MPaG or lower.

When VDF is used as a modifying monomer in the emulsion polymerization, in order to easily achieve the above-mentioned physical properties, the VDF concentration in the gas in the reactor at the time of starting polymerization (when adding an initiator) is preferably set to 0.001 mol% or higher, more preferably 0.01 mol% or higher. The VDF concentration may be 15 mol% or lower, preferably 6.0 mol% or lower, still more preferably 5.0 mol% or lower, further more preferably 3.0 mol% or lower, particularly preferably 1.0 mol% or lower. The VDF concentration may be maintained thereafter until the end of the polymerization reaction, or depressurization may be performed during the process. VDF is preferably fed all at once before the start of polymerization. Still, a portion thereof may be added continuously or intermittently after the start of polymerization.

When VDF is used as a modifying monomer in the emulsion polymerization, depressurization is preferably not performed until the polymerization is completed after VDF is introduced into the polymerization container. This allows VDF to remain in the system until the end of polymerization, leading to still higher tensile strength at break of the PTFE to be obtained.

When HFP is used as a modifying monomer in the emulsion polymerization, in order to easily achieve the above-mentioned physical properties, the HFP concentration in the gas in the reactor at the time of starting polymerization (when adding an initiator) is preferably set to 0.01 to 3.0 mol%. Further, the HFP concentration in the gas in the reactor at the time when 40% by mass of the total TFE to be consumed in the polymerization reaction is polymerized is preferably higher than 0 mol% and 0.2 mol% or lower. The HFP concentration is preferably maintained thereafter until the end of the polymerization reaction. HFP may be fed all at once before the start of polymerization, or a portion thereof may be fed before the start of polymerization and the rest may be added continuously or intermittently after the start of polymerization. By allowing HFP to remain until the end of the polymerization reaction, the extrusion pressure is reduced even though the PTFE to be obtained has high tensile strength at break.

When HFP is used as a modifying monomer in the emulsion polymerization, in order to achieve further improved tensile strength at break of the PTFE to be obtained, preferably, depressurization is performed before 5% to 40% by mass of the total TFE to be consumed in the polymerization reaction is polymerized, followed by repressurization with TFE alone.

The depressurization is preferably performed such that the pressure inside the reactor is 0.2 MPaG or lower, more preferably 0.1 MPaG or lower, still more preferably 0.05 MPaG or lower. The depressurization is preferably performed such that the pressure inside the reactor is 0.0 MPaG or higher.

The depressurization and the repressurization may be performed multiple times. The depressurization may be performed to a reduced pressure using a vacuum pump.

When CTFE is used as a modifying monomer in the emulsion polymerization, in order to easily achieve the above-mentioned physical properties, the CTFE concentration in the gas in the reactor at the time of starting polymerization (when adding the initiator) is preferably set to 0.001 mol% or higher, more preferably 0.01 mol% or higher. The CTFE concentration is also preferably 3.0 mol% or lower, more preferably 1.0 mol% or lower. The CTFE concentration may be maintained thereafter until the end of the polymerization reaction, or depressurization may be performed during the polymerization reaction. CTFE is preferably fed all at once before the start of polymerization. Still, a portion thereof may be added continuously or intermittently after the start of polymerization.

When CTFE is used as a modifying monomer in the emulsion polymerization, depressurization is preferably not performed until the polymerization is completed after the CTFE is introduced into the polymerization container. This allows CTFE to remain in the system until the end of polymerization, leading to still higher tensile strength at break of the PTFE to be obtained.

The coagulation in the step (B) can be performed by a known method.

The step (C) includes placing the wet powder obtained in the step (B) in a container with air permeability on the bottom and/or sides and heating the powder at a temperature of 130°C to 300°C for two hours or longer. Such a heat treatment under extremely limited conditions as described above can efficiently remove the fluorine-containing compound having a molecular weight of 1000 or less together with water, setting the amounts of the fluorine-containing compound and water within the above ranges.

In order to more efficiently remove water and the fluorine-containing compound, the temperature of the heat treatment in the step (C) is preferably 140°C or higher, more preferably 150°C or higher, still more preferably 160°C or higher, further more preferably 180°C or higher, still more preferably 200°C or higher, particularly preferably 220°C or higher, while preferably 280°C or lower, more preferably 250°C or lower.

In order to more efficiently remove water and the fluorine-containing compound, the duration of the heat treatment in the step (C) is preferably 5 hours or longer, more preferably 10 hours or longer, still more preferably 15 hours or longer. The upper limit is not limited. Still, it is preferably 100 hours, more preferably 50 hours, still more preferably 30 hours, for example.

In order to more efficiently remove water and the fluorine-containing compound, the wind speed in the step (C) is preferably 0.01 m/s or higher, more preferably 0.03 m/s or higher, still more preferably 0.05 m/s or higher, further more preferably 0.1 m/s or higher. In order to reduce or prevent powder scattering, the wind speed is preferably 50 m/s or lower, more preferably 30 m/s or lower, still more preferably 10 m/s or lower.

The heat treatment in the step (C) can be performed using an electric furnace or a steam furnace. For example, the heat treatment may be performed with an electric furnace such as a co-flow box electric furnace, a ventilated box electric furnace, a ventilated conveyor electric furnace, a band electric furnace, a radiant conveyor electric furnace, a fluidized bed electric furnace, a vacuum electric furnace, a stirring electric furnace, an convection electric furnace, or a hot air circulating electric furnace, or a steam furnace corresponding to any of the foregoing electric furnaces (a device of the type defined by replacing the "electric furnace" in the device name of the foregoing electric furnace with "steam furnace"). In order to more efficiently remove water and the fluorine-containing compound, preferred are a co-flow box electric furnace, a ventilated box electric furnace, a ventilated conveyor electric furnace, a band electric furnace, a fluidized bed electric furnace, a hot air circulating electric furnace, and steam furnaces corresponding to the forgoing furnaces (devices of the types determined by replacing the "electric furnace" in the device names of the foregoing electric furnaces with "steam furnace").

In the heat treatment in the step (C), the wet powder is placed in a container with air permeability on the bottom and/or sides. The container with air permeability on the bottom and/or sides may be any container capable of withstanding the heat treatment temperature. Preferably, it is made of metal such as stainless steel.

The container with air permeability on the bottom and/or sides is preferably a tray (bat) having air permeability on the bottom and/or sides, more preferably a tray (mesh tray) having the bottom and/or sides made of mesh.

The mesh is preferably either a woven net or punched metal.

The opening of the mesh is preferably 2000 um or less (mesh No. 10 or higher (ASTM)), more preferably 595 um or less (mesh No. 30 or higher), still more preferably 297 um or less (mesh No. 50 or higher), further more preferably 177 um or less (mesh No. 80 or higher), even more preferably 149 um or less (mesh No. 100 or higher), particularly preferably 74 um or less (mesh No. 200 or higher). The opening is preferably 25 um or more (mesh No. 500 or lower).

When the mesh is a woven net, the woven net may be, for example, a plain-woven mesh, a twilled-woven mesh, a plain dutch-woven mesh, or a twilled dutch-woven mesh.

When the mesh is a punched metal, the porosity is preferably 10% or higher, more preferably 20% or higher, still more preferably 30% or higher. The porosity is preferably 95% or lower.

In order to more efficiently remove water and the fluorine-containing compound, the amount of the wet powder placed in the step (C) is preferably 10 $g/cm^2$ or less, more preferably 8 $g/cm^2$ or less, still more preferably 5 $g/cm^2$ or less, particularly preferably 3 $g/cm^2$ or less, while preferably 0.01 $g/cm^2$ or more, more preferably 0.05 $g/cm^2$ or more, still more preferably 0.1 $g/cm^2$ or more.

In order to more efficiently remove water and the fluorine-containing compound, the water content of the wet powder to be heated in the step (C) is preferably 10% by mass or higher, more preferably 20% by mass or higher, still more preferably 30% by mass or higher, while preferably 150% by mass or lower, more preferably 100% by mass or lower relative to the wet powder.

The PTFE fine powder of the disclosure has excellent physical properties that are not inferior in any way to those of conventionally known PTFE fine powders, and can be used in the same manner and for the same applications as conventionally known PTFE fine powders.

The PTFE fine powder of the disclosure is particularly useful as a raw material for expanded articles. In a preferred aspect, the disclosure also relates to an expanded article containing the PTFE fine powder of the disclosure.
The expanded article can be obtained by expanding the PTFE fine powder of the disclosure.
The expanded article is also preferably in the form of a film, a tube, fibers, or rods.
The expanded article in the form of a film (expanded film or porous film) can be formed by expansion by a known PTFE expansion method.
Preferably, a sheet-shaped or rod-shaped paste extrudate is roll-expanded in an extruding direction, whereby a uniaxially expanded film can be obtained.
Further expanding in a transverse direction using a tenter, for example, can provide a biaxially expanded film.
Prebaking treatment is also preferably performed before expansion.
The expanded article can be formed as a porous article having a high porosity, and can be suitably used as a filter material for a variety of microfiltration membranes such as air filters and chemical filters and a support member for polymer electrolyte membranes.
The expanded article is also useful as a material of products used in the textile field, the medical treatment field, the electrochemical field, the sealant field, the air filter field, the ventilation/internal pressure adjustment field, the liquid filter field, and the consumer goods field.
The following provides examples of specific applications.

- Electrochemical field

Examples of the applications in this field include prepregs for dielectric materials, EMI-shielding materials, and heat conductive materials. More specifically, examples thereof include printed circuit boards, electromagnetic interference shielding materials, insulating heat conductive materials, and insulating materials.

- Sealant field

Examples of the applications in this field include gaskets, packings, pump diaphrams, pump rubes, and sealants for aircraft.

- Air filter field

Examples of the applications in this field include ULPA filters (for production of semiconductors), HEPA filters (for hospitals and for production of semiconductors), cylindrical cartridge filters (for industries), bag filters (for industries), heat-resistant bag filters (for exhaust gas treatment), heat-resistant pleated filters (for exhaust gas treatment), SINBRAN filters (for industries), catalyst filters (for exhaust gas treatment), absorbent-attached filters (for HDD embedment), absorbent-attached vent filters (for HDD embedment), vent filters (for HDD embedment, for example), filters for cleaners (for cleaners), general-purpose multilayer felt materials, cartridge filters for GT (for interchangeable items for GT), and cooling filters (for housings of electronic devices).

- Ventilation/internal pressure adjustment field

Examples of the applications in this field include materials for freeze drying such as containers for freeze drying, ventilation materials for automobiles for electronic circuits and lamps, applications relating to containers such as container caps, protective ventilation for electronic devices, including small devices such as tablet terminals and mobile phone terminals, and ventilation for medical treatment.

- Liquid filter field

Examples of the applications in this field include liquid filters for semiconductors (for production of semiconductors), hydrophilic PTFE filters (for production of semiconductors), filters for chemicals (for liquid chemical treatment), filters for pure water production lines (for production of pure water), and back-washing liquid filters (for treatment of industrial drainage).

- Consumer goods field

Examples of the applications in this field include clothes, cable guides (movable wires for motor bikes), clothes for motor cyclists, cast liners (medical supporters), filters for cleaners, bagpipes (musical instrument), cables (signal cables for guitars), and strings (for string instrument).

- Textile field

Examples of the applications in this field include PTFE fibers (fiber materials), machine threads (textiles), weaving yarns (textiles), and ropes.

- Medical treatment field

Examples of the applications in this field include implants (extending articles), artificial blood vessels, catheters, general surgical operations (tissue reinforcing materials), products for head and neck (dura mater alternatives), oral health (tissue regenerative medicine), and orthopedics (bandages).

The PTFE fine powder of the disclosure is also suitably used for various additives such as dustproof additives, anti-dripping agents, and binders for batteries, coating applications, and applications of impregnation of glass cloth.

An aqueous dispersion containing the PTFE fine powder of the disclosure is usable in various applications including use as a surface coating agent for cooking utensils, use in production of impregnated articles such as roofing materials by impregnating glass fibers, carbon fibers, Kevlar fibers, etc. with the aqueous dispersion, and use in formation of films by applying the aqueous dispersion to articles to be coated, followed by sintering, in applications including high-frequency printed circuit boards, transfer belts, and packings.

The disclosure also provides a PTFE fine powder substantially free from water and a fluorine-containing compound having a molecular weight of 1000 or less, the polytetrafluoroethylene fine powder being expandable and having a standard specific gravity of 2.160 or less (hereafter, also referred to as "PTFE fine powder (1a)"). The PTFE fine powder (1a) is substantially free from water and a fluorine-containing compound having a molecular weight of 1000 or less. The PTFE fine powder (1a) is therefore not likely to suffer troubles caused by residual water and fluorine-containing compound.

The disclosure also provides a PTFE fine powder substantially free from water and any of fluorine-containing compounds represented by the following formulas, the PTFE fine powder being expandable and having a standard specific gravity of 2.160 or less (hereafter, also referred to as "PTFE fine powder (1b)") (hereafter, "PTFE fine powder (1a) and "PTFE fine powder (1b) are also collectively referred to as "PTFE fine powder (1)"). The PTFE fine powder (1b) is substantially free from water and any of fluorine-containing compounds represented by the following formulas. The PTFE fine powder (1b) is therefore not likely to suffer troubles caused by residual water and fluorine-containing compound.

$F(CF_2)_7COOM$,
$F(CF_2)_5COOM$,
$H(CF_2)_6COOM$,
$H(CF_2)_7COOM$,
$CF_3O(CF_2)_3OCHFCF_2COOM$,
$C_3F_7OCF(CF_3)CF_2OCF(CF_3)COOM$,
$CF_3CF_2CF_2OCF(CF_3)COOM$,
$CF_3CF_2OCF_2CF_2OCF_2COOM$,
$C_2F_5OCF(CF_3)CF_2OCF(CF_3)COOM$,
$CF_3OCF(CF_3)CF_2OCF(CF_3)COOM$,
$CF_2ClCF_2CF_2OCF(CF_3)CF_2OCF_2COOM$,
$CF_2ClCF_2CF_2OCF_2CF(CF_3)OCF_2COOM$,
$CF_2ClCF(CF_3)OCF(CF_3)CF_2OCF_2COOM$,
$CF_2ClCF(CF_3)OCF_2CF(CF_3)OCF_2COOM$, and

[Chem. 7]

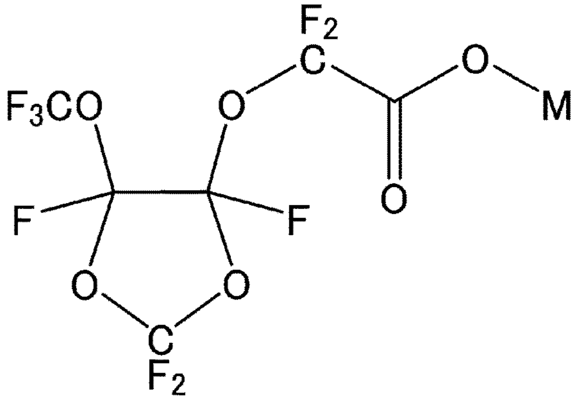

In the formulas, M is H, a metal atom, $NR^1_4$, imidazolium optionally containing a substituent, pyridinium optionally containing a substituent, or phosphonium optionally containing a substituent; and $R^1$ is H or an organic group.

The PTFE fine powder (1) is substantially free from water, which leads to stable extrusion pressure and enables production of uniaxially expanded articles with stable expansion strength and biaxially expanded films with high uniformity, good appearance, and stable film performance such as pressure loss and collection efficiency.

The PTFE fine powder (1) is expandable.

For the PTFE fine powder (1), the term "expandable" means that an expanded article is obtainable in the following expansion test.

A beading obtained by the following paste extrusion is heated at 230°C for 30 minutes, whereby the lubricant is removed from the beading. The beading (extrudate) is cut to an appropriate length and the resulting sample is clamped at each end with a gap between the clamps of 2.0 inches (51 mm), followed by heating to 300°C in an air-circulating furnace. The clamps are then moved apart at a desired speed (expansion speed) until the separation distance corresponds to the desired degree of expansion (total degree of expansion). The expansion method is essentially in conformity with the method disclosed in US 4576869 B, except that the extrusion speed is different (51 cm/min, not 84 cm/min). The "degree of expansion" shows the increase in length attributable to expansion, and is typically expressed in relation to the original length. In the above production method, the expansion speed is 100%/sec and the total degree of expansion is 2400%.

The paste extrusion is performed by the following method.

To 100 g of PTFE powder is added 21.7 g of lubricant (trade name: Isopar H (registered trademark), ExxonMobil Corp.), followed by mixing at room temperature for three minutes, whereby a PTFE fine powder mixture is obtained. Next, the resulting PTFE fine powder mixture is left to stand for at least one hour at room temperature (25°C) before extrusion, and paste-extruded through an orifice (diameter: 2.5 mm, land length: 11 mm, introduction angle: 30°) at room temperature at a reduction ratio of 100:1, whereby uniform beadings (extrudates) are obtained. The extrusion speed, i.e., ram speed is set to 20 inches/min (51 cm/min).

The PTFE fine powder (1) has a standard specific gravity (SSG) of 2.160 or less. The SSG is preferably 2.150 or less, more preferably 2.145 or less, still more preferably 2.140 or less.

The SSG is also preferably 2.130 or more.

The PTFE fine powder (1) is substantially free from water. The phrase "substantially free from water" means that the water content of the PTFE fine powder is 0.010% by mass or less.

The water content is preferably 0.008% by mass or less, preferably 0.005% by mass or less, more preferably 0.002% by mass or less.

The PTFE fine powder (1a) is substantially free from a fluorine-containing compound having a molecular weight of 1000 or less. The phrase "substantially free from a fluorine-containing compound having a molecular weight of 1000 or less" means that the amount of the fluorine-containing compound is 25 ppb by mass or less in the PTFE fine powder.

The amount of the fluorine-containing compound is preferably less than 25 ppb by mass, more preferably 10 ppb by mass or less, still more preferably 5 ppb by mass or less, particularly preferably 3 ppb by mass or less, even more preferably 1 ppb by mass or less. The lower limit is not limited, and may be an amount below the detection limit.

Examples of the fluorine-containing compound having a molecular weight of 1000 or less include those mentioned above. The PTFE fine powder (1) is preferably obtainable by polymerization in the presence of a fluorine-containing surfactant.

Examples of the fluorine-containing surfactant include those mentioned above, in particular, compounds represented by the following formulas. The fluorine-containing surfactant may be a mixture of these compounds:

$F(CF_2)_7COOM$,
$F(CF_2)_5COOM$,
$H(CF_2)_6COOM$,
$H(CF_2)_7COOM$,
$CF_3O(CF_2)_3OCHFCF_2COOM$,
$C_3F_7OCF(CF_3)CF_2OCF(CF_3)COOM$,
$CF_3CF_2CF_2OCF(CF_3)COOM$,
$CF_3CF_2OCF_2CF_2OCF_2COOM$,
$C_2F_5OCF(CF_3)CF_2OCF(CF_3)COOM$,
$CF_3OCF(CF_3)CF_2OCF(CF_3)COOM$,
$CF_2ClCF_2CF_2OCF(CF_3)CF_2OCF_2COOM$,
$CF_2ClCF_2CF_2OCF_2CF(CF_3)OCF_2COOM$,
$CF_2ClCF(CF_3)OCF(CF_3)CF_2OCF_2COOM$,
$CF_2ClCF(CF_3)OCF_2CF(CF_3)OCF_2COOM$, and

[Chem. 8]

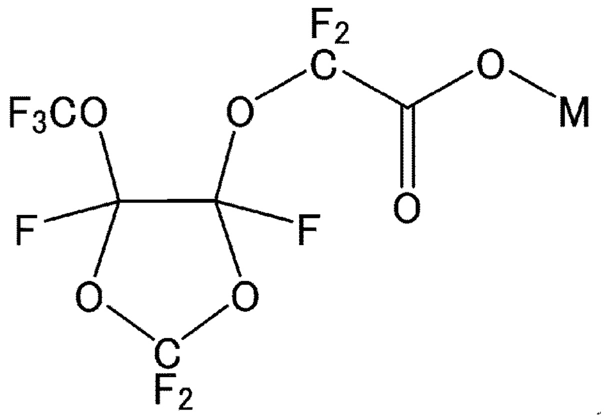

wherein M is as defined above.

The PTFE fine powder (1a) is preferably substantially free from any of the fluorine-containing compounds represented by the above formulas. The PTFE fine powder (1b) is substantially free from any of the fluorine-containing compounds represented by the above formulas.

The PTFE fine powder (1) substantially free from any of the fluorine-containing compounds represented by the above formulas can reduce or prevent occurrence of defects caused by residual fluorine-containing compounds.

The phrase "substantially free from any of the fluorine-containing compounds represented by the above formulas" means that the amount of any of the fluorine-containing compounds is 25 ppb by mass or less in the PTFE fine powder.

The amount of any of the fluorine-containing compounds is preferably less than 25 ppb by mass, more preferably 10 ppb by mass or less, still more preferably 5 ppb by mass or less, particularly preferably 3 ppb by mass or less, even more preferably 1 ppb by mass or less. The lower limit is not limited, and may be an amount below the detection limit.

The PTFE fine powder (1) is preferably substantially free from the fluorine-containing compound represented by the above formula (2), more preferably substantially free from any of the fluorine-containing compounds represented by the above formulas (1) to (4). The PTFE fine powder of the disclosure thus can reduce or prevent occurrence of defects caused by residual fluorine-containing compounds.

The phrase "substantially free from the fluorine-containing compound represented by the above formula" means that the amount of the fluorine-containing compound is 25 ppb by mass or less in the PTFE fine powder.

The amount of the fluorine-containing compound is preferably less than 25 ppb by mass, more preferably 10 ppb by mass or less, still more preferably 5 ppb by mass or less, particularly preferably 3 ppb by mass or less, even more preferably 1 ppb by mass or less. The lower limit is not limited, and may be an amount below the detection limit.

The PTFE fine powder (1) is also preferably substantially free from a hydrocarbon surfactant. The PTFE fine powder (1) thus can reduce or prevent occurrence of defects caused by residual hydrocarbon surfactant. The hydrocarbon surfactant is preferably free from a fluorine atom.

The phrase "substantially free from a hydrocarbon surfactant" means that the amount of the hydrocarbon surfactant is 25 ppb by mass or less in the PTFE fine powder.

The amount of the hydrocarbon surfactant is preferably less than 25 ppb by mass, more preferably 10 ppb by

mass or less, still more preferably 5 ppb by mass or less, particularly preferably 3 ppb by mass or less, even more preferably 1 ppb by mass or less. The lower limit is not limited, and may be an amount below the detection limit.

The PTFE fine powder (1) is preferably substantially free from the polymer (I) (other than PTFE) described above.

The phrase "substantially free from the polymer (I)" means that the amount of the polymer (I) is 25 ppb by mass or less in the PTFE fine powder.

The amount of the polymer (I) is preferably less than 25 ppb by mass, more preferably 10 ppb by mass or less, still more preferably 5 ppb by mass or less, particularly preferably 3 ppb by mass or less, even more preferably 1 ppb by mass or less. The lower limit is not limited, and may be an amount below the detection limit.

The PTFE fine powder (1) may have a tensile strength at break of 25.0 N or higher and 70.0 N or lower, the tensile strength at break being measured using an expanded beading obtained in an expansion test at a total degree of expansion of 2400% (hereafter, also referred to as "PTFE fine powder (1-1)"). The PTFE fine powder (1-1) preferably has a tensile strength at break of 28.0 N or higher, more preferably 30.0 N or higher, while preferably 60.0 N or lower, more preferably 50.0 N or lower.

The tensile strength at break is a value obtained by the following method.

An expanded beading (article produced by expanding a beading) obtained in the following expansion test is clamped between movable jaws with a gauge length of 5.0 cm to be fixed, and subjected to a tensile test at 25°C at a rate of 300 mm/min. The strength at break is measured as the tensile strength at break.

The expansion test is performed by the following method.

A beading obtained by the following paste extrusion is heated at 230°C for 30 minutes, whereby the lubricant is removed from the beading. The beading (extrudate) is cut to an appropriate length and the resulting sample is clamped at each end with a gap between the clamps of 2.0 inches (51 mm), followed by heating to 300°C in an air-circulating furnace. The clamps are then moved apart at a desired speed (expansion speed) until the separation distance corresponds to the desired degree of expansion (total degree of expansion). The expansion method is essentially in conformity with the method disclosed in US 4576869 B, except that the extrusion speed is different (51 cm/min, not 84 cm/min). The "degree of expansion" shows the increase in length attributable to expansion, and is typically expressed in relation to the original length. In the above production method, the expansion speed is 100%/sec and the total degree of expansion is 2400%.

The paste extrusion is performed by the following method.

To 100 g of PTFE powder is added 21.7 g of lubricant (trade name: Isopar H (registered trademark), ExxonMobil Corp.), followed by mixing at room temperature for three minutes, whereby a PTFE fine powder mixture is obtained. Next, the resulting PTFE fine powder mixture is left to stand for at least one hour at room temperature (25°C) before extrusion, and paste-extruded through an orifice (diameter: 2.5 mm, land length: 11 mm, introduction angle: 30°) at room temperature at a reduction ratio of 100:1, whereby uniform beadings (extrudate) are obtained. The extrusion speed, i.e., ram speed is set to 20 inches/min (51 cm/min).

The PTFE fine powder (1-1) may have an extrusion pressure at a reduction ratio (RR) of 100 of 5 MPa or higher, preferably 10 MPa or higher, more preferably 12 MPa or higher, still more preferably 15 MPa or higher, further more preferably 17 MPa or higher.

In order to achieve improved processability, the extrusion pressure at a RR of 100 is preferably 50 MPa or lower, more preferably 40 MPa or lower, still more preferably 30 MPa or lower, further more preferably 25 MPa or lower, further more preferably 23 MPa or lower, further more preferably 21 MPa or lower, particularly preferably 20 MPa or lower.

The PTFE fine powder (1) may also have a tensile strength at break of 10.0 N or higher and lower than 25.0 N, the tensile strength at break being measured using an expanded beading obtained in an expansion test at a total degree of expansion of 2400% (hereafter, also referred to as "PTFE fine powder (1-2)"). The PTFE fine powder (1-2) preferably has a tensile strength at break of 12.0 N or higher, more preferably 15.0 N or higher, while preferably 23.0 N or lower, more preferably 20.0 N or lower.

The PTFE fine powder (1-2) preferably has an extrusion pressure at a RR of 100 of 18 MPa or lower, more preferably 17 MPa or lower, still more preferably 16 MPa or lower, further more preferably 15 MPa or lower, while preferably 8 MPa or higher, more preferably 10 MPa or higher.

The PTFE fine powder (1) preferably has a strength ratio represented by "tensile strength at break (N))/extrusion pressure (MPa)" of 1.85 N/MPa or higher, more preferably 1.90 N/MPa or higher, still more preferably higher than 1.90 N/MPa, further more preferably 1.95 N/MPa or higher, further more preferably 2.00 N/MPa or higher, further more preferably 2.05 N/MPa or higher, further more preferably 2.10 N/MPa or higher, further more preferably 2.20 N/MPa or higher, particularly preferably 2.25 N/MPa or higher. The higher the strength ratio, the better. Still, the strength ratio may be 5.00 N/MPa or lower, or 4.00 N/MPa or lower.

The higher the strength ratio, the higher the tensile strength at break and the lower the extrusion pressure.

The tensile strength at break and the extrusion pressure are each a value obtained by the above corresponding method.

In order to further improve the heat resistance, the PTFE fine powder (1) preferably has a stress-relaxation

time of 450 sec or longer, more preferably 500 sec or longer, still more preferably 550 sec or longer, particularly preferably 600 sec or longer.

The longer the stress-relaxation time, the better. Still, the stress-relaxation time may be 2000 sec or shorter, or 1000 sec or shorter.

The stress-relaxation time is a value obtained by the following method.

An expanded beading is obtained as in the above expansion evaluation test, except that the gap between clamps is set to 1.5 inches (38 mm) and the expansion speed is set to 1000%/sec. The expanded bead is clamped at its ends by a fixture to give a taut beading sample with a total length of 8 inches (20 cm). The temperature of an oven is maintained at 390°C, and the fixture is inserted into the oven through a (covered) slit on a side of the oven. The time required from the insertion of the fixture into the oven to breakage of the beading sample is measured as the stress-relaxation time.

The other properties of the PTFE fine powder (1) may be the same as those of the PTFE fine powder of the disclosure described above.

Preferably, the PTFE fine powder (1) is substantially free from organic solvents. The expression "substantially free from organic solvents" means that the organic solvent content of the PTFE fine powder is 5% by mass or less.

The organic solvent content is preferably 3% by mass or less, more preferably 1% by mass or less, still more preferably 0.1% by mass or less, further more preferably 0.01% by mass or less, particularly preferably 0.001% by mass or less.

The PTFE fine powder (1) (PTFE fine powders (1-1) and (1-2)) can be produced by, for example, a method including: (A1) preparing an aqueous dispersion of PTFE; (B1) coagulating the aqueous dispersion to obtain a wet powder of PTFE; and (C1) placing the wet powder in a container with air permeability on the bottom and/or sides and heating the wet powder at a temperature of 130°C to 300°C for two hours or longer to obtain a PTFE fine powder.

The step (A1) can be performed similarly to the step (A) described above.

In order to easily obtain the PTFE fine powder (1-2), the amount of a water-soluble radical polymerization initiator used as a polymerization initiator is preferably an amount equivalent to 0.1 ppm or more, more preferably an amount equivalent to 1.0 ppm or more, still more preferably an amount equivalent to 5.0 ppm or more, further more preferably an amount equivalent to 10.0 ppm or more, while it is preferably an amount equivalent to 500 ppm or less, more preferably an amount equivalent to 200 ppm or less, still more preferably an amount equivalent to 100 ppm or less, further more preferably an amount equivalent to 50 ppm or less in the aqueous medium.

The step (B1) can be performed similarly to the step (B) described above.

The step (C1) can be performed similarly to the step (C) described above.

In order to easily obtain the PTFE fine powder (1-1), the heat treatment temperature in the step (C1) is preferably 150°C or higher, more preferably 160°C or higher, still more preferably 180°C or higher, further more preferably 200°C or higher.

In order to easily obtain the PTFE fine powder (1-2), the heat treatment temperature in the step (C1) is preferably 200°C or lower, more preferably 180°C or lower, still more preferably 160°C or lower, further more preferably 150°C or lower.

The PTFE fine powder (1) has excellent physical properties that are not inferior in any way to those of conventionally known PTFE fine powders, and can be used in the same manner and for the same applications as conventionally known PTFE fine powders.

The PTFE fine powder (1) can be suitably used for the same applications as the PTFE fine powder of the disclosure described above. In particular, the PTFE fine powder (1) is useful as an expansion material. In a preferred aspect, the disclosure also relates to an expanded article containing the PTFE fine powder (1) as an expansion material.

The expanded article can be obtained by expanding the PTFE fine powder (1).

The expanded article is also preferably in the form of a film, a tube, fibers, or rods.

The expanded article in the form of a film (expanded film or porous film) can be formed by expansion by a known PTFE expansion method.

Preferably, a sheet-shaped or rod-shaped paste extrudate is roll-expanded in an extruding direction and dried to obtain a non-sintered film, which is further roll-expanded, whereby a uniaxially expanded film can be obtained.

Further expansion in a transverse direction using a tenter, for example, can provide a biaxially expanded film.

Prebaking treatment is also preferably performed before expansion.

The expanded article can be formed as a porous article having a high porosity, and can be suitably used as a filter material for a variety of microfiltration membranes such as air filters and chemical filters and a support member for polymer electrolyte membranes.

The expanded article is also useful as a material of products used in the textile field, the medical treatment field, the electrochemical field, the sealant field, the air filter field, the ventilation/internal pressure adjustment field, the liquid filter field, and the consumer goods field.

The following provides examples of specific applications.

- Electrochemical field

Examples of the applications in this field include prepregs for dielectric materials, EMI-shielding materials, and heat conductive materials. More specifically, examples thereof include printed circuit boards, electromagnetic interference shielding materials, insulating heat conductive materials, and insulating materials.

- Sealant field

Examples of the applications in this field include gaskets, packings, pump diaphrams, pump rubes, and sealants for aircraft.

- Air filter field

Examples of the applications in this field include ULPA filters (for production of semiconductors), HEPA filters (for hospitals and for production of semiconductors), cylindrical cartridge filters (for industries), bag filters (for industries), heat-resistant bag filters (for exhaust gas treatment), heat-resistant pleated filters (for exhaust gas treatment), SINBRAN filters (for industries), catalyst filters (for exhaust gas treatment), absorbent-attached filters (for HDD embedment), absorbent-attached vent filters (for HDD embedment), vent filters (for HDD embedment, for example), filters for cleaners (for cleaners), general-purpose multilayer felt materials, cartridge filters for GT (for interchangeable items for GT), and cooling filters (for housings of electronic devices).

- Ventilation/internal pressure adjustment field

Examples of the applications in this field include materials for freeze drying such as containers for freeze drying, ventilation materials for automobiles for electronic circuits and lamps, applications relating to containers such as container caps, protective ventilation for electronic devices, including small devices such as tablet terminals and mobile phone terminals, and ventilation for medical treatment.

- Liquid filter field

Examples of the applications in this field include liquid filters for semiconductors (for production of semiconductors), hydrophilic PTFE filters (for production of semiconductors), filters for chemicals (for liquid chemical treatment), filters for pure water production lines (for production of pure water), and back-washing liquid filters (for treatment of industrial drainage).

- Consumer goods field

Examples of the applications in this field include clothes, cable guides (movable wires for motor bikes), clothes for motor cyclists, cast liners (medical supporters), filters for cleaners, bagpipes (musical instrument), cables (signal cables for guitars), and strings (for string instrument).

- Textile field

Examples of the applications in this field include PTFE fibers (fiber materials), machine threads (textiles), weaving yarns (textiles), and ropes.

- Medical treatment field

Examples of the applications in this field include implants (extending articles), artificial blood vessels, catheters, general surgical operations (tissue reinforcing materials), products for head and neck (dura mater alternatives), oral health (tissue regenerative medicine), and orthopedics (bandages).

The expanded article containing the PTFE fine powder (1-1) is suitably used as a porous film, a biaxially expanded film, or a filter material.

The expanded article containing the PTFE fine powder (1-2) is useful as a material for products used in the air filter field, and is particularly suitably used as a HEPA filter.

The PTFE fine powder (1) is also suitably used for various additives such as dustproof additives, anti-dripping agents, and binders for batteries, coating applications, and applications of impregnation of glass cloth.

An aqueous dispersion containing the PTFE fine powder (1) is usable in various applications including use as

a surface coating agent for cooking utensils, use in production of impregnated articles such as roofing materials by impregnating glass fibers, carbon fibers, Kevlar fibers, etc. with the aqueous dispersion, and use in formation of films by applying the aqueous dispersion to articles to be coated, followed by sintering, and use in applications including high-frequency printed circuit boards, transfer belts, and packings.

The disclosure also provides a modified PTFE fine powder substantially free from water and a fluorine-containing compound having a molecular weight of 1000 or less, the polytetrafluoroethylene fine powder being paste extrudable and having a standard specific gravity of 2.135 to 2.200 (hereafter, also referred to as "PTFE fine powder (2a)"). The PTFE fine powder (2a) is substantially free from water and a fluorine-containing compound having a molecular weight of 1000 or less. The PTFE fine powder (2a) is therefore not likely to suffer troubles caused by residual water and impurities.

The disclosure also provides a modified PTFE fine powder substantially free from water and any of fluorine-containing compounds represented by the following formulas, the modified PTFE powder being paste extrudable and having a standard specific gravity of 2.135 to 2.200 (hereafter, also referred to as "PTFE fine powder (2b)") (hereafter, "PTFE fine powder (2a) and "PTFE fine powder (2b) are also collectively referred to as "PTFE fine powder (2)"). The PTFE fine powder (2b) is substantially free from water and any of fluorine-containing compounds represented by the following formulas. The PTFE fine powder (2b) is therefore not likely to suffer troubles caused by residual water and impurities.

$F(CF_2)_7COOM$,
$F(CF_2)_5COOM$,
$H(CF_2)_6COOM$,
$H(CF_2)_7COOM$,
$CF_3O(CF_2)_3OCHFCF_2COOM$,
$C_3F_7OCF(CF_3)CF_2OCF(CF_3)COOM$,
$CF_3CF_2CF_2OCF(CF_3)COOM$,
$CF_3CF_2OCF_2CF_2OCF_2COOM$,
$C_2F_5OCF(CF_3)CF_2OCF(CF_3)COOM$,
$CF_3OCF(CF_3)CF_2OCF(CF_3)COOM$,
$CF_2ClCF_2CF_2OCF(CF_3)CF_2OCF_2COOM$,
$CF_2ClCF_2CF_2OCF_2CF(CF_3)OCF_2COOM$,
$CF_2ClCF(CF_3)OCF(CF_3)CF_2OCF_2COOM$,
$CF_2ClCF(CF_3)OCF_2CF(CF_3)OCF_2COOM$, and

[Chem. 9]

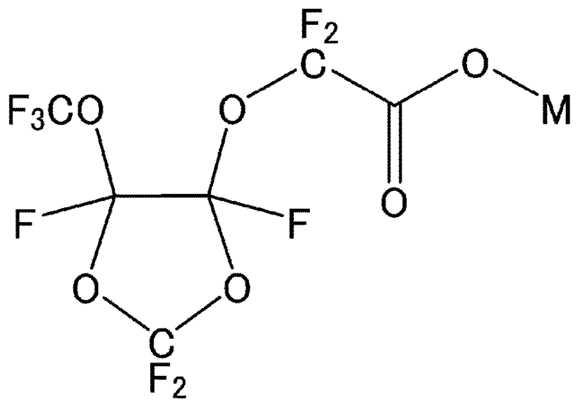

In the formulas, M is H, a metal atom, $NR^1_4$, imidazolium optionally containing a substituent, pyridinium optionally containing a substituent, or phosphonium optionally containing a substituent; and $R^1$ is H or an organic group.

The PTFE fine powder (2) is substantially free from water, which leads to stable extrusion pressure, less variation in the wire diameter, and occurrence of no sparking or cracking and enables production of molded articles with good appearance.

The PTFE fine powder (2) is paste extrudable.

When the extrusion pressure at a RR of 1500 reaches 150 MPa or higher during the measurement, such PTFE fine powder is determined to be not paste extrudable. When a rod-like material obtained by extrusion at a RR of 1500 breaks at an elongation of 5% or less in the tensile measurement, such PTFE fine powder is determined to be not paste extrudable. The tensile measurement herein refers to pulling a rod-like material at a tensile speed of 200 mm/min at

room temperature.

When the extrusion pressure does not reach equilibrium, such PTFE fine powder is determined to be not extrudable.

Being "paste extrudable" means that the PTFE fine powder is determined to be in a condition other than being not paste extrudable or not extrudable, and that a uniform extrudate (rod-like material) is obtainable.

The extrusion pressure at a RR of 1500 is measured by the following method.

Fifty grams of PTFE powder and 10.25 g of hydrocarbon oil (trade name: Isopar G, available from ExxonMobil Corporation) as an extrusion aid are mixed in a glass bottle, and aged at room temperature (25 ± 2°C) for one hour. An extrusion die (having an orifice (orifice diameter: 0.65 mm, orifice length: 2 mm) with a squeezing angle of 30 degrees, at its lower end) with a cylinder (inner diameter: 25.4 mm) is filled with the resulting mixture. A load of 1.2 MPa is applied to a piston inserted into the cylinder and maintained for one minute. Immediately thereafter, the mixture is extruded from the orifice at a ram speed of 20 mm/min at room temperature, whereby a rod-like material is obtained. The value obtained by dividing the pressure at a portion where the pressure is in equilibrium in the latter half of the extrusion by the cylinder cross-sectional area is defined as the extrusion pressure.

The PTFE fine powder (2) is substantially free from water. The phrase "substantially free from water" means that the water content of the PTFE fine powder is 0.010% by mass or less.

The water content is preferably 0.008% by mass or less, more preferably 0.005% by mass or less, still more preferably 0.002% by mass or less.

The PTFE fine powder (2a) is substantially free from a fluorine-containing compound having a molecular weight of 1000 or less. The phrase "substantially free from a fluorine-containing compound having a molecular weight of 1000 or less" means that the amount of the fluorine-containing compound is 25 ppb by mass or less in the PTFE fine powder.

The amount of the fluorine-containing compound is preferably less than 25 ppb by mass, more preferably 10 ppb by mass or less, still more preferably 5 ppb by mass or less, particularly preferably 3 ppb by mass or less, even more preferably 1 ppb by mass or less. The lower limit is not limited, and may be an amount below the detection limit.

Examples of the fluorine-containing compound having a molecular weight of 1000 or less include those mentioned above. The PTFE fine powder (2) is preferably obtainable by polymerization in the presence of a fluorine-containing surfactant.

Examples of the fluorine-containing surfactant include those mentioned above, in particular, compounds represented by the following formulas. The fluorine-containing surfactant may be a mixture of these compounds:

$F(CF_2)_7COOM$,
$F(CF_2)_5COOM$,
$H(CF_2)_6COOM$,
$H(CF_2)_7COOM$,
$CF_3O(CF_2)_3OCHFCF_2COOM$,
$C_3F_7OCF(CF_3)CF_2OCF(CF_3)COOM$,
$CF_3CF_2CF_2OCF(CF_3)COOM$,
$CF_3CF_2OCF_2CF_2OCF_2COOM$,
$C_2F_5OCF(CF_3)CF_2OCF(CF_3)COOM$,
$CF_3OCF(CF_3)CF_2OCF(CF_3)COOM$,
$CF_2ClCF_2CF_2OCF(CF_3)CF_2OCF_2COOM$,
$CF_2ClCF_2CF_2OCF_2CF(CF_3)OCF_2COOM$,
$CF_2ClCF(CF_3)OCF(CF_3)CF_2OCF_2COOM$,
$CF_2ClCF(CF_3)OCF_2CF(CF_3)OCF_2COOM$, and

[Chem. 10]

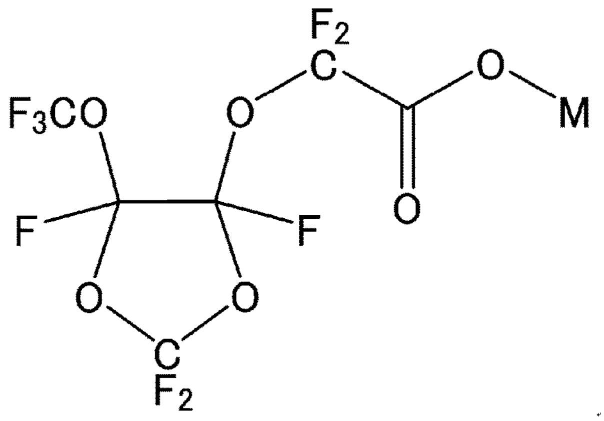

wherein M is as defined above.

The PTFE fine powder (2a) is preferably substantially free from any of the fluorine-containing compounds represented by the above formulas. The PTFE fine powder (2b) is substantially free from any of the fluorine-containing compounds represented by the above formulas.

The PTFE fine powder (2) substantially free from any of the fluorine-containing compounds represented by the above formulas can reduce or prevent occurrence of defects caused by residual fluorine-containing compounds.

The phrase "substantially free from any of the fluorine-containing compounds represented by the above formulas" means that the amount of any of the fluorine-containing compounds is 25 ppb by mass or less in the PTFE fine powder.

The amount of any of the fluorine-containing compounds is preferably less than 25 ppb by mass, more preferably 10 ppb by mass or less, still more preferably 5 ppb by mass or less, particularly preferably 3 ppb by mass or less, even more preferably 1 ppb by mass or less. The lower limit is not limited, and may be an amount below the detection limit.

The PTFE fine powder (2) is preferably substantially free from the fluorine-containing compound represented by the above formula (2), more preferably substantially free from any of the fluorine-containing compounds represented by the above formulas (1) to (4). The PTFE fine powder (2) thus can reduce or prevent occurrence of defects caused by residual fluorine-containing compounds.

The phrase "substantially free from the fluorine-containing compound represented by the above formula" means that the amount of the fluorine-containing compound is 25 ppb by mass or less in the PTFE fine powder.

The amount of the fluorine-containing compound is preferably less than 25 ppb by mass, more preferably 10 ppb by mass or less, still more preferably 5 ppb by mass or less, particularly preferably 3 ppb by mass or less, even more preferably 1 ppb by mass or less. The lower limit is not limited, and may be an amount below the detection limit.

The PTFE fine powder (2) is also preferably substantially free from a hydrocarbon surfactant. The PTFE fine powder (2) thus can reduce or prevent occurrence of defects caused by residual hydrocarbon surfactant. The hydrocarbon surfactant is preferably free from a fluorine atom.

The phrase "substantially free from a hydrocarbon surfactant" means that the amount of the hydrocarbon surfactant is 25 ppb by mass or less in the PTFE fine powder.

The amount of the hydrocarbon surfactant is preferably less than 25 ppb by mass, more preferably 10 ppb by mass or less, still more preferably 5 ppb by mass or less, particularly preferably 3 ppb by mass or less, even more preferably 1 ppb by mass or less. The lower limit is not limited, and may be an amount below the detection limit.

The PTFE fine powder (2) is preferably substantially free from the polymer (I) (other than PTFE) described above.

The phrase "substantially free from a polymer (I)" means that the amount of the polymer (I) is 25 ppb by mass or less in the PTFE fine powder.

The amount of the polymer (I) is preferably less than 25 ppb by mass, more preferably 10 ppb by mass or less, still more preferably 5 ppb by mass or less, particularly preferably 3 ppb by mass or less, even more preferably 1 ppb by mass or less. The lower limit is not limited, and may be an amount below the detection limit.

The PTFE fine powder (2) has a standard specific gravity (SSG) of 2.135 to 2.200. The SSG is preferably 2.190 or less, more preferably 2.185 or less, still more preferably 2.180 or less, further more preferably 2.175 or less, while preferably 2.145 or more, more preferably 2.155 or more, still more preferably 2.160 or more, further more preferably 2.165 or more.

The PTFE fine powder (2) preferably has an extrusion pressure at a RR of 1500 of 15 to 80 MPa. The extrusion pressure at a RR of 1500 is more preferably 70 MPa or lower, still more preferably 60 MPa or lower, further more

preferably 55 MPa or lower, while more preferably 20 MPa or higher, still more preferably 25 MPa or higher.

The extrusion pressure at a RR of 1500 is measured by the following method.

Fifty grams of PTFE powder and 10.25 g of hydrocarbon oil (trade name: Isopar G, available from ExxonMobil Corporation) as an extrusion aid are mixed in a glass bottle, and aged at room temperature (25 ± 2°C) for one hour. An extrusion die (having an orifice (orifice diameter: 0.65 mm, orifice length: 2 mm) with a squeezing angle of 30 degrees, at its lower end) with a cylinder (inner diameter: 25.4 mm) is filled with the resulting mixture. A load of 1.2 MPa is applied to a piston inserted into the cylinder and maintained for one minute. Immediately thereafter, the mixture is extruded from the orifice at a ram speed of 20 mm/min at room temperature, whereby a rod-like material is obtained. The value obtained by dividing the pressure at a portion where the pressure is in equilibrium in the latter half of the extrusion by the cylinder cross-sectional area is defined as the extrusion pressure.

The PTFE fine powder (2) is a modified PTFE fine powder. Specifically, PTFE constituting the PTFE fine powder (2) is a modified PTFE containing a polymerized unit based on tetrafluoroethylene (TFE) (TFE unit) and a polymerized unit based on a modifying monomer (hereinafter, also referred to as a "modifying monomer unit"). The modified PTFE may contain 99.0% by mass or more of the TFE unit and 1.0% by mass or less of the modifying monomer unit. The modified PTFE may consist of the TFE unit and the modifying monomer unit.

The modified PTFE preferably contains the modifying monomer unit in an amount falling within a range of 0.00001 to 1.0% by mass in all polymerized units. The lower limit of the amount of the modifying monomer unit is more preferably 0.0001% by mass, still more preferably 0.001% by mass, further more preferably 0.005% by mass, even more preferably 0.010% by mass. The upper limit of the amount of the modifying monomer unit is preferably 0.90% by mass, more preferably 0.80% by mass, still more preferably 0.50% by mass, further more preferably 0.40% by mass, further more preferably 0.30% by mass, further more preferably 0.20% by mass, further more preferably 0.15% by mass, further more preferably 0.10% by mass, further more preferably 0.08% by mass, particularly preferably 0.05% by mass, most preferably 0.03% by mass.

Examples of the modifying monomer include those mentioned above for the PTFE fine powder of the disclosure.

In order to easily achieve the physical properties described above, the modifying monomer is preferably a fluoro(alkyl vinyl ether) such as perfluoro(alkyl vinyl ether) (PAVE); a vinyl heterocyclic compound such as perfluoro-2,2-dimethyl-1,3-dioxole (PDD); or a fluoroolefin such as hexafluoropropylene (HFP) or chlorotrifluoroethylene (CTFE). The modifying monomer used can include one or two or more of these.

In particular, the modifying monomer preferably includes at least one selected from the group consisting of fluoro(alkyl vinyl ethers) and fluoroolefins, more preferably at least one selected from the group consisting of PAVE, HFP, and CTFE. Use of PAVE and HFP in combination is also preferred. PAVE is preferably perfluoro(propyl vinyl ether) (PPVE).

In order to further improve the paste extrudability, the modified PTFE constituting the PTFE fine powder (2) preferably has a core-shell structure. In the core-shell structure, the core and the shell need not to have a clear boundary between them, and the modified PTFE constituting the core and the modified PTFE constituting the shell may be mixed around the boundary between the core and the shell.

The core in the core-shell structure is preferably constituted by a modified PTFE containing a polymerized unit based on a modifying monomer.

The modifying monomer in the core preferably includes at least one selected from the group consisting of fluoro(alkyl vinyl ethers), vinyl heterocyclic compounds, and fluoroolefins, more preferably at least one selected from the group consisting of fluoro(alkyl vinyl ethers) and fluoroolefins, still more preferably at least one selected from the group consisting of PAVE, HFP, and CTFE.

The shell in the core-shell structure is preferably constituted by a modified PTFE containing a polymerized unit based on a modifying monomer and/or a modified PTFE obtainable by polymerization using a chain transfer agent.

The modifying monomer in the shell preferably includes at least one selected from the group consisting of fluoro(alkyl vinyl ethers) and fluoroolefins, more preferably at least one selected from the group consisting of PAVE, HFP, and CTFE, still more preferably at least one selected from the group consisting of HFP and CTFE.

The chain transfer agent may be any agent that can reduce the molecular weight of the modified PTFE constituting the shell. Examples thereof include those containing non-peroxidized organic compounds such as water-soluble alcohols, hydrocarbons, and fluorinated hydrocarbons, water-soluble organic peroxides such as disuccinic peroxide (DSP), and persulfates such as ammonium persulfate (APS) and potassium persulfate (KPS).

The chain transfer agent contains at least one of a non-peroxidized organic compound, a water-soluble organic peroxide, or a persulfate.

The chain transfer agent may contain one or two or more of each of the non-peroxidized organic compound, the water-soluble organic peroxide, and the persulfate.

In terms of good dispersibility and uniformity in the reaction system, the chain transfer agent preferably includes at least one selected from the group consisting of C1-C4 water-soluble alcohols, C1-C4 hydrocarbons, and C1-C4 fluorinated hydrocarbons, more preferably at least one selected from the group consisting of methane, ethane, n-butane,

isobutane, methanol, HFC-134a, HFC-32, DSP, APS, and KPS, still more preferably methanol and/or isobutane, particularly preferably methanol.

The other properties of the PTFE fine powder (2) may be the same as those of the PTFE fine powder of the disclosure described above.

Preferably, the PTFE fine powder (2) is substantially free from organic solvents. The expression "substantially free from organic solvents" means that the organic solvent content of the PTFE fine powder (2) is 5% by mass or less.

The organic solvent content is preferably 3% by mass or less, more preferably 1% by mass or less, still more preferably 0.1% by mass or less, further more preferably 0.01% by mass or less, particularly preferably 0.001% by mass or less.

The PTFE fine powder (2) can be suitably produced by, for example, a production method including: (A2) preparing an aqueous dispersion of a modified PTFE; (B2) coagulating the aqueous dispersion to obtain a wet powder of the modified PTFE; and (C2) placing the wet powder in a container with air permeability on the bottom and/or sides and heating the wet powder at a temperature of 130°C to 300°C for two hours or longer to obtain a PTFE fine powder.

The step (A2) is preferably a step of emulsion polymerizing TFE and a modifying monomer.

The step (A2) preferably includes a step (1) of performing a polymerization reaction by feeding a modifying monomer to the reaction system at an early stage of the polymerization reaction and a step (2) of introducing a chain transfer agent and/or the modifying monomer to the reaction system after the step (1).

Examples of the modifying monomer used in the step (1) include fluoro(alkyl vinyl ethers) such as perfluoro(alkyl vinyl ether) (PAVE); vinyl heterocyclic compounds such as perfluoro-2,2-dimethyl-1,3-dioxole (PDD); and fluoroolefins such as hexafluoropropylene (HFP) and chlorotrifluoroethylene (CTFE). The modifying monomer used can include one or two or more of these.

In particular, the modifying monomer preferably includes at least one selected from the group consisting of fluoro(alkyl vinyl ethers) and fluoroolefins, more preferably at least one selected from the group consisting of PAVE, HFP, and CTFE.

Use of PAVE and HFP in combination as the modifying monomer in the step (1) is also preferred.

PAVE is preferably perfluoro(propyl vinyl ether) (PPVE).

The chain transfer agent in the step (2) may be any agent that can reduce the molecular weight of the modified PTFE constituting the shell of the core-shell structure. Examples thereof include those containing non-peroxidized organic compounds such as water-soluble alcohols, hydrocarbons, and fluorinated hydrocarbons, water-soluble organic peroxides such as disuccinic peroxide (DSP), and persulfates such as ammonium persulfate (APS) and potassium persulfate (KPS).

The chain transfer agent contains at least one of a non-peroxidized organic compound, a water-soluble organic peroxide, or a persulfate.

The chain transfer agent may contain one or two or more of each of the non-peroxidized organic compound, the water-soluble organic peroxide, and the persulfate.

In terms of good dispersibility and uniformity in the reaction system, the chain transfer agent preferably includes at least one selected from the group consisting of C1-C4 water-soluble alcohols, C1-C4 hydrocarbons, and C1-C4 fluorinated hydrocarbons, more preferably at least one selected from the group consisting of methane, ethane, n-butane, isobutane, methanol, HFC-134a, HFC-32, DSP, APS, and KPS, still more preferably methanol and/or isobutane, particularly preferably methanol.

The modifying monomer in the step (2) preferably includes at least one selected from the group consisting of fluoro(alkyl vinyl ethers) and fluoroolefins described above, more preferably at least one selected from the group consisting of PAVE, HFP, and CTFE, still more preferably at least one selected from the group consisting of HFP and CTFE.

Use of the chain transfer agent and the modifying monomer in combination in the step (2) is also preferred.

When the modifying monomer used in the step (1) includes CTFE, the modifying monomer used in the step (2) preferably includes CTFE.

When the modifying monomer used in the step (1) includes PAVE (and HFP), the chain transfer agent used in the step (2) preferably includes methanol (and the modifying monomer used preferably includes HFP).

The polymerization reaction in the step (1) is preferably performed until the conversion rate of TFE used in the entire emulsion polymerization step including the step (1) and the step (2) reaches 80% or higher, preferably 80% to 97%, more preferably 85% to 95%.

The term "conversion rate" herein refers to a proportion of the amount of TFE having been consumed in the polymerization from the start of the polymerization to a specific point during the polymerization, in the amount of TFE corresponding to the target amount of the TFE unit.

In the step (1) and the step (2), the reaction conditions can be appropriately set in accordance with the type of the modifier used, the composition and yield of the target modified PTFE.

The emulsion polymerization can be performed in an aqueous medium in the presence of a fluorine-containing anionic surfactant and a polymerization initiator. A dispersion stabilizer may be used as needed.

The amount of the fluorine-containing anionic surfactant may be set to 0.02 to 0.3% by mass of the aqueous medium.

The polymerization initiator used may be, for example, a persulfate such as ammonium persulfate (APS) or a water-soluble organic peroxide such as disuccinic peroxide (DSP). One of these polymerization initiators or two or more of these polymerization initiators in combination may be used. In particular, preferred are APS and DSP as they also act as the chain transfer agent described above.

In the emulsion polymerization, the polymerization initiator is preferably used in an amount of 0.0001 to 0.02 parts by mass per 100 parts by mass of the aqueous medium.

The aqueous medium used may be the same as that used in the step (A) described above.

The emulsion polymerization can be performed at a polymerization temperature of 10°C to 95°C. In the case of using a persulfate or a water-soluble organic peroxide as a polymerization initiator, the polymerization temperature is preferably 60°C to 90°C.

The emulsion polymerization can be performed typically at 0.5 to 3.9 MPaG, preferably at 0.6 to 3 MPaG.

The emulsion polymerization can be performed at a pressure of 0.5 MPaG or lower at an initial stage of polymerization, specifically, while the conversion rate of TFE is within a range of 15% or lower of the whole, and at a pressure higher than 0.5 MPaG thereafter. Alternatively, the emulsion polymerization can be performed such that the reaction pressure is lowered to, for example, 0.1 MPaG or lower during formation of the core and TFE is again fed to allow the reaction to progress at a predetermined pressure.

The step (B2) can be performed similarly to the step (B) described above.

The step (C2) can be performed similarly to the step (C) described above.

In order to obtain the PTFE fine powder with better paste extrudability, the heat treatment temperature in the step (C2) is preferably 200°C or lower, more preferably 170°C or lower, still more preferably 150°C or lower.

The PTFE fine powder (2) has excellent physical properties that are not inferior in any way to those of conventionally known PTFE fine powders, and can be used in the same manner and for the same applications as conventionally known PTFE fine powders.

The PTFE fine powder (2) is particularly useful as a raw material for molded articles. In a preferred aspect, the disclosure also relates to a molded article containing the PTFE fine powder (2).

The molded article can be obtained by molding the PTFE fine powder (2).

The molding may be performed by any method, typically by paste extrusion.

The paste extrusion can be performed under the conditions appropriately set in accordance with, for example, the desired shape and application of the molded article. For example, the PTFE fine powder (2) is mixed with an extrusion aid, aged for about 1 to 24 hours, premolded at a pressure of 0.5 to 5.0 MPa, and extruded at an extrusion pressure of 2 to 100 MPa, followed by sintering at 360°C to 460°C.

The molded article is suitably used as a product required to have heat resistance and/or chemical resistance, such as a printed board, an electric wire coating, or a tube, in the fields of, for example, aircraft, automobiles, medical equipment, and precision instrument. In particular, the molded article is preferably used as an electric wire coating material required to have core wire adhesion strength or a tube for medical use.

The disclosure also relates to a modified polytetrafluoroethylene fine powder obtainable by modification with a perfluoro vinyl ether, the modified polytetrafluoroethylene fine powder being paste extrudable, having a standard specific gravity of 2.135 to 2.200, and being substantially free from water and any of fluorine-containing compounds represented by the following formula (2) (hereafter, also referred to as "PTFE fine powder (3)"):

Formula (2): $[C_{n-1}F_{2n-1}COO^-]M^+$

wherein n is an integer of 9 to 14 and $M^+$ is a cation.

The PTFE fine powder (3) is substantially free from water, which leads to stable extrusion pressure, less variation in the wire diameter, and occurrence of no sparking or cracking and enables production of molded articles with good appearance.

The PTFE fine powder (3) is paste extrudable.

When the extrusion pressure at a RR of 1500 reaches 150 MPa or higher during the measurement, such PTFE fine powder is determined to be not paste extrudable. When a rod-like material obtained by extrusion at a RR of 1500 breaks at an elongation of 5% or less in the tensile measurement, such PTFE fine powder is determined to be not paste extrudable. The tensile measurement herein refers to pulling a rod-like material at a tensile speed of 200 mm/min at room temperature.

When the extrusion pressure does not reach equilibrium, such PTFE fine powder is determined to be not extrudable.

Being "paste extrudable" means that the PTFE fine powder is determined to be in a condition other than being not paste extrudable or not extrudable, and that a uniform extrudate (rod-like material) is obtainable.

The extrusion pressure at a RR of 1500 is measured by the following method.

Fifty grams of PTFE powder and 10.25 g of hydrocarbon oil (trade name: Isopar G, available from ExxonMobil Corporation) as an extrusion aid are mixed in a glass bottle, and aged at room temperature (25 ± 2°C) for one hour. An extrusion die (having an orifice (orifice diameter: 0.65 mm, orifice length: 2 mm) with a squeezing angle of 30 degrees, at its lower end) with a cylinder (inner diameter: 25.4 mm) is filled with the resulting mixture. A load of 1.2 MPa is applied to a piston inserted into the cylinder and maintained for one minute. Immediately thereafter, the mixture is extruded from the orifice at a ram speed of 20 mm/min at room temperature, whereby a rod-like material is obtained. The value obtained by dividing the pressure at a portion where the pressure is in equilibrium in the latter half of the extrusion by the cylinder cross-sectional area is defined as the extrusion pressure.

The PTFE fine powder (3) is substantially free from water. The phrase "substantially free from water" means that the water content of the PTFE fine powder is 0.010% by mass or less.

The water content is preferably 0.008% by mass or less, more preferably 0.005% by mass or less, still more preferably 0.002% by mass or less.

The PTFE fine powder (3) is substantially free from any of fluorine-containing compounds represented by the following formula (2):

Formula (2): $[C_{n-1}F_{2n-1}COO^-]M^+$

wherein n is an integer of 9 to 14 and $M^+$ is a cation.

The PTFE fine powder (3) thus can reduce or prevent occurrence of defects caused by residual fluorine-containing compounds.

The phrase "substantially free from the fluorine-containing compound represented by the formula (2)" means that the amount of the fluorine-containing compound is 25 ppb by mass or less in the PTFE fine powder.

The amount of the fluorine-containing compound is preferably less than 25 ppb by mass, more preferably 10 ppb by mass or less, still more preferably 5 ppb by mass or less, particularly preferably 3 ppb by mass or less, even more preferably 1 ppb by mass or less. The lower limit is not limited, and may be an amount below the detection limit.

Examples of the fluorine-containing compound represented by the formula (2) include one mentioned above.

The PTFE fine powder (3) is more preferably substantially free from any of the fluorine-containing compounds represented by the formulas (1), (3), and (4). The PTFE fine powder (3) thus can reduce or prevent occurrence of defects caused by residual fluorine-containing compounds.

The phrase "substantially free from the fluorine-containing compound represented by the above formula" means that the amount of the fluorine-containing compound is 25 ppb by mass or less in the PTFE fine powder.

The amount of the fluorine-containing compound is preferably less than 25 ppb by mass, more preferably 10 ppb by mass or less, still more preferably 5 ppb by mass or less, particularly preferably 3 ppb by mass or less, even more preferably 1 ppb by mass or less. The lower limit is not limited, and may be an amount below the detection limit.

The PTFE fine powder (3) is preferably substantially free from a fluorine-containing compound having a molecular weight of 1000 or less. The phrase "substantially free from a fluorine-containing compound having a molecular weight of 1000 or less" means that the amount of the fluorine-containing compound is 25 ppb by mass or less in the PTFE fine powder.

The amount of the fluorine-containing compound is preferably less than 25 ppb by mass, more preferably 10 ppb by mass or less, still more preferably 5 ppb by mass or less, particularly preferably 3 ppb by mass or less, even more preferably 1 ppb by mass or less. The lower limit is not limited, and may be an amount below the detection limit.

Examples of the fluorine-containing compound having a molecular weight of 1000 or less include those mentioned above. The PTFE fine powder (3) is preferably obtainable by polymerization in the presence of a fluorine-containing surfactant. Examples of the fluorine-containing surfactant include those mentioned above.

The PTFE fine powder (3) is also preferably substantially free from a hydrocarbon surfactant. The PTFE fine powder (3) thus can reduce or prevent occurrence of defects caused by residual hydrocarbon surfactant. The hydrocarbon surfactant is preferably free from a fluorine atom.

The phrase "substantially free from a hydrocarbon surfactant" means that the amount of the hydrocarbon surfactant is 25 ppb by mass or less in the PTFE fine powder.

The amount of the hydrocarbon surfactant is preferably less than 25 ppb by mass, more preferably 10 ppb by mass or less, still more preferably 5 ppb by mass or less, particularly preferably 3 ppb by mass or less, even more preferably 1 ppb by mass or less. The lower limit is not limited, and may be an amount below the detection limit.

The PTFE fine powder (3) is preferably substantially free from the polymer (I) (other than PTFE) described above.

The phrase "substantially free from the polymer (I)" means that the amount of the polymer (I) is 25 ppb by mass or less in the PTFE fine powder.

The amount of the polymer (I) is preferably less than 25 ppb by mass, more preferably 10 ppb by mass or less, still more preferably 5 ppb by mass or less, particularly preferably 3 ppb by mass or less, even more preferably 1 ppb

by mass or less. The lower limit is not limited, and may be an amount below the detection limit.

The PTFE fine powder (3) has a standard specific gravity (SSG) of 2.135 to 2.200. The SSG is preferably 2.190 or less, more preferably 2.185 or less, still more preferably 2.180 or less, further more preferably 2.175 or less, while preferably 2.145 or more, more preferably 2.155 or more, still more preferably 2.160 or more, further more preferably 2.165 or more.

The PTFE fine powder (3) preferably has an extrusion pressure at a RR of 1500 of 15 to 80 MPa. The extrusion pressure at a RR of 1500 is more preferably 70 MPa or lower, still more preferably 60 MPa or lower, further more preferably 55 MPa or lower, while more preferably 20 MPa or higher, still more preferably 25 MPa or higher.

The extrusion pressure at a RR of 1500 is measured by the following method.

Fifty grams of PTFE powder and 10.25 g of hydrocarbon oil (trade name: Isopar G, available from ExxonMobil Corporation) that is an extrusion aid are mixed in a glass bottle, and aged at room temperature (25 ± 2°C) for one hour. An extrusion die (having an orifice (orifice diameter: 0.65 mm, orifice length: 2 mm) with a squeezing angle of 30 degrees, at its lower end) with a cylinder (inner diameter: 25.4 mm) is filled with the resulting mixture. A load of 1.2 MPa is applied to a piston inserted into the cylinder and maintained for one minute. Immediately thereafter, the mixture is extruded from the orifice at a ram speed of 20 mm/min at room temperature, whereby a rod-like material is obtained. The value obtained by dividing the pressure at a portion where the pressure is in equilibrium in the latter half of the extrusion by the cylinder cross-sectional area is defined as the extrusion pressure.

The PTFE fine powder (3) is a modified PTFE fine powder obtained by modification with perfluorovinyl ether. Specifically, PTFE constituting the PTFE fine powder (3) is a modified PTFE containing a polymerized unit based on tetrafluoroethylene (TFE) (TFE unit) and a polymerized unit based on a perfluorovinyl ether (hereinafter, also referred to as a "perfluorovinyl ether unit"). The modified PTFE may contain 99.0% by mass or more of the TFE unit and 1.0% by mass or less of the perfluorovinyl ether unit. The modified PTFE may consist of the TFE unit and the perfluorovinyl ether unit.

The modified PTFE preferably contains the perfluorovinyl ether unit in an amount (modification amount) of 0.02% by mass or more and 0.30% by mass or less in all polymerized units. The lower limit of the amount of the perfluorovinyl ether unit is more preferably 0.03% by mass, still more preferably 0.05% by mass, further more preferably 0.10% by mass. The upper limit of the amount of the perfluorovinyl ether unit is preferably 0.27% by mass, more preferably 0.25% by mass.

Examples of the perfluorovinyl ether include those mentioned above for the PTFE fine powder of the disclosure. The perfluorovinyl ether is preferably a PAVE. The PAVE is preferably perfluoromethyl vinyl ether, perfluoroethyl vinyl ether, or perfluoro(propyl vinyl ether) (PPVE), more preferably PPVE.

The PTFE fine powder (3) may contain a polymerized unit based on a modifying monomer other than the perfluorovinyl ether (hereinafter, also referred to as a different modifying monomer unit"). In the case of containing a different modifying monomer unit, the PTFE fine powder (3) preferably contains the perfluorovinyl ether unit and the different modifying monomer unit in a total amount of 1.0% by weight or less in all polymerized units.

Examples of the different modifying monomer include those mentioned above for the PTFE fine powder of the disclosure.

In order to easily achieve the physical properties described above, the different modifying monomer is preferably a vinyl heterocyclic compound such as perfluoro-2,2-dimethyl-1,3-dioxole (PDD); or a fluoroolefin such as hexafluoropropylene (HFP) or chlorotrifluoroethylene (CTFE). The different modifying monomer used can include one or two or more of these.

In particular, the different modifying monomer preferably includes at least one selected from the group consisting of fluoroolefins, more preferably at least one selected from the group consisting of HFP and CTFE, more preferably HFP.

In order to further improve the paste extrudability, the modified PTFE constituting the PTFE fine powder (3) preferably has a core-shell structure. In the core-shell structure, the core and the shell need not to have a clear boundary between them, and the modified PTFE constituting the core and the modified PTFE constituting the shell may be mixed around the boundary between the core and the shell.

The core in the core-shell structure is preferably constituted by a modified PTFE containing a polymerized unit based on a perfluorovinyl ether or a modified PTFE containing a polymerized unit based on a perfluorovinyl ether and a polymerized unit based on a different modifying monomer.

The different modifying monomer in the core preferably includes at least one selected from the group consisting of vinyl heterocyclic compounds and fluoroolefins, more preferably at least one selected from the group consisting of fluoroolefins, still more preferably at least one selected from the group consisting of HFP and CTFE, further more preferably HFP.

The shell in the core-shell structure is preferably constituted by a modified PTFE containing a polymerized unit based on a different modifying monomer and/or a modified PTFE obtainable by polymerization using a chain transfer agent.

The different modifying monomer in the shell preferably includes at least one selected from the group consisting

of fluoroolefins, more preferably at least one selected from the group consisting of HFP and CTFE, still more preferably HFP.

The chain transfer agent may be any agent that can reduce the molecular weight of the modified PTFE constituting the shell. Examples thereof include those containing non-peroxidized organic compounds such as water-soluble alcohols, hydrocarbons, and fluorinated hydrocarbons, water-soluble organic peroxides such as disuccinic peroxide (DSP), and persulfates such as ammonium persulfate (APS) and potassium persulfate (KPS).

The chain transfer agent contains at least one of a non-peroxidized organic compound, a water-soluble organic peroxide, or a persulfate.

The chain transfer agent may contain one or two or more of each of the non-peroxidized organic compound, the water-soluble organic peroxide, and the persulfate.

In terms of good dispersibility and uniformity in the reaction system, the chain transfer agent preferably includes at least one selected from the group consisting of C1-C4 water-soluble alcohols, C1-C4 hydrocarbons, and C1-C4 fluorinated hydrocarbons, more preferably at least one selected from the group consisting of methane, ethane, n-butane, isobutane, methanol, HFC-134a, HFC-32, DSP, APS, and KPS, still more preferably methanol and/or isobutane, particularly preferably methanol.

The other properties of the PTFE fine powder (3) may be the same as those of the PTFE fine powder of the disclosure described above.

Preferably, the PTFE fine powder (3) is substantially free from organic solvents. The expression "substantially free from organic solvents" means that the organic solvent content of the PTFE fine powder is 5% by mass or less.

The organic solvent content is preferably 3% by mass or less, more preferably 1% by mass or less, still more preferably 0.1% by mass or less, further more preferably 0.01% by mass or less, particularly preferably 0.001% by mass or less.

The PTFE fine powder (3) can be suitably produced by, for example, a production method including: (A3) preparing an aqueous dispersion of a modified PTFE; (B3) coagulating the aqueous dispersion to obtain a wet powder of the modified PTFE; and (C3) placing the wet powder in a container with air permeability on the bottom and/or sides and heating the wet powder at a temperature of 130°C to 300°C for two hours or longer to obtain a PTFE fine powder.

The step (A3) is preferably a step of emulsion polymerizing TFE and a perfluorovinyl ether.

The step (A3) preferably includes a step (3) of performing a polymerization reaction by feeding a perfluorovinyl ether to the reaction system at an early stage of the polymerization reaction and a step (4) of introducing a chain transfer agent and/or the perfluorovinyl ether to the reaction system after the step (3). In the steps (3) and (4), a different monomer other than the perfluorovinyl ether may be added in addition to the perfluorovinyl ether.

The perfluorovinyl ether in the step (3) is preferably a PAVE. The PAVE is preferably perfluoromethyl vinyl ether, perfluoroethyl vinyl ether, or PPVE, more preferably PPVE.

Examples of the different modifying monomer used in the step (3) include vinyl heterocyclic compounds such as perfluoro-2,2-dimethyl-1,3-dioxole (PDD); and fluoroolefins such as hexafluoropropylene (HFP) and chlorotrifluoroethylene (CTFE). The different modifying monomer used can include one or two or more of these.

In particular, the different modifying monomer preferably includes at least one selected from the group consisting of fluoroolefins, more preferably at least one selected from the group consisting of HFP and CTFE, still more preferably HFP.

The chain transfer agent in the step (4) may be any agent that can reduce the molecular weight of the modified PTFE constituting the shell of the core-shell structure. Examples thereof include those containing non-peroxidized organic compounds such as water-soluble alcohols, hydrocarbons, and fluorinated hydrocarbons, water-soluble organic peroxides such as disuccinic peroxide (DSP), and persulfates such as ammonium persulfate (APS) and potassium persulfate (KPS).

The chain transfer agent contains at least one of a non-peroxidized organic compound, a water-soluble organic peroxide, or a persulfate.

The chain transfer agent may contain one or two or more of each of the non-peroxidized organic compound, the water-soluble organic peroxide, and the persulfate.

In terms of good dispersibility and uniformity in the reaction system, the chain transfer agent preferably includes at least one selected from the group consisting of C1-C4 water-soluble alcohols, C1-C4 hydrocarbons, and C1-C4 fluorinated hydrocarbons, more preferably at least one selected from the group consisting of methane, ethane, n-butane, isobutane, methanol, HFC-134a, HFC-32, DSP, APS, and KPS, still more preferably methanol and/or isobutane, particularly preferably methanol.

The different modifying monomer in the step (4) preferably includes at least one selected from the group consisting of fluoroolefins, more preferably at least one selected from the group consisting of HFP and CTFE, still more preferably HFP.

Use of the chain transfer agent and the different modifying monomer in combination in the step (4) is also preferred.

When the different modifying monomer used in the step (3) includes CTFE, the different modifying monomer used in the step (4) preferably includes CTFE. When the different modifying monomer used in the step (3) includes HFP, the chain transfer agent used in the step (4) preferably includes methanol (and the different modifying monomer used preferably includes HFP).

The polymerization reaction in the step (3) is preferably performed until the conversion rate of TFE used in the entire emulsion polymerization step including the step (3) and the step (4) reaches 80% or higher, preferably 80% to 97%, more preferably 85% to 95%.

The term "conversion rate" herein refers to a proportion of the amount of TFE having been consumed in the polymerization from the start of the polymerization to a specific point during the polymerization, in the amount of TFE corresponding to the target amount of the TFE unit.

In the step (3) and the step (4), the reaction conditions can be appropriately set in accordance with the type of modifier used, the composition and yield of the target modified PTFE.

The emulsion polymerization can be performed in an aqueous medium in the presence of a fluorine-containing anionic surfactant and a polymerization initiator. A dispersion stabilizer may be used as needed.

The amount of the fluorine-containing anionic surfactant may be set to 0.02 to 0.3% by mass of the aqueous medium.

The polymerization initiator used may be, for example, a persulfate such as ammonium persulfate (APS) or a water-soluble organic peroxide such as disuccinic peroxide (DSP). One of these polymerization initiators or two or more of these polymerization initiators in combination may be used. In particular, preferred are APS and DSP as they also act as the chain transfer agent described above.

In the emulsion polymerization, the polymerization initiator is preferably used in an amount of 0.0001 to 0.02 parts by mass per 100 parts by mass of the aqueous medium.

The aqueous medium used may be the same as that used in the step (A) described above.

The emulsion polymerization can be performed at a polymerization temperature of 10°C to 95°C. In the case of using a persulfate or a water-soluble organic peroxide as a polymerization initiator, the polymerization temperature is preferably 60°C to 90°C.

The emulsion polymerization can be performed typically at 0.5 to 3.9 MPaG, preferably at 0.6 to 3 MPaG.

The emulsion polymerization can be performed at a pressure of 0.5 MPaG or lower at an initial stage of polymerization, specifically, while the conversion rate of TFE is within a range of 15% or lower of the whole, and at a pressure higher than 0.5 MPaG thereafter. Alternatively, the emulsion polymerization can be performed such that the reaction pressure is lowered to, for example, 0.1 MPaG or lower during formation of the core and TFE is again fed to allow the reaction to progress at a predetermined pressure.

The step (B3) can be performed similarly to the step (B) described above.

The step (C3) can be performed similarly to the step (C) described above.

In order to obtain the PTFE fine powder with better paste extrudability, the heat treatment temperature in the step (C3) is preferably 200°C or lower, more preferably 170°C or lower, still more preferably 150°C or lower.

The PTFE fine powder (3) has excellent physical properties that are not inferior in any way to those of conventionally known PTFE fine powders, and can be used in the same manner and for the same applications as conventionally known PTFE fine powders.

The PTFE fine powder (3) is particularly useful as a raw material for molded articles. In a preferred aspect, the disclosure also relates to a molded article containing the PTFE fine powder (3).

The molded article can be obtained by molding the PTFE fine powder (3).

The molding may be performed by any method, typically by paste extrusion.

The paste extrusion can be performed under the conditions appropriately set in accordance with, for example, the desired shape and application of the molded article. For example, the PTFE fine powder (3) is mixed with an extrusion aid, aged for about 1 to 24 hours, premolded at a pressure of 0.5 to 5.0 MPa, and extruded at an extrusion pressure of 2 to 100 MPa, followed by sintering at 360°C to 460°C.

The molded article is suitably used as a product required to have heat resistance and/or chemical resistance, such as a printed board, an electric wire coating, or a tube, in the fields of, for example, aircraft, automobiles, medical equipment, and precision instrument. In particular, the molded article is preferably used as an electric wire coating material required to have core wire adhesion strength or a tube for medical use.

## EXAMPLES

The disclosure is more specifically described hereinbelow with reference to examples, but the disclosure is not limited to these examples.

Various physical properties were measured by the following methods.

Average primary particle size

A PTFE aqueous dispersion is diluted with water to a solid content concentration of 0.15% by mass. The transmittance of 550-nm light relative to the unit length of the resulting diluted latex is measured. The Feret diameters in a transmission electron microscopic image are measured and the number-based length average particle size is determined therefrom. A calibration curve is obtained from these values. Using this calibration curve, the number average particle size is determined from the measured transmittance of 550-nm light incident on each sample, and defined as the average primary particle size.

Apparent density

The apparent density was measured in conformity with JIS K6892.

Average secondary particle size

The average secondary particle size was measured in conformity with JIS K6891.

Standard specific gravity (SSG)

The SSG was determined by the water displacement method in conformity with ASTM D792 using a sample molded in conformity with ASTM D4895.

Amount of modifying monomer

PTFE powder was melted at 370°C, and $^{19}$F-NMR measurement was performed thereon. The amount of PMVE was calculated based on the obtained signals derived from functional groups using the following equation.

PMVE content (% by mass) = (664B/(300A + 364B)) × 100 (A: Total integral value of the $CF_2$ signal appearing at around -120 ppm and the CF signal appearing at around -136 ppm, B: Integral value of the PMVE-derived $CF_3$ signal appearing at around -54 ppm)

The chemical shift value used was obtained with the peak top of the $CF_2$ signal derived from the polymer main chain at -120 ppm.

The VDF content was determined by the following method. $^{19}$F-NMR was performed on PTFE powder. PTFE powder was press-molded into a thin-film disc and the thin-film disc was subjected to FT-IR measurement, so that infrared absorbances were obtained. Based on the infrared absorbances obtained, the ratio (absorbance at 1429 $cm^{-1}$)/(absorbance at 2360 $cm^{-1}$) was determined. Based on the measurement values of the $^{19}$F-NMR and the absorbance ratio, a calibration curve was obtained. The VDF content was calculated from the calibration curve.

PTFE powder was press-molded into a thin-film disc and the thin-film disc was subjected to FT-IR measurement, so that infrared absorbances were obtained. The HFP content was determined by multiplying the ratio (absorbance at 982 $cm^{-1}$)/(absorbance at 935 $cm^{-1}$) by 0.3.

PTFE powder was press-molded into a thin-film disc and the thin-film disc was subjected to FT-IR measurement, so that infrared absorbances were obtained. The CTFE content was determined by multiplying the ratio (absorbance at 957 $cm^{-1}$)/(absorbance at 2360 $cm^{-1}$) by 0.58.

Water content

The mass of the PTFE powder in an amount of about 20 g was weighed before and after heating at 150°C for two hours, and the water content was calculated by the following formula. The sample was taken three times, and this calculation was performed for each sample, and the values were then averaged. This average was taken as the water content.

Water content (% by mass) = [ (mass (g) of PTFE powder before heating) - (mass (g) of PFTE powder after heating) ] / (mass (g) of PFTE fine powder before heating) × 100

Fluorine-containing compound content (1)

To a 1-g portion of each PTFE powder weighed was added 10 g (12.6 mL) of methanol, followed by ultrasonication for 60 minutes, whereby an extract was obtained. The resulting extract was subjected to LC/MS/MS assay. Measurement was performed on fluorine-containing compounds in the extract using a liquid chromatograph-mass spectrometer (Waters, LC-MS ACQUITY UPLC/TQD). Table 1 shows the instrument configuration and LC-MS measurement conditions. Aqueous solutions having five or more different levels of fluorine-containing compound concentrations were prepared using an aqueous solution of a fluorine-containing compound with a known concentration, and LC/MS analysis was performed on the aqueous solutions containing varied amounts of the fluorine-containing compound. The relation between the amount and the area relative to the amount was plotted, and a calibration curve was drawn. Based on the resulting calibration curve, the area of the fluorine-containing compound in the extract in the LC/MS chromatogram was converted to the amount of the fluorine-containing compound.

The lower detection limit in this measurement method is 10 ppb by mass.

[Table 1]

| | | | |
|---|---|---|---|
| LC system | | | |
| Device | Acquity UPLC from Waters | | |
| Column | Acquity UPLC BEH C18 1.7 μm (2.1 × 50 mm) from Waters | | |
| Mobile phase | A $CH_3CN$ | | |
| | B 20 mM $CH_3COONH_4/H_2O$ | | |
| | | 0 → 1.5 min | AB = 10:90 |
| | | 1.5 → 8.5 min | AB = 10:90 → AB = 90:10 Linear gradient |
| | | 8.5 → 0 min | AB = 90:10 |
| Flow rate | | 0.4 mL/min | |
| Column temperature | 40°C | | |
| Sample injection amount | 5 μL | | |
| MS system | | | |
| Device | TQ Detecter | | |
| Measurement mode | MRM (Multiple Reaction Monitoring) | | |
| | Electrospray ionization | | |
| Ionization method | Negative mode | | |

Fluorine-containing compound content (2)

The amount of the fluorine-containing compound contained in the PTFE powder is determined as the amount of the fluorine-containing compound extracted from the powder.

<Extraction of fluorine-containing compound content from PTFE powder>

To a 1-g portion of PTFE powder was added 10 g (12.6 mL) of methanol, followed by ultrasonication at 60°C for two hours, standing at room temperature, and subsequent removal of solids, whereby an extract was obtained.

<Determination of perfluoroether carboxylic acids A and C>

1. Calibration curves for perfluoroether carboxylic acids A and C

Methanol standard solutions having five different known levels of each of perfluoroether carboxylic acids A and C were prepared, and analyzed using a liquid chromatograph mass spectrometer (Agilent, Ultivo triple quadrupole LC-MS). By first order approximation based on the methanol standard solution concentrations and the peak integral values in each concentration range, a calibration curve was created.

Instrument configuration and LC-MS measurement conditions

[Table 2]

| | | | |
|---|---|---|---|
| LC system | | | |
| Device | 1290 Infinity II from Agilent | | |
| Column | Zorbax RRHD Extend-C18 1.8 μm (2.1 × 50 mm) from Agilent | | |
| Mobile phase | A $CH_3CN$ | | |
| | B 20 mM $CH_3COONH_4/H_2O$ | | |
| | | 0 → 3 min | A:B = 60:40 |
| Flow rate | 0.3 mL/min | | |
| Column temperature | 40°C | | |
| Sample injection amount | 1 pL | | |
| MS system | | | |
| Device | Ultivo LC/TQ from Agilent | | |
| Measurement mode | MRM (Multiple Reaction Monitoring) | | |
| Ionization method | Electrospray ionization | | |
| | Negative mode | | |

MRM measurement parameter

[Table 3]

| Compound | Precursor | Product |
|---|---|---|
| Perfluoroether carboxylic acid A | 329 | 285 |
| Perfluoroether carboxylic acid C | 395 | 351 |

2. Amounts of perfluoroether carboxylic acids A and C in PTFE powder

The amounts of perfluoroether carboxylic acids A and C in the extracts were determined from calibration curves obtained using a liquid chromatograph-mass spectrometer. The amount of perfluoroether carboxylic acid A in PTFE powder was determined using the following relational expression (1).

$$Y_A = X_A \times 12.6 \quad (1)$$

$Y_A$: Amount of perfluoroether carboxylic acid A in powder (ppb by mass)
$X_A$: Amount of perfluoroether carboxylic acid A in extract (ng/mL)

The amount of perfluoroether carboxylic acid C in PTFE powder was determined using the following relational expression (2).

$$Y_C = X_C \times 12.6 \quad (2)$$

$Y_C$: Amount of perfluoroether carboxylic acid C in powder (ppb by mass)
$X_C$: Amount of perfluoroether carboxylic acid C in extract (ng/mL)

The lower limit of quantification for the amounts of perfluoroether carboxylic acids A and C in PTFE powder is 1 ppb by mass.

<Amount of compound represented by the formula (2)>

The amount of the compound represented by the formula (2) was determined using a calibration curve for a linear perfluorocarboxylic acid having the same carbon number.

1. Calibration curve for perfluoro carboxylic acid

Methanol standard solutions having five different known levels of each of perfluorononanoic acid, perfluorodecanoic acid, perfluoroundecanoic acid, perfluorododecanoic acid, perfluorotridecanoic acid, and perfluorotetradecanoic acid were prepared, and analyzed using a liquid chromatograph mass spectrometer (Agilent, Ultivo triple quadrupole LC-MS). By first order approximation based on the methanol standard solution concentrations and the peak integral values in each concentration range, a calibration curve was created.

Instrument configuration and LC-MS measurement conditions

[Table 4]

| LC system | | | |
|---|---|---|---|
| Device | 1290 Infinity II from Agilent | | |
| Column | Zorbax RRHD Extend-C18 1.8 μm (2.1 × 50 mm) from Agilent | | |
| Mobile phase | A $CH_3CN$ | | |
| | B 20 mM $CH_3COONH_4/H_2O$ | | |
| | | 0 → 1 min | A:B = 10:90 |
| | | 1 → 6 min | A:B = 10:90 → A:B = 95:5 Linear gradient |
| | | 6 → 12 min | AB = 95:5 |
| Flow rate | 0.3 mL/min | | |
| Column temperature | 40°C | | |
| Sample injection amount | 1 μL | | |
| **MS system** | | | |
| Device | Ultivo LC/TQ from Agilent | | |
| Measurement mode | MRM (Multiple Reaction Monitoring) | | |
| Ionization method | Electrospray ionization<br>Negative mode | | |

MRM measurement parameter

[Table 5]

| Compound | Carbon number | Precursor | Product |
|---|---|---|---|
| Perfluorononanoic acid | 9 | 463 | 419 |
| Perfluorodecanoic acid | 10 | 513 | 469 |
| Perfluoroundecanoic acid | 11 | 563 | 519 |
| Perfluorododecanoic acid | 12 | 613 | 569 |
| Perfluorotridecanoic acid | 13 | 663 | 619 |
| Perfluorotetradecanoic acid | 14 | 713 | 669 |

2. Amount of compound represented by the formula (2) in powder

The amount of the compound represented by the formula (2) with a carbon number of n in the extract was determined from a calibration curve obtained using a liquid chromatograph-mass spectrometer. The amount of the compound represented by the formula (2) with a carbon number of n in the powder was determined using the following relational expression (3).

$$Yn = Xn \times 12.6 \quad (3)$$

Yn: Amount of the compound represented by the formula (2) with a carbon number of n in the powder (ppb by mass)
Xn: Amount of the compound represented by the formula (2) with a carbon number of n in the extract (ng/mL)

The lower limit of quantification of the amount of the compound represented by the formula (2) with a carbon number of n in the powder is 1 ppb by mass.

MRM measurement parameter

[Table 6]

| Compound | Carbon number | Precursor | Product |
|---|---|---|---|
| $[C_8F_{17}COO^-]M^+$ | 9 | 463 | 419 |
| $[C_9F_{19}COO^-]M^+$ | 10 | 513 | 469 |
| $[C_{10}F_{21}COO^-]M^+$ | 11 | 563 | 519 |
| $[C_{11}F_{23}COO^-]M^+$ | 12 | 613 | 569 |
| $[C_{12}F_{25}COO^-]M^+$ | 13 | 663 | 619 |
| $[C_{13}F_{27}COO^-]M^+$ | 14 | 713 | 669 |

Extrusion pressure at reduction ratio of 100 (RR100 extrusion pressure)

To 100 g of PTFE powder was added 21.7 g of lubricant (trade name: Isopar H (registered trademark), ExxonMobil Corp.), followed by mixing at room temperature for three minutes, whereby a PTFE fine powder mixture was obtained. Next, the resulting PTFE fine powder mixture was left to stand for at least one hour at room temperature (25°C) before extrusion, and paste-extruded through an orifice (diameter: 2.5 mm, land length: 11 mm, introduction angle: 30°) at room temperature at a reduction ratio of 100:1, whereby uniform beadings (extrudates) were obtained. The extrusion speed, i.e., ram speed was set to 20 inches/min (51 cm/min). The load at which the pressure was in equilibrium in the paste extrusion was measured, and the obtained value was divided by the cylinder cross-sectional area used in the paste extrusion. The resulting value was defined as the extrusion pressure (MPa).

Extrusion pressure at reduction ratio of 1500 (RR1500 extrusion pressure)

Fifty grams of PTFE powder and 10.25 g of hydrocarbon oil (trade name: Isopar G, available from ExxonMobil Corporation) as an extrusion aid were mixed in a glass bottle, and aged at room temperature (25 ± 2°C) for one hour. An extrusion die (having an orifice (orifice diameter: 0.65 mm, orifice length: 2 mm) with a squeezing angle of 30 degrees, at its lower end) with a cylinder (inner diameter: 25.4 mm) was filled with the resulting mixture. A load of 1.2 MPa was applied to a piston inserted into the cylinder and maintained for one minute. Immediately thereafter, the mixture was extruded from the orifice at a ram speed of 20 mm/min at room temperature, whereby a rod-like material was obtained. The value obtained by dividing the pressure at a portion where the pressure is in equilibrium in the latter half of the extrusion by the cylinder cross-sectional area was defined as the extrusion pressure.

When the extrusion pressure did not reach equilibrium, such PTFE fine powder was determined to be not extrudable.

Coefficient of variation of extrusion pressure

The load at which the pressure was in equilibrium in the paste extrusion was measured in the above measurement of the extrusion pressure. Based on the average and standard deviation of the load at equilibrium, the coefficient of variation of the extrusion pressure was determined.

(Coefficient of variation of extrusion pressure) = (Standard deviation of load) / (Average of load)

Expansion test

A beading obtained by the above paste extrusion was heated at 230°C for 30 minutes, whereby the lubricant was removed from the beading. The beading (extrudate) was cut to an appropriate length and the resulting sample was clamped at each end with a gap between the clamps of 2.0 inches (51 mm), followed by heating to 300°C in an air-circulating furnace. The clamps were then moved apart at a desired speed (expansion speed) until the separation distance corresponded to the desired degree of expansion (total degree of expansion), whereby an expansion test was performed. The expansion method is essentially in conformity with the method disclosed in US 4576869 B, except that the extrusion speed is different (51 cm/min, not 84 cm/min). The "degree of expansion" shows the increase in length attributable to expansion, and is typically expressed in relation to the original length. In the above production method, the expansion speed is 100%/sec and the total degree of expansion is 2400%.

Tensile strength at break (tensile strength at break measured using an expanded beading obtained in an expansion test at a total degree of expansion of 2400%)

An expanded beading (article produced by expanding a beading) obtained in the above expansion test was clamped between movable jaws with a gauge length of 5.0 cm to be fixed, and subjected to a tensile test at 25°C at a rate of 300 mm/min. The strength at break was measured as the tensile strength at break.

Evaluation on expanded film

(Production of biaxially expanded film and filter material)

To 100 parts by mass of PTFE powder was added 28 parts by mass of hydrocarbon oil ("IP solvent 2028" available from Idemitsu Kosan Co., Ltd.) as an extrusion aid, followed by mixing. The resulting mixture was extruded through a paste extruder into a sheet-shaped molded article. The tip of the paste extruder was equipped with a sheet die having a rectangular orifice with dimensions of 2 mm in the width direction × 150 mm in the longitudinal direction. The resulting sheet-like molded article was molded into a film shape using a calender roll heated to 70°C, whereby a non-sintered film containing the aid was obtained.

This non-sintered film containing the aid was passed through a hot-air drying furnace at 250°C so that the extrusion aid was evaporated, whereby a non-sintered film having an average thickness of 200 um was obtained. The non-sintered film was expanded in the longitudinal direction at an expansion ratio of 10 times, whereby a uniaxially expanded film was obtained. The expanding temperature was 250°C. The uniaxially expanded film (longitudinally expanded film) was expanded in the width direction at an expansion ratio of 43 times using a tenter capable of continuous clipping, whereby a biaxially expanded film was obtained. The resulting biaxially expanded film was heat-set, whereby a PTFE porous film was obtained. At this time, the expanding temperature was 290°C, the heat-setting temperature was 345°C, and the expanding rate was 330%/sec.

Next, spunbond nonwoven fabrics ("ELEVES T0303WDO" available from Unitika Ltd.) formed of core-in-sheath fibers with a PTE core and a PE sheath was provided as air-permeable supports. The spunbond nonwoven fabrics were thermally bonded to sandwich the resulting multilayer porous film using a laminator, whereby a trilayer filter material was obtained.

(Extrusion pressure upon molding)

The extrusion pressure upon molding was determined from the paste extruder used in paste extrusion for the production of the biaxially expanded film. The load (N) at which the pressure was in equilibrium in the paste extrusion was measured, and the obtained value was divided by the cylinder cross-sectional area used in the paste extrusion. The resulting value was defined as the extrusion pressure (MPa).

(Appearance of non-sintered film)

A non-sintered film with tears or holes was evaluated as Bad, and a uniform film was evaluated as Good. Even if the film was uniform, the film was evaluated as No Good when loss of clarity (phenomenon of non-uniform aid concentration) occurred at one location per 10 m in the non-sintered film containing the aid before drying.

(Appearance of PTFE porous film)

The appearance of the PTFE porous film obtained in the production of the biaxially expanded film was visually checked.

A PTFE porous film with at least one thin part of 100 × 100 mm or more per 100 m were evaluated as No Good. A PTFE porous film with at least one rupture or through-hole per 100 m were evaluated as Bad. A uniform film was evaluated as Good.

(Film thickness)

Five porous films were stacked, and the total thickness was measured using a thickness meter (1D-110MH type, available from Mitutoyo Corporation). The value obtained by dividing the total thickness value by 5 was defined as the thickness of one porous film. The thickness means the thickness of one entire porous film (average thickness).

Evaluation on filter material

(Pressure loss)

A section of about 5 m, including the tip portion, was pulled out from a rolled long filter material. The resulting filter material was divided at every 200 mm in the longitudinal direction into 25 sections and at every 130 mm in the width direction, excluding the both ends, into 4 sections. The pressure loss was measured for the resulting grid-like 100 sections. The pressure loss herein was measured using a measuring device equipped with five or more filter holders in the width direction of the filter material. The measurement was performed continuously for multiple grid sections while the filter material was moved in the longitudinal direction.

The resulting measurement sample of the filter material was set on the filter holders (diameter: 100 mm). A pressure was applied to the inlet side using a compressor, and the flow rate of the air permeating through the filter material was adjusted to 5.3 cm/sec using a flow meter. The pressure loss in such a condition was measured using a manometer.

(Coefficient of variation of pressure loss)

A standard deviation was determined from the pressure loss distribution of the above-measured pressure losses, and the coefficient of pressure loss was calculated by dividing the determined standard deviation by the average of the pressure losses at all measured sections.

(Coefficient of variation of pressure loss) = (Standard deviation of pressure losses) / (Average of pressure losses) × 100 (%)

(Collection efficiency)

NaCl particles were generated using an atomizer in conformity with the method described in the NaCl aerosol generating method (pressurized spray method) of JIS B9928, Appendix 5 (Provisions). The NaCl particles were classified to particles with a particle size of 0.1 um using an electrostatic classifier (available from TSI Inc.), followed by neutralization of particle charging using americium 241. With the flow rate through the filter material adjusted to 5.3 cm/sec, the numbers of particles before and after passing the filter material, the measurement sample, were determined using a particle counter (CNC, available from TSI Inc.), and the collection efficiency was calculated using the following equation.

$$\text{Collection efficiency} = (CO/CI) \times 100$$

CO = number of 0.1-μm. NaCl particles collected on the measurement sample
CI = number of 0.1-pm NaCl particles fed to the measurement sample

Evaluation on coated electric wire

(Production of coated electric wire)

(i) Pre-forming

A 2-kg portion of the resulting PTFE powder was mixed with 17% by mass (410 g) of an extrusion aid (Isoper H), followed by aging at room temperature for 12 hours. The resulting mixture was passed through a SUS metal mesh (mesh No. 10) and pre-formed in a pre-former (available from Tabata Industrial Machinery Co., Ltd.) at a ram speed of 100 mm/min, a pressure of 3 MPa, in an environment at room temperature for 30 minutes, whereby a pre-formed article was obtained.

(ii) Paste extrusion

As a core wire, a nickel-plated copper wire with an outer diameter of 1.024 mm (AWG 18) was provided. The resulting pre-formed article and the core wire was extruded through a wire coating machine (available from Tabata Industrial Machinery Co., Ltd.) for producing an electric wire (φ 50 mm) at a ram speed of 33 mm/min and a core wire speed of 23 m/min.

(iii) Drying and sintering

The resulting extrudate was passed through a capstan set at 160°C, and sequentially passed through drying furnaces with graduated temperature settings of 200°C, 220°C, and 250°C for drying. The resulting workpiece was further passed through sintering furnaces with graduated temperature setting from 250°C to 460°C at 23 m/min, followed by cooling, whereby a coated electric wire with a coating layer thickness of 0.36 mm was obtained.

(Extrusion pressure upon coating of electric wire)

The load at which the extrusion pressure was in equilibrium in the extrusion in (ii) was measured, and the obtained value was divided by the cylinder cross-sectional area used in the coating of an electric wire. The resulting value was defined as the extrusion pressure.

(Variation in wire diameter)

The coated electric wire obtained when the extrusion pressure was in equilibrium in the extrusion in (ii) was passed through an outer diameter measuring device (available from Keyence Corporation). Based on the average and standard deviation of the measurements of the outer diameter, the variation in the wire diameter was calculated using the following equation.
Variation in wire diameter = (Standard deviation of outer diameter/Average of outer diameter) × 100 (%)

(Spark test)

The coated wire obtained after (iii) Drying and sintering was passed through a high-frequency spark tester (available from Clinton Instrument Company), and the number of sparks under the conditions of an applied voltage of 5 kV.

(Self-wound heat resistance)

The self-wound heat resistance test was performed in conformity with the self-wound heat resistance described in WO 2006-054612 A.
The presence of cracks formed in the wound portion of the coated electric wire was visually observed.
The electric wire with cracks formed was evaluated as Bad and the electric wire with no cracks formed was evaluated as Good.
The following fluorine-containing surfactant having a molecular weight of 1000 or less were provided.
Perfluoroether carboxylic acid A ammonium salt: Ammonium perfluoro(2-methyl-3-oxahexanoate) available from Fujifilm Wako Pure Chemical Corporation, structural formula: $CF_3CF_2CF_2OCF(CF_3)COONH_4$

Perfluoroether carboxylic acid B ammonium salt: Perfluoroether carboxylic acid B purchased from Apollo Scientific Ltd was made into ammonium salt. Ammonium perfluoro-3,6-dioxaoctanoate, structural formula: $CF_3CF_2OCF_2CF_2OCF_2COONH_4$

Perfluoroether caboxylic acid C ammonium salt: Ammonium 2,3,3,3-tetrafluoro-2-[1,1,2,3,3,3-hexafluoro-2-(trifluoromethyl)propoxy]-propionate, structural formula: $CF_3OCF(CF_3)CF_2OCF(CF_3)COONH_4$

The following hydrophilic monomer was provided.

Hydrophilic monomer D: Ammonium 2,3,3,3-tetrafluoro-2-[(1,1,2-trifluoro-2-propenyl)oxy]-propanoate, structural formula: $CH_2=CFCF_2OCF(CF_3)COONH_4$

Production Example 1

A 6-L stainless-steel autoclave equipped with a stainless-steel stirring blade and a temperature-controlling jacket was charged with 3480 g of deionized water, 100 g of paraffin wax, 15.75 g of the perfluoroether carboxylic acid A ammonium salt, and 35 mg of the hydrophilic monomer D. The inside of the autoclave was purged with nitrogen gas with warming to 70°C to remove oxygen. TFE was injected to set the pressure inside the system to 0.78 MPaG and the temperature inside the system was maintained at 70°C under stirring. Next, an aqueous solution prepared by dissolving 14.0 mg of ammonium persulfate in 20 g of water was injected with TFE, whereby a polymerization reaction was started. The pressure inside the system dropped as the polymerization reaction progressed. TFE was thus added so that the temperature inside the system was maintained at 70°C and the pressure inside the system was maintained at 0.78 MPaG.

When 433 g of TFE had been consumed from the start of the polymerization, an aqueous solution prepared by dissolving 17.0 mg of hydroquinone serving as a radical scavenger in 20 g of water was injected with TFE. The polymerization was further continued. When the amount of TFE polymerized reached 1273 g from the start of the polymerization, stirring and feeding of TFE were stopped. Immediately thereafter, the gas inside the system was released to normal pressure and the polymerization reaction was terminated. The resulting aqueous dispersion was taken out and cooled, and the paraffin wax was separated, whereby a PTFE aqueous dispersion A was obtained. The average primary particle size of the resulting PTFE aqueous dispersion A was 295 nm, and the solid content concentration was 26.5% by mass.

Comparative Example 1

The PTFE aqueous dispersion A obtained in Production Example 1 was diluted to a solid content concentration of 13% by mass. The PTFE was coagulated with stirring in the container, and water was filtered out, whereby a wet powder was obtained. The water content of the wet powder was approximately 40% by mass.

The resulting PTFE wet powder was placed in a stainless-steel flat tray (tray with no air permeability on the bottom and sides: the same applies hereafter) (amount: 2.0 g/$cm^2$), and the flat tray was heated in a hot air circulating electric furnace at 180°C. After five hours, the flat tray was taken out and air-cooled, whereby a PTFE powder was obtained.

Comparative Example 2

A PTFE powder was obtained as in Comparative Example 1, except that the heat treatment time was changed from 5 hours to 20 hours.

Comparative Example 3

A PTFE powder was obtained as in Comparative Example 1, except that the heat treatment temperature was changed from 180°C to 250°C.

Production Example 2

A 6-L stainless-steel autoclave equipped with a stainless-steel stirring blade and a temperature-controlling jacket was charged with 3600 g of deionized water, 180 g of paraffin wax, 5.4 g of the perfluoroether carboxylic acid B ammonium salt, 0.108 g of succinig acid, and 0.0252 g of oxalic acid. The inside of the polymerization tank was purged with nitrogen gas with warming to 70°C to remove oxygen. The temperature inside the tank was maintained at 70°C with stirring, and then TFE gas was introduced thereinto to set the pressure to 2.7 MPaG.

Deionized water containing 3.5 mg of potassium permanganate dissolved therein was continuously added to the tank at a constant rate with the contents being stirred. TFE was continuously fed so that the pressure inside the polymerization tank was constant at 2.7 MPaG. When the amount of TFE consumed reached 184 g, 3.8 g of the perfluoroether carboxylic acid B ammonium salt was added. When the amount of TFE consumed reached 900 g, addition

of the entire amount of the deionized water containing 3.5 mg of the potassium permanganate dissolved therein was completed. When the amount of TFE consumed reached 1543 g, stirring and feeding of TFE were stopped. The TFE in the polymerization tank was purged, and the polymerization reaction was terminated. The resulting aqueous dispersion was taken out and cooled, and the paraffin wax was separated, whereby a PTFE aqueous dispersion B was obtained. The average primary particle size of the resulting PTFE aqueous dispersion B was 310 nm, and the solid content concentration was 30.6% by mass.

Comparative Example 4

The PTFE aqueous dispersion B obtained in Production Example 2 was diluted to a solid content concentration of 13% by mass. To the dilution was added nitric acid as a coagulant with stirring in the container so that PTFE was coagulated, and water was filtered out, whereby a wet powder was obtained. The water content of the wet powder was approximately 40% by mass.

The resulting PTFE wet powder was placed in a stainless-steel flat tray (amount: 2.0 g/$cm^2$), and the flat tray was heated in a hot air circulating electric furnace at 210°C. After 18 hours, the flat tray was taken out and air-cooled, whereby a PTFE powder was obtained.

Production Example 3

A 6-L stainless-steel autoclave equipped with a stainless-steel stirring blade and a temperature-controlling jacket was charged with 3560 g of deionized water, 104 g of paraffin wax, 5.4 g of the perfluoroether carboxylic acid C ammonium salt, and 35 mg of the hydrophilic monomer D. The inside of the autoclave was purged with nitrogen gas with warming to 70°C to remove oxygen. TFE was injected to set the pressure inside the system to 0.60 MPaG and the temperature inside the system was maintained at 70°C under stirring. Next, 0.60 g of perfluoro(methyl vinyl ether) (PMVE) was injected with TFE. Subsequently, an aqueous solution prepared by dissolving 15 mg of ammonium persulfate in 20 g of deionized water was injected with TFE to set the pressure inside the system to 0.78 MPaG, and the polymerization reaction was started. The pressure inside the system dropped as the polymerization reaction progressed. TFE was thus added so that the temperature inside the system was maintained at 70°C and the pressure inside the system was maintained at 0.78 MPaG.

When 429 g of TFE had been consumed from the start of the polymerization, an aqueous solution prepared by dissolving 14 mg of hydroquinone serving as a radical scavenger in 20 g of deionized water was injected with TFE. The polymerization was further continued. When the amount of TFE polymerized reached 1225 g from the start of the polymerization, stirring and feeding of TFE were stopped. Immediately thereafter, the gas inside the system was released to normal pressure and the polymerization reaction was terminated. The resulting aqueous dispersion was taken out and cooled, and the paraffin wax was separated, whereby a PTFE aqueous dispersion C was obtained. The average primary particle size of the resulting PTFE aqueous dispersion C was 234 nm, and the solid content concentration was 25.4% by mass.

Comparative Example 5

The PTFE aqueous dispersion C obtained in Production Example 3 was diluted to a solid content concentration of 13% by mass. To the dilution was added nitric acid as a coagulant with stirring in the container so that PTFE was coagulated, and water was filtered out, whereby a wet powder was obtained. The water content of the wet powder was approximately 40% by mass.

The resulting PTFE wet powder was placed in a stainless-steel flat tray (amount: 2.0 g/$cm^2$), and the flat tray was heated in a hot air circulating electric furnace at 210°C. After five hours, the flat tray was taken out and air-cooled, whereby a PTFE powder was obtained.

Comparative Example 6

A PTFE powder was obtained as in Comparative Example 1, except that the stainless-steel flat tray was replaced with a stainless-steel mesh tray and that the heat treatment at 180°C for five hours was changed to the heat treatment at 200°C for one hour.

Example 1

A PTFE powder was obtained as in Comparative Example 1, except that the stainless-steel flat tray was replaced with a stainless-steel mesh tray.

The SSG of the PTFE powder obtained was 2.158.

Example 2

A PTFE powder was obtained as in Example 1, except that the heat treatment time was changed from 5 hours to 20 hours.

Example 3

A PTFE powder was obtained as in Comparative Example 4, except that the stainless-steel flat tray was replaced with a stainless-steel mesh tray and that the heat treatment at 210°C for 18 hours was changed to the heat treatment at 180°C for 5 hours.
The SSG of the PTFE powder obtained was 2.153.

Example 4

A PTFE powder was obtained as in Comparative Example 5, except that the stainless-steel flat tray was replaced with a stainless-steel mesh tray and that the heat treatment at 210°C for 18 hours was changed to the heat treatment at 180°C for 20 hours.
The PMVE content of the resulting PTFE powder was 0.046% by mass and the SSG was 2.145.
The physical properties of each PTFE powder (PTFE fine powder) obtained above were measured by the above methods. The results are shown in Tables 7 to 11.

[Table 7]

| | | Comparative Example 1 | Comparative Example 2 | Comparative Example 3 | Comparative Example 4 | Comparative Example 5 | Comparative Example 6 |
|---|---|---|---|---|---|---|---|
| PTFE aqueous dispersion | | Production Example 1 | Production Example 1 | Production Example 1 | Production Example 2 | Production Example 3 | Production Example 1 |
| Container | | Flat tray | Flat tray | Flat tray | Flat tray | Flat tray | Mesh tray |
| Heat treatment temperature | °C | 180 | 180 | 250 | 210 | 210 | 200 |
| Heat treatment time | hr | 5 | 20 | 5 | 18 | 18 | 1 |
| Water content | % by mass | 0.126 | 0.016 | 0.023 | 0.012 | 0.012 | 0.293 |

[Table 8]

| | | Example 1 | Example 2 | Example 3 | Example 4 |
|---|---|---|---|---|---|
| PTFE aqueous dispersion | | Production Example 1 | Production Example 1 | Production Example 2 | Production Example 3 |
| Container | | Mesh tray | Mesh tray | Mesh tray | Mesh tray |
| Heat treatment temperature | °C | 180 | 180 | 180 | 180 |
| Heat treatment time | hr | 5 | 20 | 5 | 20 |
| Water content | % by mass | 0.005 | 0.000 | 0.004 | 0.000 |

The results in Tables 7 and 8 show that use of a flat tray results in the water content exceeding 0.010% by

mass. The results also show that the water content is high when the heat treatment time is as short as one hour even with use of a mesh tray.

In contrast, use of a mesh tray results in the water content as low as 0.005% by mass even when the heat treatment time is the same as that in the case of using a flat tray.

[Table 9]

| Fluorine-containing compound content (1) | | Com parative Example 1 | Com parative Example 2 | Com parative Example 3 | Com parative Example 4 | Com parative Example 5 | Com parative Example 6 |
|---|---|---|---|---|---|---|---|
| Perfluoroether carboxylic acid A | ppb by mass | $4.8 \times 10^4$ | < 10 | $1.0 \times 10^4$ | < 10 | < 10 | $1.0 \times 10^5$ |
| Perfluoroether carboxylic acid B | ppb by mass | < 10 | < 10 | < 10 | < 10 | < 10 | < 10 |
| Perfluoroether carboxylic acid C | ppb by mass | < 10 | < 10 | < 10 | < 10 | < 10 | < 10 |

[Table 10]

| Fluorine-containing compound content (1) | | Example 1 | Example 2 | Example 3 | Example 4 |
|---|---|---|---|---|---|
| Perfluoroether carboxylic acid A | ppb by mass | 10 | < 10 | < 10 | < 10 |
| Perfluoroether carboxylic acid B | ppb by mass | < 10 | < 10 | 10 | < 10 |
| Perfluoroether carboxylic acid C | ppb by mass | < 10 | < 10 | < 10 | < 10 |

[Table 11]

| | | | Comparative Example 1 |
|---|---|---|---|
| Physical properties of PTFE powder | | | |
| | RR100 extrusion pressure | MPa | 7.8 |
| | Coefficient of variation of extrusion pressure | - | 0.026 |
| | Tensile strength at break | N | 11.1 |
| Evaluation on expanded film | | | |
| | Extrusion pressure upon molding | MPa | 4.6 |
| | Appearance of non-sintered film | - | Bad |

Molding of the PTFE powder obtained in Comparative Example 1 resulted in a non-sintered film with holes, and a uniaxially expanded film and a biaxially expanded film could not be obtained.

No fluorine-containing compound represented by any of the following formulas was detected from the PTFE powders obtained in Examples 1 to 4 or the amount thereof was 10 ppb by mass or less:

$F(CF_2)_7COOH$,
$F(CF_2)_5COOH$,
$H(CF_2)_6COOH$,
$H(CF_2)_7COOH$,
$CF_3O(CF_2)_3OCHFCF_2COOH$,
$C_3F_7OCF(CF_3)CF_2OCF(CF_3)COOH$,
$CF_3CF_2CF_2OCF(CF_3)COOH$ (perfluoroether carboxylic acid A),
$CF_3CF_2OCF_2CF_2OCF_2COOH$ (perfluoroether carboxylic acid B),
$C_2F_5OCF(CF_3)CF_2OCF(CF_3)COOH$,
$CF_3OCF(CF_3)CF_2OCF(CF_3)COOH$ (perfluoroether carboxylic acid C),
$CF_2ClCF_2CF_2OCF(CF_3)CF_2OCF_2COOH$,

$CF_2ClCF_2CF_2OCF_2CF(CF_3)OCF_2COOH$,
$CF_2ClCF(CF_3)OCF(CF_3)CF_2OCF_2COOH$,
$CF_2ClCF(CF_3)OCF_2CF(CF_3)OCF_2COOH$, and

[Chem. 11]

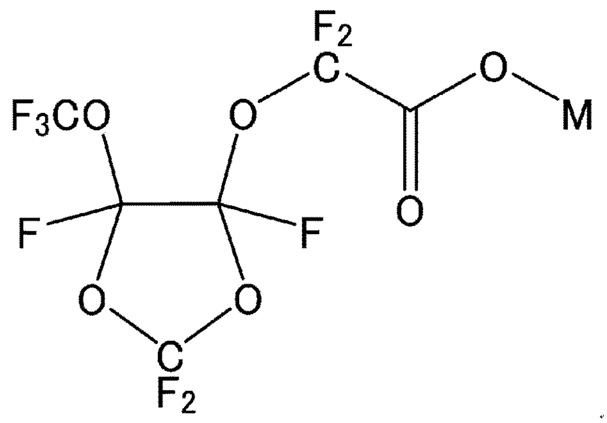

wherein M is H.

Production Example 4

A 6-L SUS reactor equipped with a stirrer was charged with 3600 g of deionized water, 180 g of paraffin wax, 5.4 g of the perfluoroether carboxylic acid C ammonium salt, and 26.5 mg of oxalic acid. Next, the contents of the reactor were heated to 70°C while being suctioned and the reactor was simultaneously purged with tetrafluoroethylene (TFE) to remove oxygen in the reactor, and the contents were stirred. To the reactor was injected 2.60 g of chlorotrifluoroethylene (CTFE) with TFE, followed by further addition of TFE to set the pressure to 2.70 MPaG. A potassium permanganate aqueous solution containing 3.4 mg of potassium permanganate dissolved in deionized water was continuously added to the reactor as an initiator. After injection of the initiator, the pressure dropped and the onset of polymerization was observed. TFE was added to the reactor so that the pressure was constant at 2.70 MPaG. When the amount of TFE fed reached 430 g, feeding of the potassium permanganate aqueous solution was stopped. When the amount of TFE fed reached 1660 g, feeding of TFE was stopped, stirring was stopped, and the reaction was terminated. Thereafter, the reactor was evacuated to return the pressure in the reactor to normal pressure, followed by nitrogen purge. The contents were taken out from the reactor and cooled. The paraffin wax was removed, whereby a PTFE aqueous dispersion was obtained. The solid content concentration of the resulting PTFE aqueous dispersion was 31.4% by mass, and the average primary particle size was 248 nm.

Example 5

The PTFE aqueous dispersion obtained in Production Example 4 was diluted to a solid content concentration of 13% by mass. The dilution was stirred vigorously in a container equipped with a stirrer for coagulation, and water was filtered out, whereby a wet powder was obtained. The water content of the wet powder was approximately 40% by mass.

The resulting wet powder was placed in a stainless-steel mesh tray (amount: 2.0 g/$cm^2$), and the mesh tray was heated in a hot air circulating electric furnace at 210°C. After 18 hours, the mesh tray was taken out and air-cooled, whereby a PTFE powder was obtained. The resulting PTFE powder had a SSG of 2.150 and a CTFE content of 0.100% by mass. Various physical properties of the resulting PTFE powder were measured. The results are shown in Table 12.

Production Example 5

A PTFE aqueous dispersion was obtained by polymerization under the same conditions as in Production Example 4, except that the amount of CTFE fed was changed to 1.28 g, the amount of potassium permanganate fed was changed to 3.87 mg, and the final amount of TFE fed was changed to 1790 g. The solid content concentration of the resulting PTFE aqueous dispersion was 33.0% by mass, and the average primary particle size was 263 nm.

Example 6

A wet powder was obtained as in Example 5 using the PTFE aqueous dispersion obtained in Production Example 5. The water content of the wet powder was approximately 40% by mass. The resulting wet powder was placed in a stainless-steel mesh tray (amount: 2.0 g/$cm^2$), and a PTFE powder was obtained as in Example 5. The resulting PTFE powder had a SSG of 2.150 and a CTFE content of 0.050% by mass. Various physical properties of the resulting PTFE powder were measured. The results are shown in Table 12.

Production Example 6

A 6-L stainless-steel autoclave equipped with a stainless-steel stirring blade and a temperature-controlling jacket was charged with 3580 g of deionized water, 100 g of paraffin wax, and 5.4 g of the perfluoroether carboxylic acid C ammonium salt. The inside of the autoclave was purged with nitrogen gas with warming to 70°C to remove oxygen. After 0.50 g of HFP was injected with TFE, TFE was injected to set the pressure inside the system to 0.78 MPaG and the temperature inside the system was maintained at 70°C under stirring. Next, an aqueous solution prepared by dissolving 15.4 mg of ammonium persulfate in 20 g of water was injected with TFE, whereby a polymerization reaction was started. The pressure inside the system dropped as the polymerization reaction progressed. TFE was thus added so that the temperature inside the system was maintained at 70°C and the pressure inside the system was maintained at 0.78 MPaG.

When 430 g of TFE had been consumed from the start of the polymerization, an aqueous solution prepared by dissolving 18.0 mg of hydroquinone serving as a radical scavenger in 20 g of water was injected with TFE. The polymerization was further continued. When the amount of TFE polymerized reached 1540 g from the start of the polymerization, stirring and feeding of TFE were stopped. Immediately thereafter, the gas inside the system was released to normal pressure and the polymerization reaction was terminated. The resulting aqueous dispersion was taken out and cooled, and the paraffin wax was separated, whereby a PTFE aqueous dispersion was obtained. The solid content concentration of the resulting PTFE aqueous dispersion was 29.6% by mass, and the average primary particle size was 246 nm.

Example 7

The PTFE aqueous dispersion obtained in Production Example 6 was diluted to a solid content concentration of 13% by mass. The resulting dilution was stirred in a container equipped with a stirrer to coagulate PTFE, and water was filtered out, whereby a wet powder was obtained. The water content of the wet powder was approximately 40% by mass.

The resulting wet powder was placed in a stainless-steel mesh tray (amount: 2.0 g/$cm^2$), and the mesh tray was heated in a hot air circulating electric furnace at 180°C. After 18 hours, the mesh tray was taken out and air-cooled, whereby a PTFE powder was obtained.

The resulting PTFE powder had a SSG of 2.146 and a HFP content of 0.019% by mass. Various physical properties of the resulting PTFE powder were measured. The results are shown in Table 12.

Production Example 7

A PTFE aqueous dispersion was obtained as in Production Example 6, except that the amount of HFP fed was changed to 0.06 g. The solid content concentration of the resulting PTFE aqueous dispersion was 29.2% by mass and the average primary particle size was 274 nm.

Example 8

A wet powder was obtained as in Example 7 using the PTFE aqueous dispersion obtained in Production Example 7. The water content of the wet powder was approximately 40% by mass. The resulting wet powder was placed in a stainless-steel mesh tray (amount: 2.0 g/$cm^2$), and a PTFE powder was obtained as in Example 7, except that the heat treatment temperature was changed to 160°C.

The resulting PTFE powder had a SSG of 2.154 and a HFP content of 0.002% by mass. Various physical properties of the resulting PTFE powder were measured. The results are shown in Table 12.

Production Example 8

A 6-L SUS reactor equipped with a stirrer was charged with 3600 g of deionized water, 180 g of paraffin wax,

and 5.4 g of the perfluoroether carboxylic acid C ammonium salt. Next, the contents of the reactor were heated to 80°C while being suctioned and the reactor was simultaneously purged with tetrafluoroethylene (TFE) to remove oxygen in the reactor, and the contents were stirred. To the reactor was injected 3.1 g of vinylidene fluoride (VDF) with TFE, followed by further addition of TFE to set the pressure to 2.70 MPaG. An aqueous solution containing 7.2 mg of ammonium persulfate (APS) dissolved in deionized water was added to the reactor as an initiator. After injection of the initiator, the pressure dropped and the onset of polymerization was observed. TFE was added to the reactor so that the pressure was constant at 2.70 MPaG. When the amount of TFE fed reached 430 g, an aqueous solution containing 18.2 mg of hydroquinone dissolved in deionized water was added. When the amount of TFE fed reached 1580 g, feeding of TFE was stopped, stirring was stopped, and the reaction was terminated. Thereafter, the reactor was evacuated to return the pressure in the reactor to normal pressure, followed by nitrogen purge. The contents were taken out from the reactor and cooled. The paraffin wax was removed, whereby a PTFE aqueous dispersion was obtained. The solid content concentration of the resulting PTFE aqueous dispersion was 30.3% by mass and the average primary particle size was 223 nm.

Example 9

The PTFE aqueous dispersion obtained in Production Example 8 was diluted to a solid content concentration of 13% by mass. The dilution was stirred vigorously in a container equipped with a stirrer for coagulation, and water was filtered out, whereby a wet powder was obtained. The water content of the wet powder was approximately 40% by mass.

The resulting wet powder was placed in a stainless-steel mesh tray (amount: 2.0 g/cm$^2$), and the mesh tray was heated in a hot air circulating electric furnace at 210°C. After 18 hours, the mesh tray was taken out and air-cooled, whereby a PTFE powder was obtained. The resulting PTFE powder had a SSG of 2.221 and a VDF content of 0.025% by mass. Various physical properties of the resulting PTFE powder were measured. The results are shown in Table 12.

Production Example 9

A 6-L SUS reactor equipped with a stirrer was charged with 3600 g of deionized water, 180 g of paraffin wax, 5.4 g of the perfluoroether carboxylic acid C ammonium salt, and 0.0265 mg of oxalic acid. Next, the contents of the reactor were heated to 70°C while being suctioned and the reactor was simultaneously purged with tetrafluoroethylene (TFE) to remove oxygen in the reactor, and the contents were stirred. To the reactor was injected 1.70 g of vinylidene fluoride (VDF) with TFE, followed by further addition of TFE to set the pressure to 2.70 MPaG. A potassium permanganate aqueous solution containing 3.4 mg of potassium permanganate dissolved in deionized water was continuously added to the reactor as an initiator. After injection of the initiator, the pressure dropped and the onset of polymerization was observed. TFE was added to the reactor so that the pressure was constant at 2.70 MPaG. When the amount of TFE fed reached 430 g, feeding of the potassium permanganate aqueous solution was stopped. When the amount of TFE fed reached 1815 g, feeding of TFE was stopped, stirring was stopped, and the reaction was terminated. Thereafter, the reactor was evacuated to return the pressure in the reactor to normal pressure, followed by nitrogen purge. The contents were taken out from the reactor and cooled. The paraffin wax was removed, whereby a PTFE aqueous dispersion was obtained. The solid content concentration of the resulting PTFE aqueous dispersion was 33.3% by mass and the average primary particle size was 251 nm.

Example 10

The PTFE aqueous dispersion obtained in Production Example 9 was diluted to a solid content concentration of 13% by mass. The dilution was stirred vigorously in a container equipped with a stirrer for coagulation, and water was filtered out, whereby a wet powder was obtained. The water content of the wet powder was approximately 40% by mass.

The resulting wet powder was placed in a stainless-steel mesh tray (amount: 2.0 g/cm$^2$), and the mesh tray was heated in a hot air circulating electric furnace at 210°C. After 18 hours, the mesh tray was taken out and air-cooled, whereby a PTFE powder was obtained. The resulting PTFE powder had a SSG of 2.206 and a VDF content of 0.011% by mass. Various physical properties of the resulting PTFE powder were measured. The results are shown in Table 12.

[Table 12]

| | | Example 5 | Example 6 | Example 7 | Example 8 | Example 9 | Example 10 |
|---|---|---|---|---|---|---|---|
| PTFE aqueous dispersion | | Production Example 4 | Production Example 5 | Production Example 6 | Production Example 7 | Production Example 8 | Production Example 9 |
| Container | | Mesh tray | Mesh tray | Mesh tray | Mesh tray | Mesh tray | Mesh tray |

(continued)

| | | Example 5 | Example 6 | Example 7 | Example 8 | Example 9 | Example 10 |
|---|---|---|---|---|---|---|---|
| PTFE aqueous dispersion | | Production Example 4 | Production Example 5 | Production Example 6 | Production Example 7 | Production Example 8 | Production Example 9 |
| Heat treatment temperature | °C | 210 | 210 | 180 | 160 | 210 | 210 |
| Heat treatment time | hr | 18 | 18 | 18 | 18 | 18 | 18 |
| Water content | % by mass | 0.000 | 0.000 | 0.000 | 0.000 | 0.000 | 0.000 |
| Fluorine-containing compound content (1) | | | | | | | |
| Perfluoroether carboxylic acid A | ppb by mass | < 10 | < 10 | < 10 | < 10 | < 10 | < 10 |
| Perfluoroether carboxylic acid B | ppb by mass | < 10 | < 10 | < 10 | < 10 | < 10 | < 10 |
| Perfluoroether carboxylic acid C | ppb by mass | < 10 | < 10 | < 10 | < 10 | < 10 | < 10 |

No fluorine-containing compound represented by any of the following formulas was detected from the PTFE powders obtained in Examples 5 to 10 or the amount thereof was less than 10 ppb by mass:

$F(CF_2)_7COOH$,
$F(CF_2)_5COOH$,
$H(CF_2)_6COOH$,
$H(CF_2)_7COOH$,
$CF_3O(CF_2)_3OCHFCF_2COOH$,
$C_3F_7OCF(CF_3)CF_2OCF(CF_3)COOH$,
$CF_3CF_2CF_2OCF(CF_3)COOH$ (perfluoroether carboxylic acid A),
$CF_3CF_2OCF_2CF_2OCF_2COOH$ (perfluoroether carboxylic acid B),
$C_2F_5OCF(CF_3)CF_2OCF(CF_3)COOH$,
$CF_3OCF(CF_3)CF_2OCF(CF_3)COOH$ (perfluoroether carboxylic acid C),
$CF_2ClCF_2CF_2OCF(CF_3)CF_2OCF_2COOH$,
$CF_2ClCF_2CF_2OCF_2CF(CF_3)OCF_2COOH$,
$CF_2ClCF(CF_3)OCF(CF_3)CF_2OCF_2COOH$,
$CF_2ClCF(CF_3)OCF_2CF(CF_3)OCF_2COOH$, and

[Chem. 12]

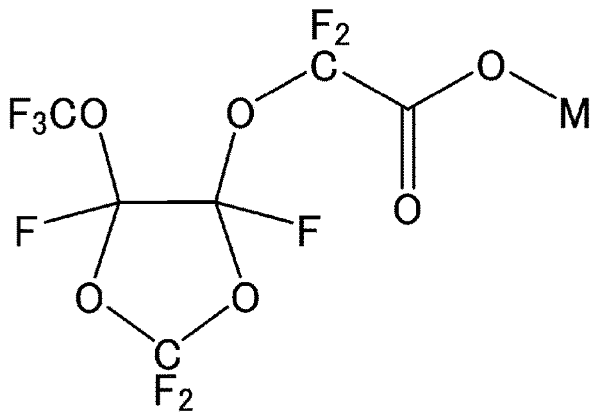

wherein M is H.

Example 11

A PTFE powder was obtained as in Example 1, except that the heat treatment at 180°C for 5 hours was changed to the heat treatment at 210°C for 18 hours. Various physical properties of the resulting PTFE powder were measured. The results are shown in Tables 13 and 14.

Example 12

A PTFE powder was obtained as in Example 1, except that the heat treatment at 180°C for five hours was changed to the heat treatment at 210°C for five hours. Various physical properties of the resulting PTFE powder were measured. The results are shown in Tables 13 and 14.

Comparative Example 7

A PTFE powder was obtained as in Comparative Example 1, except that the heat treatment at 180°C for 5 hours was changed to the heat treatment at 210°C for 18 hours. Various physical properties of the resulting PTFE powder were measured. The results are shown in Tables 13 and 14.

Example 13

A PTFE powder was obtained as in Example 4, except that the heat treatment at 180°C for 20 hours was changed to the heat treatment at 210°C for 18 hours. Various physical properties of the resulting PTFE powder were measured. The results are shown in Tables 13 and 14.

Comparative Example 8

A PTFE powder was obtained as in Comparative Example 5, except that the heat treatment at 210°C for 18 hours was changed to the heat treatment at 210°C for 5 hours. Various physical properties of the resulting PTFE powder were measured. The results are shown in Tables 13 and 14.

Production Example 10

A 6-L stainless-steel autoclave equipped with a stainless-steel stirring blade and a temperature-controlling jacket was charged with 3580 g of deionized water, 100 g of paraffin wax, and 5.4 g of the perfluoroether carboxylic acid C ammonium salt. The inside of the autoclave was purged with nitrogen gas with warming to 70°C to remove oxygen. After 0.11 g of HFP was injected with TFE, TFE was injected to set the pressure inside the system to 0.78 MPaG and the temperature inside the system was maintained at 70°C under stirring. Next, an aqueous solution prepared by dissolving 15.4 mg of ammonium persulfate in 20 g of water was injected with TFE, whereby a polymerization reaction was started. The pressure inside the system dropped as the polymerization reaction progressed. TFE was thus added so that the temperature inside the system was maintained at 70°C and the pressure inside the system was maintained at 0.78 MPaG.

When 430 g of TFE had been consumed from the start of the polymerization, an aqueous solution prepared by dissolving 18.0 mg of hydroquinone serving as a radical scavenger in 20 g of water was injected with TFE. The polymerization was further continued. When the amount of TFE polymerized reached 1540 g from the start of the polymerization, stirring and feeding of TFE were stopped. Immediately thereafter, the gas inside the system was released to normal pressure and the polymerization reaction was terminated. The resulting aqueous dispersion was taken out and cooled, and the paraffin wax was separated, whereby a PTFE aqueous dispersion was obtained. The solid content concentration of the resulting PTFE aqueous dispersion was 29.8% by mass and the average primary particle size was 312 nm.

Example 14

The PTFE aqueous dispersion obtained in Production Example 10 was diluted to a solid content concentration of 13% by mass. The dilution was stirred vigorously in a container equipped with a stirrer for coagulation, and water was filtered out, whereby a wet powder was obtained. The water content of the wet powder was approximately 40% by mass.

The resulting wet powder was placed in a stainless-steel mesh tray (amount: 2.0 $g/cm^2$), and the mesh tray

was heated in a hot air circulating electric furnace at 180°C. After 18 hours, the mesh tray was taken out and air-cooled, whereby a PTFE powder was obtained. The resulting PTFE powder had a SSG of 2.153 and a HFP content of 0.005% by mass. Various physical properties of the resulting PTFE powder were measured. The results are shown in Tables 13 and 14.

[Table 13]

| | | | Example 11 | Example 12 | Comparative Example 7 | Example 13 | Comparative Example 8 | Example 14 |
|---|---|---|---|---|---|---|---|---|
| PTFE aqueous dispersion | | | Production Example 1 | Production Example 1 | Production Example 1 | Production Example 3 | Production Example 3 | Production Example 10 |
| Heat treatment condition | | | | | | | | |
| | Container | | Mesh tray | Mesh tray | Flat tray | Mesh tray | Flat tray | Mesh tray |
| | Heat treatment temperature | °C | 210 | 210 | 210 | 210 | 210 | 180 |
| | Heat treatment time | hr | 18 | 5 | 18 | 18 | 5 | 18 |
| Physical properties of PTFE powder | | | | | | | | |
| | Water content | % by mass | 0.000 | 0.001 | 0.018 | 0.000 | 0.030 | 0.001 |
| | RR100 extrusion pressure | MPa | 16.5 | 15.7 | 15.5 | 19.8 | 11.5 | 15.1 |
| | Coefficient of variation of extrusion pressure | - | 0.004 | 0.005 | 0.024 | 0.008 | 0.042 | 0.004 |
| | Tensile strength at break | N | 28.0 | 26.0 | 25.5 | 35.3 | 18.9 | 30.4 |
| Evaluation on expanded film | | | | | | | | |
| | Extrusion pressure upon molding | MPa | 9.8 | 9.3 | 9.2 | 11.6 | 6.7 | 8.6 |
| | Appearance of non-sintered film | - | Good | Good | Good | Good | No Good | Good |
| | Appearance of PTFE porous film | - | Good | Good | No Good | Good | No Good | Good |
| | Thickness | μm | 3 | 4 | 3 | 2 | 2 | 4 |
| Evaluation on filter material | | | | | | | | |
| | Pressure loss | Pa | 285 | 270 | 264 | 344 | 218 | 250 |
| | Coefficient of variation of pressure loss | % | 6.3 | 6.6 | 10.2 | 5.2 | 18.6 | 5.8 |

[Table 14]

| Fluorine-containing compound content (1) | | Example 11 | Example 12 | Comparative Example 7 | Example 13 | Comparative Example 8 | Example 14 |
|---|---|---|---|---|---|---|---|
| Perfuoroether carboxylic acid A | ppb by mass | < 10 | 10 | 105 | < 10 | < 10 | < 10 |
| Perfuoroether carboxylic acid B | ppb by mass | < 10 | < 10 | < 10 | < 10 | < 10 | < 10 |
| Perfuoroether carboxylic acid C | ppb by mass | < 10 | < 10 | < 10 | < 10 | 180 | < 10 |

The results in Tables 11, 13, and 14 show that as the water content increases, the extrusion pressure is reduced and the coefficient of variation of the extrusion pressure increases. In addition, the non-sintered film and the PTFE porous film have poor appearance.

When the water content was higher than 0.1%, holes appeared in the non-sintered film.

The results show that as the water content increases, the pressure loss of the filter material is reduced and the coefficient of variation of the pressure loss increases, resulting in a non-uniform material.

Example 15

A PTFE powder was obtained as in Example 1, except that the heat treatment at 180°C for 5 hours was changed to the heat treatment at 135°C for 18 hours. Various physical properties of the resulting PTFE powder were measured. The results are shown in Tables 15 and 16.

Comparative Example 9

A PTFE powder was obtained as in Comparative Example 1, except that the heat treatment at 180°C for 5 hours was changed to the heat treatment at 135°C for 18 hours. Various physical properties of the resulting PTFE powder were measured. The results are shown in Tables 15 and 16.

Production Example 11

A 6-L stainless-steel autoclave equipped with a stainless-steel stirring blade and a temperature-controlling jacket was charged with 3600 g of deionized water, 180 g of paraffin wax, and 5.4 g of the perfluoroether carboxylic acid C ammonium salt. The inside of the autoclave was purged with nitrogen gas with warming to 85°C to remove oxygen. The temperature inside the tank was maintained at 85°C with stirring, and then TFE gas was introduced to set the pressure to 2.4 MPaG. To the contents was added deionized water containing 468 mg of disuccinic acid peroxide dissolved therein with stirring to start polymerization. The pressure inside the polymerization tank dropped as the polymerization progressed. TFE was thus continuously fed so that the pressure was constant at 2.4 MPaG.

When the amount of TFE consumed reached 1580 g, stirring and feeding of TFE were stopped. The TFE in the polymerization tank was purged, and the polymerization reaction was terminated. The resulting aqueous dispersion was taken out and cooled, and the paraffin wax was separated, whereby a PTFE aqueous dispersion was obtained. The average primary particle size of the resulting PTFE aqueous dispersion was 294 nm, and the solid content concentration was 30.4% by mass.

Example 16

The PTFE aqueous dispersion obtained in Production Example 11 was diluted to a solid content concentration of 13% by mass. The dilution was stirred vigorously in a container equipped with a stirrer for coagulation, and water was filtered out, whereby a wet powder was obtained. The water content of the wet powder was approximately 40% by mass.

The resulting wet powder was placed in a stainless-steel mesh tray (amount: 2.0 g/$cm^2$), and the mesh tray was heated in a hot air circulating electric furnace at 170°C. After 18 hours, the mesh tray was taken out and air-cooled, whereby a PTFE powder was obtained. The SSG of the PTFE powder obtained was 2.160. Various physical properties

of the resulting PTFE powder were measured. The results are shown in Tables 15 and 16.

Production Example 12

A 6-L stainless-steel autoclave equipped with a stainless-steel stirring blade and a temperature-controlling jacket was charged with 3600 g of deionized water, 180 g of paraffin wax, 5.4 g of the perfluoroether carboxylic acid C ammonium salt, and 0.0252 g of oxalic acid. The inside of the autoclave was purged with nitrogen gas with warming to 70°C to remove oxygen. The temperature inside the tank was maintained at 70°C with stirring, and then TFE gas was introduced thereinto to set the pressure to 2.7 MPaG. Deionized water containing 7.5 mg of potassium permanganate dissolved therein was continuously added to the tank at a constant rate with the contents being stirred. TFE was continuously fed so that the pressure inside the polymerization tank was constant at 2.7 MPaG.
When the amount of TFE consumed reached 1730 g, stirring and feeding of TFE were stopped. The TFE in the polymerization tank was purged, and the polymerization reaction was terminated. The resulting aqueous dispersion was taken out and cooled, and the paraffin wax was separated, whereby a PTFE aqueous dispersion was obtained.
The average primary particle size of the resulting PTFE aqueous dispersion was 296 nm, and the solid content concentration was 32.4% by mass.

Example 17

The PTFE aqueous dispersion obtained in Production Example 12 was diluted to a solid content concentration of 13% by mass. The dilution was stirred vigorously in a container equipped with a stirrer for coagulation, and water was filtered out, whereby a wet powder was obtained. The water content of the wet powder was approximately 40% by mass.
The resulting wet powder was placed in a stainless-steel mesh tray (amount: 2.0 g/$cm^2$), and the mesh tray was heated in a hot air circulating electric furnace at 180°C. After 18 hours, the mesh tray was taken out and air-cooled, whereby a PTFE powder was obtained. The SSG of the PTFE powder obtained was 2.156. Various physical properties of the resulting PTFE powder were measured. The results are shown in Tables 15 and 16.

[Table 15]

| | | | Example 15 | Com parative Example 9 | Example 16 | Example 17 |
|---|---|---|---|---|---|---|
| PTFE aqueous dispersion | | | Production Example 1 | Production Example 1 | Production Example 11 | Production Example 12 |
| Heat treatment condition | | | | | | |
| | Container | | Mesh tray | Flat tray | Mesh tray | Mesh tray |
| | Heat treatment temperature | °C | 135 | 135 | 170 | 180 |
| | Heat treatment time | hr | 18 | 18 | 18 | 18 |
| Physical properties of PTFE | | | | | | |
| | Water content | % by mass | 0.001 | 0.025 | 0.001 | 0.002 |
| | RR100 extrusion pressure | MPa | 13.4 | 11.6 | 13.3 | 15.7 |
| | Coefficient of variation of extrusion pressure | - | 0.005 | 0.030 | 0.004 | 0.005 |
| | Tensile strength at break | N | 23.0 | 21.5 | 17.4 | 17.2 |

(continued)

| Evaluation on expanded film | | | | | | |
|---|---|---|---|---|---|---|
| | Extrusion pressure upon molding | MPa | 8.2 | 6.9 | 8.5 | 8.9 |
| | Appearance of non-sintered film | - | Good | No Good | Good | Good |
| | Appearance of PTFE porous film | - | Good | No Good | Good | Good |
| | Thickness | μm | 3 | 3 | 9 | 4 |
| Evaluatoin on filter material | | | | | | |
| | Pressure loss | Pa | 240 | 219 | 105 | 133 |
| | Coefficient of variation of pressure loss | % | 4.4 | 11.0 | 9.2 | 7.0 |
| | Collection efficiency | % | > 99.999999 | 99.999997 | 99.833 | 99.9991 |

[Table 16]

| Fluorine-containing compound content (1) | | Example 15 | Comparative Example 9 | Example 16 | Example 17 |
|---|---|---|---|---|---|
| Perfluoroether carboxylic acid A | ppb by mass | < 10 | 205 | < 10 | < 10 |
| Perfluoroether carboxylic acid B | ppb by mass | < 10 | < 10 | < 10 | < 10 |
| Perfluoroether carboxylic acid C | ppb by mass | < 10 | < 10 | < 10 | < 10 |

Results of Example 15 and Comparative Example 9 in Table 15 show that as the water content increases, the extrusion pressure and the pressure loss are reduced.

Though the PTFE is suitable as a HEPA filter material, an increase in the water content reduces the pressure loss and impairs the coefficient of variation of the extrusion pressure as shown in Comparative Example 9. In the evaluation on the expanded film, the extrusion pressure is reduced and the pressure loss of the filter material is impaired.

Since the SSG is larger in Examples 16 and 17 than in Example 15, the pressure loss is reduced and the coefficient of variation of the pressure loss is small though the collection efficiency of the filter material is lower. Thus, the PTFEs of Examples 16 and 17 are each usable as a filter material.

Production Example 13

A 6-L stainless-steel autoclave equipped with a stainless-steel stirring blade and a temperature-controlling jacket was charged with 3580 g of deionized water, 100 g of paraffin wax, and 5.4 g of the perfluoroether carboxylic acid C ammonium salt. The inside of the autoclave was purged with nitrogen gas with warming to 80°C to remove oxygen. After addition of 1.20 g of CTFE, TFE was further injected to set the pressure inside the system to 0.78 MPaG and the temperature inside the system was maintained at 80°C under stirring. Next, an aqueous solution prepared by dissolving 360 mg of disuccinic peroxide in 20 g of water and an aqueous solution prepared by dissolving 10 mg of ammonium persulfate in 20 g of water were injected with TFE, whereby a polymerization reaction was started. The pressure inside the system dropped as the polymerization reaction progressed. TFE was thus added so that the temperature inside the system was maintained at 80°C and the pressure inside the system was maintained at 0.78 MPaG. When 1530 g of TFE had been consumed from the start of the polymerization (conversion rate: 90%), 4.2 g of CTFE was injected with TFE. The polymerization was further continued. When the amount of TFE polymerized reached 1700 g from the start of the polymerization, stirring and feeding of TFE were stopped. Immediately thereafter, the gas inside the system was released to normal pressure and the polymerization reaction was terminated. The resulting aqueous dispersion was taken out and cooled, and the paraffin wax was separated, whereby a PTFE aqueous dispersion was obtained. The average primary particle size of the resulting PTFE aqueous dispersion was 241 nm, and the solid content concentration was 32.0% by mass.

Example 18

The PTFE aqueous dispersion obtained in Production Example 13 was diluted to a solid content concentration of 13% by mass. The dilution was stirred vigorously in a container equipped with a stirrer for coagulation, and water was filtered out, whereby a wet powder was obtained. The resulting wet powder was placed in a stainless-steel mesh tray (amount: 2.0 g/$cm^2$), and the mesh tray was heated in a hot air circulating electric furnace at 145°C. After 18 hours, the mesh tray was taken out and air-cooled, whereby a PTFE powder was obtained. Various physical properties of the resulting PTFE powder were measured. The resulting PTFE powder had a SSG of 2.170 and a CTFE content of 0.23% by mass. The results are shown in Tables 17 to 19.

Example 19

A PTFE powder was obtained as in Example 18, except that the heat treatment at 145°C for 18 hours was changed to the heat treatment at 145°C for 5 hours. Various physical properties of the resulting PTFE powder were measured. The results are shown in Tables 17 to 19.

Comparative Example 10

The PTFE aqueous dispersion obtained in Production Example 13 was diluted to a solid content concentration of 13% by mass. The PTFE was coagulated with stirring in the container, and water was filtered out, whereby a wet powder was obtained. The water content of the wet powder was approximately 40% by mass.
The resulting PTFE wet powder was placed in a stainless-steel flat tray (amount: 2.0 g/$cm^2$), and the flat tray was heated in a hot air circulating electric furnace at 145°C. After five hours, the flat tray was taken out and air-cooled, whereby a PTFE powder was obtained. Various physical properties of the resulting PTFE powder were measured. The results are shown in Tables 17 to 19.

Comparative Example 11

A PTFE powder was obtained as in Comparative Example 10, except that the heat treatment at 145°C for 18 hours was changed to the heat treatment at 145°C for 5 hours. Various physical properties of the resulting PTFE powder were measured. The results are shown in Tables 17 to 19.

Production Example 14

A 6-L stainless-steel autoclave equipped with a stainless-steel stirring blade and a temperature-controlling jacket was charged with 3560 g of deionized water, 100 g of paraffin wax, and 0.9 g of the perfluoroether carboxylic acid C ammonium salt. The inside of the autoclave was purged with nitrogen gas with warming to 70°C to remove oxygen. After addition of 0.67 g of PPVE and 0.37 g of HFP, TFE was further injected to set the pressure inside the system to 0.78 MPaG and the temperature inside the system was maintained at 70°C under stirring. Next, an aqueous solution prepared by dissolving 322 mg of disuccinic peroxide in 20 g of water and an aqueous solution prepared by dissolving 13 mg of ammonium persulfate in 20 g of water were injected with TFE, whereby a polymerization reaction was started. The pressure inside the system dropped as the polymerization reaction progressed. TFE was thus added so that the temperature inside the system was maintained at 70°C and the pressure inside the system was maintained at 0.78 MPaG. When 160 g of TFE had been consumed from the start of the polymerization, 4.5 g of the perfluoroether carboxylic acid C ammonium salt was injected with TFE. When 1440 g of TFE had been consumed from the start of the polymerization (conversion rate: 90%), 1.57 g of HFP and 0.5 g of methanol were injected with TFE. The polymerization was further continued. When the amount of TFE polymerized reached 1600 g from the start of the polymerization, stirring and feeding of TFE were stopped. Immediately thereafter, the gas inside the system was released to normal pressure and the polymerization reaction was terminated. The resulting aqueous dispersion was taken out and cooled, and the paraffin wax was separated, whereby a PTFE aqueous dispersion was obtained. The average primary particle size of the resulting PTFE aqueous dispersion was 249 nm, and the solid content concentration was 30.7% by mass.

Example 20

The PTFE aqueous dispersion obtained in Production Example 14 was diluted to a solid content concentration of 13% by mass. The dilution was stirred vigorously in a container equipped with a stirrer for coagulation, and water was filtered out, whereby a wet powder was obtained. The water content of the wet powder was approximately 40% by mass.
The resulting wet powder was placed in a stainless-steel mesh tray (amount: 2.0 g/$cm^2$), and the mesh tray

was heated in a hot air circulating electric furnace at 145°C. After 18 hours, the mesh tray was taken out and air-cooled, whereby a PTFE powder was obtained. Various physical properties of the resulting PTFE powder were measured. The resulting PTFE powder had a SSG of 2.176, a PPVE content of 0.03% by mass, and a HFP content of 0.05% by mass. The results are shown in Tables 17 to 19.

Comparative Example 12

A PTFE powder was obtained as in Example 20, except that the heat treatment using a mesh tray was changed to the heat treatment using a flat tray. Various physical properties of the resulting PTFE powder were measured. The results are shown in Tables 17 to 19.

Production Example 15

A 6-L stainless-steel autoclave equipped with a stainless-steel stirring blade and a temperature-controlling jacket was charged with 3560 g of deionized water, 100 g of paraffin wax, and 1.2 g of the perfluoroether carboxylic acid C ammonium salt. The inside of the autoclave was purged with nitrogen gas with warming to 80°C to remove oxygen. After addition of 2.6 g of PPVE and 0.67 g of HFP, TFE was further injected to set the pressure inside the system to 1.5 MPaG and the temperature inside the system was maintained at 80°C under stirring. Next, an aqueous solution prepared by dissolving 285 mg of disuccinic peroxide in 20 g of water and an aqueous solution prepared by dissolving 11 mg of ammonium persulfate in 20 g of water were injected with TFE, whereby a polymerization reaction was started. The pressure inside the system dropped as the polymerization reaction progressed. TFE was thus added so that the temperature inside the system was maintained at 80°C and the pressure inside the system was maintained at 1.5 MPaG. When 180 g of TFE had been consumed from the start of the polymerization (conversion rate: 10%), feeding of TFE and stirring were stopped, followed by a slow release of gas until the pressure inside the system reached 0.1 MPaG. Then, TFE was fed until the pressure inside the system reached 1.5 MPaG and stirring was started again. At the same time, 4.5 g of the perfluoroether carboxylic acid C ammonium salt was injected with TFE. When 1620 g of TFE had been consumed from the start of the polymerization (conversion rate: 90%), 5.70 g of HFP and 0.17 g of methanol were injected with TFE. The polymerization was further continued. When the amount of TFE polymerized reached 1800 g from the start of the polymerization, stirring and feeding of TFE were stopped. Immediately thereafter, the gas inside the system was released to normal pressure and the polymerization reaction was terminated. The resulting aqueous dispersion was taken out and cooled, and the paraffin wax was separated, whereby a PTFE aqueous dispersion was obtained. The average primary particle size of the resulting PTFE aqueous dispersion was 252 nm, and the solid content concentration was 33.2% by mass.

Example 21

The PTFE aqueous dispersion obtained in Production Example 15 was diluted to a solid content concentration of 13% by mass. The dilution was stirred vigorously in a container equipped with a stirrer for coagulation, and water was filtered out, whereby a wet powder was obtained. The water content of the wet powder was approximately 40% by mass.

The resulting wet powder was placed in a stainless-steel mesh tray (amount: 2.0 g/$cm^2$), and the mesh tray was heated in a hot air circulating electric furnace at 145°C. After 18 hours, the mesh tray was taken out and air-cooled, whereby a PTFE powder was obtained. Various physical properties of the resulting PTFE powder were measured. The resulting PTFE powder had a SSG of 2.176, a PPVE content of 0.03% by mass, and a HFP content of 0.07% by mass. The results are shown in Tables 17 to 19.

Production Example 16

A 6-L stainless-steel autoclave equipped with a stainless-steel stirring blade and a temperature-controlling jacket was charged with 3560 g of deionized water, 100 g of paraffin wax, and 1.45 g of the perfluoroether carboxylic acid C ammonium salt. The inside of the autoclave was purged with nitrogen gas with warming to 70°C to remove oxygen. After addition of 3.0 g of PPVE, TFE was further injected to set the pressure inside the system to 0.78 MPaG and the temperature inside the system was maintained at 70°C under stirring. Next, an aqueous solution prepared by dissolving 326 mg of disuccinic peroxide in 20 g of water and an aqueous solution prepared by dissolving 12 mg of ammonium persulfate in 20 g of water were injected with TFE, whereby a polymerization reaction was started. The pressure inside the system dropped as the polymerization reaction progressed. TFE was thus added so that the temperature inside the system was maintained at 70°C and the pressure inside the system was maintained at 0.78 MPaG. When 170 g of TFE had been consumed from the start of the polymerization, 2.2 g of the perfluoroether carboxylic acid C ammonium salt was injected with TFE. When 1530 g of TFE had been consumed from the start of the polymerization (conversion rate:

90%), 0.28 g of methanol was injected with TFE. The polymerization was further continued. When the amount of TFE polymerized reached 1700 g from the start of the polymerization, stirring and feeding of TFE were stopped. Immediately thereafter, the gas inside the system was released to normal pressure and the polymerization reaction was terminated. The resulting aqueous dispersion was taken out and cooled, and the paraffin wax was separated, whereby a PTFE aqueous dispersion was obtained. The average primary particle size of the resulting PTFE aqueous dispersion was 243 nm, and the solid content concentration was 31.6% by mass.

Example 22

The PTFE aqueous dispersion obtained in Production Example 16 was diluted to a solid content concentration of 13% by mass. The dilution was stirred vigorously in a container equipped with a stirrer for coagulation, and water was filtered out, whereby a wet powder was obtained. The water content of the wet powder was approximately 40% by mass.

The resulting wet powder was placed in a stainless-steel mesh tray (amount: 2.0 $g/cm^2$), and the mesh tray was heated in a hot air circulating electric furnace at 145°C. After 18 hours, the mesh tray was taken out and air-cooled, whereby a PTFE powder was obtained. Various physical properties of the resulting PTFE powder were measured. The resulting PTFE powder had a SSG of 2.166 and a PPVE content of 0.13% by mass. The results are shown in Tables 17 to 19.

The amount of the compound represented by the formula (2) with a carbon number of 9 to 14 in the resulting PTFE powder was less than the lower limit of quantification.

Comparative Example 13

A PTFE powder was obtained as in Example 22, except that the heat treatment using a mesh tray was changed to the heat treatment using a flat tray. Various physical properties of the resulting PTFE powder were measured. The results are shown in Tables 17 and 18.

In the resulting PTFE powder, the amount of the compound represented by the formula (2) with a carbon number of 9 was 2 ppb by mass, the amount of the compound represented by the formula (2) with a carbon number of 11 was 11 ppb by mass, the amount of the compound represented by the formula (2) with a carbon number of 13 was 18 ppb by mass, and the amounts of the compounds represented by the formula (2) with a carbon number of 10, 12, and 14 were less than the lower limit of quantification.

[Table 17]

| | | | Example 18 | Example 19 | Comparative Example 10 | Comparative Example 11 | Example 20 | Comparative Example 12 | Example 21 | Example 22 | Comparative Example 13 |
|---|---|---|---|---|---|---|---|---|---|---|---|
| PTFE aqueous dispersion | | | Production Example 13 | Production Example 13 | Production Example 13 | Production Example 13 | Production Example 14 | Production Example 14 | Production Example 15 | Production Example 16 | Production Example 16 |
| Heat treatment condition | | | | | | | | | | | |
| | Container | | Mesh tray | Mesh tray | Flat tray | Flat tray | Mesh tray | Flat tray | Mesh tray | Mesh tray | Flat tray |
| | Heat treatment temperature | °C | 145 | 145 | 145 | 145 | 145 | 145 | 145 | 145 | 145 |
| | Heat treatment time | hr | 18 | 5 | 18 | 5 | 18 | 18 | 18 | 18 | 18 |
| Physical properties of PTFE | | | | | | | | | | | |
| | Water content | % by mass | 0.001 | 0.005 | 0.018 | 0.137 | 0.001 | 0.020 | 0000 | 0.000 | 0.018 |
| | RR1500 extrusion pressure | MPa | 49.0 | 48.0 | 48.6 | Not extrudable | 34.7 | 33.9 | 31.0 | 45.9 | 44.4 |
| | Coefficient of variation of extrusion presure | | 0.012 | 0.013 | 0.030 | | 0.008 | 0.035 | 0.004 | 0.014 | 0.029 |

(continued)

| Evaluation on coated electric wire | | | | | | | | | | | |
|---|---|---|---|---|---|---|---|---|---|---|---|
| | Extrusion pressure upon coating of electric wire | MPa | 32.3 | 30.1 | 31.4 | 30.8 | 27.0 | 24.5 | 25.0 | 33.5 | |
| | Variation in wire diameter | % | 0.11 | 0.20 | 0.72 | 0.88 | 0.18 | 0.68 | 0.17 | 0.24 | |
| | Spark test | pcs/ 100 m | 0 | 0 | > 10 | > 10 | 0 | >10 | 0 | 0 | |
| | Self-wound heat resistance | - | Good | Good | Bad | Bad | Good | Bad | Good | Good | |

[Table 18]

| Fluorine-containing compound content (1) | | Example 18 | Example 19 | Comparative Example 10 | Comparative Example 11 | Example 20 | Comparative Example 12 | Example 21 | Example 22 | Comparative Example 13 |
|---|---|---|---|---|---|---|---|---|---|---|
| Perfluoroether carboxylic acid A | ppb by mass | < 10 | < 10 | < 10 | < 10 | < 10 | < 10 | < 10 | < 10 | < 10 |
| Perfluoroether carboxylic acid B | ppb by mass | < 10 | < 10 | < 10 | < 10 | < 10 | < 10 | < 10 | < 10 | < 10 |
| Perfluoroether carboxylic acid C | ppb by mass | < 10 | < 10 | 60 | $18 \times 10^4$ | < 10 | 72 | < 10 | < 10 | 41 |

The results in Table 17 show that as the water content increases, the extrusion pressure is reduced and the coefficient of variation of the extrusion pressure increases. When the water content was higher than 0.1%, the extrusion pressure became unstable, so that a good beading could not be obtained.

The results of the evaluation on coated electric wire show that as the water content increases, the variation in the wire diameter becomes greater and the number of sparks is greater than 10, lowering the self-wound heat resistance.

[Table 19]

| Fluorine-containinc compound content (2) | | Example 11 | Example 13 | Example 14 | Example 15 | Example 16 | Example 21 |
|---|---|---|---|---|---|---|---|
| Perfluoroether carboxylic acid A | ppb by mass | < 1 | < 1 | < 1 | < 1 | < 1 | < 1 |
| Perfluoroether carboxylic acid C | ppb by mass | < 1 | < 1 | < 1 | < 1 | < 1 | < 1 |

No flourine-containing compound represented by any of the following formulas was detected from the PTFE powders obtained in Examples 11 to 22 or the amount thereof was 10 ppb by mass or less:

$F(CF_2)_7COOH$,
$F(CF_2)_5COOH$,
$H(CF_2)_6COOH$,
$H(CF_2)_7COOH$,
$CF_3O(CF_2)_3OCHFCF_2COOH$,
$C_3F_7OCF(CF_3)CF_2OCF(CF_3)COOH$,
$CF_3CF_2CF_2OCF(CF_3)COOH$ (perfluoroether carboxylic acid A),
$CF_3CF_2OCF_2CF_2OCF_2COOH$ (perfluoroether carboxylic acid B),
$C_2F_5OCF(CF_3)CF_2OCF(CF_3)COOH$,
$CF_3OCF(CF_3)CF_2OCF(CF_3)COOH$ (perfluoroether carboxylic acid C),
$CF_2ClCF_2CF_2OCF(CF_3)CF_2OCF_2COOH$,
$CF_2ClCF_2CF_2OCF_2CF(CF_3)OCF_2COOH$,
$CF_2ClCF(CF_3)OCF(CF_3)CF_2OCF_2COOH$,
$CF_2ClCF(CF_3)OCF_2CF(CF_3)OCF_2COOH$, and

[Chem. 13]

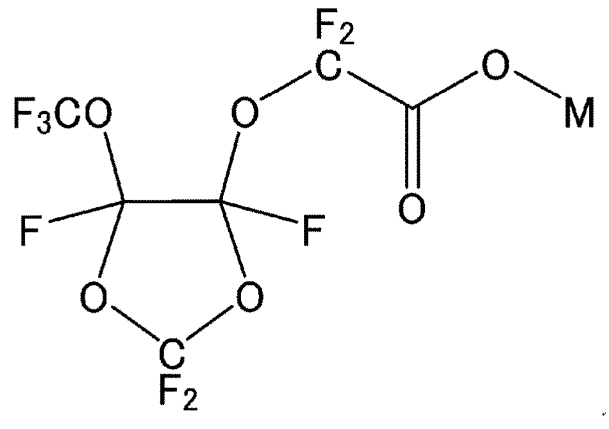

wherein M is H.

**Claims**

1. A polytetrafluoroethylene fine powder substantially free from water and a fluorine-containing compound having a molecular weight of 1000 or less.

2. The polytetrafluoroethylene fine powder according to claim 1, wherein the polytetrafluoroethylene fine powder is substantially free from any of fluorine-containing compounds represented by the following formulas:

$F(CF_2)_7COOM$,
$F(CF_2)_5COOM$,
$H(CF_2)_6COOM$,
$H(CF_2)_7COOM$,
$CF_3O(CF_2)_3OCHFCF_2COOM$,
$C_3F_7OCF(CF_3)CF_2OCF(CF_3)COOM$,
$CF_3CF_2CF_2OCF(CF_3)COOM$,
$CF_3CF_2OCF_2CF_2OCF_2COOM$,
$C_2F_5OCF(CF_3)CF_2OCF(CF_3)COOM$,
$CF_3OCF(CF_3)CF_2OCF(CF_3)COOM$,
$CF_2ClCF_2CF_2OCF(CF_3)CF_2OCF_2COOM$,
$CF_2ClCF_2CF_2OCF_2CF(CF_3)OCF_2COOM$,
$CF_2ClCF(CF_3)OCF (CF_3)CF_2OCF_2COOM$,
$CF_2ClCF(CF_3)OCF_2CF(CF_3)OCF_2COOM$, and

[Chem. 1]

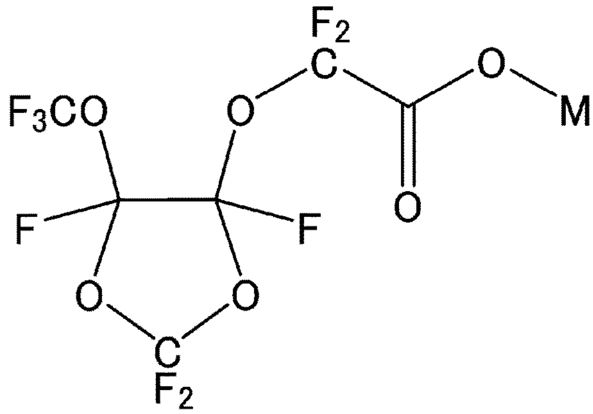

wherein M is H, a metal atom, $NR^1_4$, imidazolium optionally containing a substituent, pyridinium optionally containing a substituent, or phosphonium optionally containing a substituent; and $R^1$ is H or an organic group.

3. The polytetrafluoroethylene fine powder according to claim 1 or 2, wherein the fluorine-containing compound amounts to less than 25 ppb by mass in the polytetrafluoroethylene fine powder.

4. A polytetrafluoroethylene fine powder substantially free from water and a fluorine-containing compound having a molecular weight of 1000 or less, the polytetrafluoroethylene fine powder being expandable and having a standard specific gravity of 2.160 or less.

5. A polytetrafluoroethylene fine powder substantially free from water and any of fluorine-containing compounds represented by the following formulas:

$F(CF_2)_7COOM$,
$F(CF_2)_5COOM$,
$H(CF_2)_6COOM$,
$H(CF_2)_7COOM$,
$CF_3O(CF_2)_3OCHFCF_2COOM$,
$C_3F_7OCF(CF_3)CF_2OCF(CF_3)COOM$,
$CF_3CF_2CF_2OCF(CF_3)COOM$,
$CF_3CF_2OCF_2CF_2OCF_2COOM$,
$C_2F_5OCF(CF_3)CF_2OCF(CF_3)COOM$,

$CF_3OCF(CF_3)CF_2OCF(CF_3)COOM$,
$CF_2ClCF_2CF_2OCF(CF_3)CF_2OCF_2COOM$,
$CF_2ClCF_2CF_2OCF_2CF(CF_3)OCF_2COOM$,
$CF_2ClCF(CF_3)OCF(CF_3)CF_2OCF_2COOM$,
$CF_2ClCF(CF_3)OCF_2CF(CF_3)OCF_2COOM$, and

[Chem. 2]

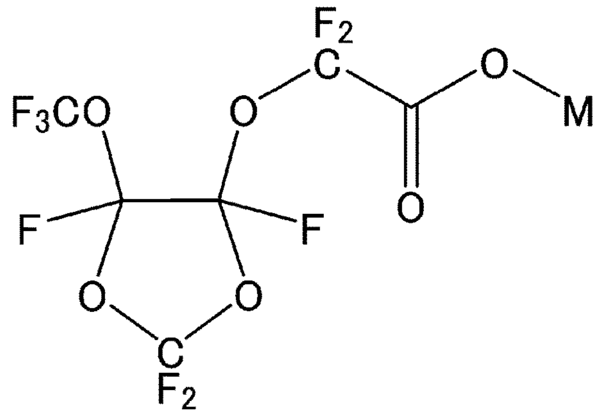

wherein M is H, a metal atom, $NR^1_4$, imidazolium optionally containing a substituent, pyridinium optionally containing a substituent, or phosphonium optionally containing a substituent; and $R^1$ is H or an organic group, the polytetrafluoroethylene fine powder being expandable and having a standard specific gravity of 2.160 or less.

**6.** The polytetrafluoroethylene fine powder according to claim 4 or 5,
wherein the polytetrafluoroethylene fine powder has a tensile strength at break of 25.0 N or higher and 70.0 N or lower, the tensile strength at break being measured using an expanded beading obtained in an expansion test at a total degree of expansion of 2400%.

**7.** The polytetrafluoroethylene fine powder according to claim 4 or 5,
wherein the polytetrafluoroethylene fine powder has a tensile strength at break of 10.0 N or higher and lower than 25.0 N, the tensile strength at break being measured using an expanded beading obtained in an expansion test at a total degree of expansion of 2400%.

**8.** The polytetrafluoroethylene fine powder according to Claim 4, 5, or 7,
wherein the polytetrafluoroethylene fine powder has an extrusion pressure at a reduction ratio of 100 of 18 MPa or lower.

**9.** The polytetrafluoroethylene fine powder according to any one of claims 4 to 8,
wherein the fluorine-containing compound amounts to less than 25 ppb by mass in the polytetrafluoroethylene fine powder.

**10.** The polytetrafluoroethylene fine powder according to any one of claims 4 to 9,
wherein the water amounts to 0.010% by mass or less in the polytetrafluoroethylene fine powder.

**11.** The polytetrafluoroethylene fine powder according to any one of claims 4 to 10,
wherein the polytetrafluoroethylene fine powder is obtainable by polymerization in the presence of a fluorine-containing surfactant.

**12.** The polytetrafluoroethylene fine powder according to any one of claims 4 to 11,
wherein the polytetrafluoroethylene fine powder is for use as an expansion material.

**13.** An expanded article comprising the polytetrafluoroethylene fine powder according to any one of claims 4 to 12.

**14.** The expanded article according to claim 13,
wherein the expanded article is a porous film, a biaxially expanded film, or a filter material.

**15.** A modified polytetrafluoroethylene fine powder substantially free from water and a fluorine-containing compound having a molecular weight of 1000 or less,
the modified polytetrafluoroethylene fine powder being paste extrudable and having a standard specific gravity of 2.135 to 2.200.

**16.** A modified polytetrafluoroethylene fine powder substantially free from water and any of fluorine-containing compounds represented by the following formulas:

$F(CF_2)_7COOM$,
$F(CF_2)_5COOM$,
$H(CF_2)_6COOM$,
$H(CF_2)_7COOM$,
$CF_3O(CF_2)_3OCHFCF_2COOM$,
$C_3F_7OCF(CF_3)CF_2OCF(CF_3)COOM$,
$CF_3CF_2CF_2OCF(CF_3)COOM$,
$CF_3CF_2OCF_2CF_2OCF_2COOM$,
$C_2F_5OCF(CF_3)CF_2OCF(CF_3)COOM$,
$CF_3OCF(CF_3)CF_2OCF(CF_3)COOM$,
$CF_2ClCF_2CF_2OCF(CF_3)CF_2OCF_2COOM$,
$CF_2ClCF_2CF_2OCF_2CF(CF_3)OCF_2COOM$,
$CF_2ClCF(CF_3)OCF (CF_3)CF_2OCF_2COOM$,
$CF_2ClCF(CF_3)OCF_2CF(CF_3)OCF_2COOM$, and

[Chem. 3]

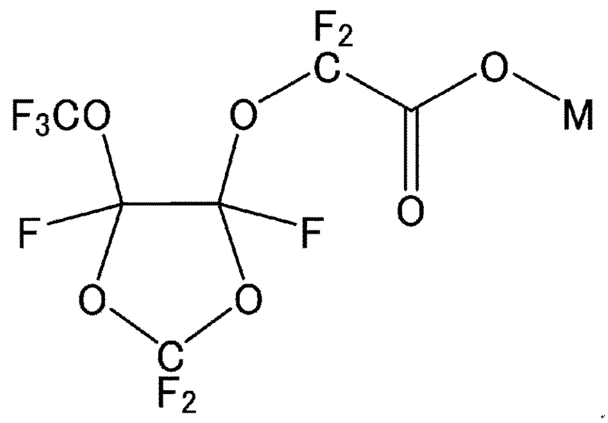

wherein M is H, a metal atom, $NR^1_4$, imidazolium optionally containing a substituent, pyridinium optionally containing a substituent, or phosphonium optionally containing a substituent; and $R^1$ is H or an organic group,
the modified polytetrafluoroethylene fine powder being paste extrudable and having a standard specific gravity of 2.135 to 2.200.

**17.** The modified polytetrafluoroethylene fine powder according to claim 15 or 16,
wherein the modified polytetrafluoroethylene fine powder has an extrusion pressure at a reduction ratio of 1500 of 15 to 80 MPa.

**18.** The modified polytetrafluoroethylene fine powder according to any one of claims 15 to 17,
wherein the fluorine-containing compound amounts to less than 25 ppb by mass in the modified polytetrafluoroethylene fine powder.

**19.** The modified polytetrafluoroethylene fine powder according to any one of claims 15 to 18,
wherein the water amounts to 0.010% by mass or less in the modified polytetrafluoroethylene fine powder.

**20.** The modified polytetrafluoroethylene fine powder according to any one of claims 15 to 19,
wherein the modified polytetrafluoroethylene fine powder is obtainable by polymerization in the presence of a fluorine-containing surfactant.

**21.** A molded article comprising the modified polytetrafluoroethylene fine powder according to any one of claims 15 to 20.

**22.** The molded article according to claim 21,
wherein the molded article is an electric wire coating material or a tube.

**23.** A modified polytetrafluoroethylene fine powder obtainable by modification with a perfluoro vinyl ether,
the modified polytetrafluoroethylene fine powder being paste extrudable, having a standard specific gravity of 2.135 to 2.200, and being substantially free from water and any of fluorine-containing compounds represented by the following formula (2):

Formula (2): $[C_{n-1}F_{2n-1}COO^{-}]M^{+}$

wherein n is an integer of 9 to 14 and $M^+$ is a cation.

**24.** The modified polytetrafluoroethylene fine powder according to claim 23,
wherein a modification amount with the perfluoro vinyl ether is 0.02% by mass or more and 0.30% by mass or less.

**25.** The modified polytetrafluoroethylene fine powder according to claim 23 or 24,
wherein the modified polytetrafluoroethylene fine powder has an extrusion pressure at a reduction ratio of 1500 of 15 to 80 MPa.

**26.** The modified polytetrafluoroethylene fine powder according to any one of claims 23 to 25,
wherein the fluorine-containing compounds are contained in a total amount of less than 25 ppb by mass in the modified polytetrafluoroethylene fine powder.

## INTERNATIONAL SEARCH REPORT

International application No.
**PCT/JP2022/036870**

**A. CLASSIFICATION OF SUBJECT MATTER**

***C08F 14/26***(2006.01)i; ***C08F 2/26***(2006.01)i; ***C08F 6/00***(2006.01)i
FI: C08F14/26; C08F2/26; C08F6/00

According to International Patent Classification (IPC) or to both national classification and IPC

**B. FIELDS SEARCHED**

Minimum documentation searched (classification system followed by classification symbols)

C08F14/26; C08F2/26; C08F6/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2014-240475 A (DAIKIN IND., LTD.) 25 December 2014 (2014-12-25)<br>claims 1-11, paragraphs [0014]-[0015], [0031], [0057]-[0063], [0110]-[0125], [0200]-[0233], example 1 | 1-23, 25-26<br>24 |
| X | JP 2012-521480 A (GORE ENTERPRISE HODLINGS, INC.) 13 September 2012 (2012-09-13)<br>claims 1-82, paragraphs [0008], [0069]-[0123], examples 1-17 | 1-26 |
| X | JP 2012-508296 A (E. I. DU PONT DE NEMOURS AND CO.) 05 April 2012 (2012-04-05)<br>claim 1, paragraphs [0008]-[0012], [0018], [0047]-[0088], examples 1-2, 4-5 | 1-26 |
| A | JP 59-005037 A (KOGYO GIJUTSUIN (JAPAN)) 11 January 1984 (1984-01-11)<br>page 2, upper right column, lines 10-20 | 1-26 |
| A | WO 2021/015291 A1 (DAIKIN IND., LTD.) 28 January 2021 (2021-01-28)<br>paragraphs [0359], [0760]-[0763], examples 1-3 | 1-26 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 December 2022** | **20 December 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/036870**

| Patent document cited in search report | Publication date (day/month/year) | Patent family member(s) | Publication date (day/month/year) |
|---|---|---|---|
| JP 2014-240475 A | 25 December 2014 | (Family: none) | |
| JP 2012-521480 A | 13 September 2012 | US 2013/0210944 A1<br>claims 39-53, paragraphs [0009], [0067]-[0118], examples 1-17<br>KR 10-2011-0138253 A<br>CN 102439053 A | |
| JP 2012-508296 A | 05 April 2012 | US 2010/0113691 A1<br>claim 1, paragraphs [0011]-[0015], [0021], [0055]-[0092], examples 1-2, 4-5<br>CN 102203142 A<br>KR 10-2011-0093831 A | |
| JP 59-005037 A | 11 January 1984 | (Family: none) | |
| WO 2021/015291 A1 | 28 January 2021 | EP 4006063 A1<br>paragraphs [0530], [1104]-[1112], examples 1-3<br>CN 114127131 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015516029 T
- WO 2019161153 A
- JP 2005527652 T
- US 4576869 A
- US 4576869 B
- WO 2006054612 A


### Non-patent literature cited in the description


- **KASAI.** *J. Appl. Polymer Sci.,* 1995, vol. 57, 797